# EUROPÄISCHE PATENTANMELDUNG

(11) **EP 3 892 441 A1**
(43) Veröffentlichungstag der Anmeldung: **13.10.2021**
(21) Anmeldenummer: 21000095.6
(22) Anmeldetag: 06.04.2021
(51) Int. Cl.: B29C 48/44, B29C 48/25, B29B 7/42, B29B 7/48, B29B 7/74, B29C 48/08, B29C 48/10

(54) **NACHRÜSTUNG FÜR EINE EXTRUDERANLAGE**

(30) Priorität: 07.04.2020 DE 102020002194; 21.04.2020 DE 102020002398; 30.09.2020 DE 102020005985; 26.11.2020 DE 102020007239
(71) Anmelder: Entex Rust & Mitschke GmbH, 44805 Bochum (DE)
(72) Erfinder: Harald, Rust, 44805 Bochum (DE)
(74) Vertreter: Kaewert, Klaus

(57) **Zusammenfassung**

Nachrüstung an Extruderanlagen zur Steigerung der Extrusionswirkung, insbesondere der Kühlwirkung und/oder Mischwirkung, in einer vorhandenen Extruderanlage zur Aufbereitung von Schmelze, insbesondere mit einer nachgeschalteten formgebenden Düse für strangförmiges Extrusionsmaterial, auch für die Herstellung von Folien, wobei die vorhandene Extruderanlage aus Abschnitten/Modulen zusammen gesetzt ist, wobei die Extruderanlage einen Extruderabschnitt/Modul aufweist und dieser vorhandene Extruderabschnitt/Modul mit einem Verlängerungsabschnitt/Modul in Planetwalzenextruderbauart formschlüssig verbunden wird, wobei ein gemeinsamer Antrieb für den vorhandenen Extruderabschnitt/Modul und den Verlängerungsabschnitt/Modul vorgesehen ist, und die Extruderanlage des weiteren einen Extruderabschnitt/Modul aufweist und dieser vorhandene Extruderabschnitt/Modul mit einem Verlängerungsabschnitt/Modul in Planetwalzenextruderbauart verbunden wird, wobei der vorhandene Extruderabschnitt/Modul und der Verlängerungsabschnitt/Modul separate Antriebe aufweisen.

## Beschreibung

Extruder werden immer wieder zur Bearbeitung Stoffen, vorzugsweise von Kunststoffen eingesetzt, die mindestens teilweise in einem schmelzflüssigen Zustand sind oder in einen schmelzflüssigen Zustand gebracht werden können. Bei diesen Stoffen handelt es sich häufig um Polymere , Copolymere und Elastomere. Im Extruder können Stoffe unterschiedlichster Art verarbeitet werden, auch Feststoffe mit schmelzflüssigen Stoffen, auch Polymermischungen, auch Copolymermischungen, auch Elastomere, auch in Mischungen mit anderen zusätzlichen Stoffen.

Die Stoffe können zum Beispiel sein:
Acrylnitril (ABAK), Acrylnitil/Budadien/Styrol (ABS), ABS mit Polycarbonat (ABS+PC), Acrylat-Kautgschuk (ACM), Ethylen-Acrdylesstrer-Kautschuk (AEPCMS), Acrylnitril/Ethylen-PLropylen-Dien/Styrol (AES), Nitroso-Kautschuk (AFMU), Acrylnitrilmetacrylat (AMAK), Acrylnitril/Methylmethacrylat (AMMA), Acrylnitril/Butadien/Acrylat(ANBA), Acrylnitril/Methacrylat) ANMA), Aromatische Polyester (APE), Acrylnitril/chloriertes Polyetrhylen/Sstryrol (APE-CS), Acylnitil/Styrol/Acrylester(ASA), TPE, Basis Aliphatisches Polyurethan(ATPU) Urethan-Kautschuk, Polyester (AU), Benzylcellulose (BC) Butadien-Kautschuk (BR), Cellulosesacetat (CA), Celluloseacetobutyrat (CAB), Celluloseacetopropionat (CAP), Kresol-Formaldehyd (CF), Hydratisierte Cellulose, Zellglas (CSH), Chlorierter PE-Kautschuk (CM), Carboxymethylcellulose (CMC), Cellulosenitrat, Celluloid /CN), Epichlorhydrin-Kautschuk (CO), Cyclopolyolefinpolymere, Topas (COC), Cellulosepropionat (CPL), Chloropren-Kautschuk (CR), Casein-Kunststoffe (CS), Casein-Formaldehyd, Kunsthorn (CSF), Chlorsulfonierter PE(-Kautschuk) (CSM), Cellulosetriacetat (1CTA), Dicyclopentadien(DCP), Ethylen/Methacrylsäure (EAA), EthylenVinylacetat-Kautschuk (EAM), Ethylen/Butylacrylat (EBA), Ethylcellulose (EC), Ethylencopolymer-Bitumen-Blend(ECB), Epicchlorhydrin-Kautschuk(ECD), Ethylen/Chortrifluorethylen (ECTFE), Ethylen/Ethylacrylat (EEA), Polyethylen Ionomere (EIM), Ethylen/Methacrylsäure(EMAK), exo-Metehylenlaton (EML), Ethylidennorbornen (EN), Ethylen-Acrynitril-Kautschuk (ENM), Epoxidierter Naturkautschuk (ENR), Ethylen/Propylen (EP), EpoxidHarze, Polyadditions-Harze (EP), Ethylen/Propylen/(Dien)/-Kautschuke (EP(D)M, Epichlorhydrin-Kautschuk(ETER), Ethylen/Tetrafluorethylen (ETFE), Urethan-Kautschuk, Polyether (EU), Ethylen/Vinylacetat (EVA), Ethylen/Vinylalkohol, EVOH (EVAL), TPE, Basis Ethylen/Vinylacetat+Polyvinylidenchlorid (EVAPVDC), Ethylen/Vinylalkohol, EVAL(EVOH), Tatrafluorethylen/Hexafluorpropylen (FEP), Furan/Formaldehyd (FF), Perfluor-Kautschuk (FFKM), Fluor-Kautrschuk(FKM), Propylen/Tetrafluorethylen-Kautschuk (FPM) Phospazen-Kautschuk mit Fluoralkyl- oder Fluorozyalkyl-gruppen(FZ), Proplenoxid-Kautschuk (GPO), Halogenierter Butyl-Kautschuk (HIIR), Hydrierter NBR-Kautschuk HNBR), höhere alpha-Olefine (HOA), Pyrrone, Plycyclone, Leiterpolymere (HAT-P), Polycyclone, Leiterpolymere(HT-PP), Polytrriazine, Leiterpolymere (HAT-PT), Butryl-Kajutrschuk (CIIR, BIIR) (IIR), Isopren-Kautschuk (IR), Kohlenwasserstoffharz (KWH), Liquid Christal Polymere (LCP), Methylmethacrylat/Acrylnitril/Butadien/Styrol (MABS), Methacrylat/Butadien/Styrol (MBS), Methylcellulose (MC), Melamin/Formaldehyd (MF), Melamin/UFormaldehy+ungesättigter Polyester (MF+UP), Melamin/Phenol-Formaldehyd(MPF), Methyl/Phenyl/Silicon-Kautschuk(MPQ), Methylmethacrylat/exo-Methylenlacton (MMAEML), Melamin/Phenol-Formaldehyd(MPF), Methyl/Silicon-Kautschuk (MQ), alpha-Methylstyrol (MS), Melamin/Harnstoff/-Formaldehyd (MUF) Melamin/HarnstoffZPhenol/Formaldehyd(MVFQ), Polyacrylnitril (PAN), Polybuten-I (PB), Polybutylacrylat (PBA), Polybenzimidazol, Triazinpoloymer (PBI), Polybismaleinimid (PBMI), Polybutylennaphthalat (PBN), Polyoxadiabenzimidazol (PBO), Polybutylenterephthalat (PBT), Polycarbonat (PC) mit ABS oder AES, ASA, oder PBT oder PE-HD oder PEET oder PMMA oder PS oder PPE oder SB oder HI oder SMA oder TPU oder BPA, oder TMBPA oder TMC, Poly-3,3-bis-chlormethylpropylenoxid (PCPO), Polycyclohexandimethylterephthalat (PCT), Polychlortrifluoretrhylen (PCTFE), Polydiallylphthalat(PDAP), Polydicyclopentadien (PDCPD), Polyethylen (PE), Polyesteramid (PEA), Polyestercarbonat (PEC), Polyetherketon (PEK), Polyethylennaphthalat (PEN), Polyenthylenoxid (PEOX), Polyethersulfone (PES), Polyesterimid (PESI), Polyethlenterephathalat (PET) mit Elastomer oder mit MBS oder PBT oder PMMA oder Pmma oder PSU, Phenol/Formaldehyd (PF), Phenol/Formaldehyd +Epoxid (PF+EP), PTFE/Perfluoralcylvinylether, Perfluoralkoxy (PFA), Phenol/Formaldehyd/Melamin (PFMF), Polyperfluortrimethyltriazin-Kautschuk PFMT), PTFE-Copolymerisat (PFTEAF), Polyhydroxylalkalin (PHA), Polyhydroxybenzoat (PHBA), Polyimidimid (PI), Polyisobutylen (PIB), Polyimidsulfon (PISO), Aliphatisches Polyketon (PK), Polylactid (PLA), Polymethylacrylat (PMA), Polymethhacrylimid (PMI), Polymethylmethacrylat (PMMA), Polyacrylesterimid (PMMI), Poly-4-methylpenten-1 (PMP), Poly-Alpha-methylstyrol (PMS), Fluor/Phosphazen-Kautschuk (PNF), Polynorbornen-Kautschuk (PNR), Polyolefine, Polyolefin-Derivate und Polyolefin-Copolymerisate (PO), Poly-p-hydroxy-benzoat (POB), Polyoxymethylen (Polyacetalharz, Polyformaldehyd) (POM), POM mit PUR-Elastomer oder Homopolymerisat oder Copolymerisat, Polyphthalat (PP), PP-Carbonat, PP mit Block-Copolymere oder chloriert oder mit Homopolymerisat oder mit Metallocen hergestellt, Polyamid (PPA), Polyphenylenether (PPE), PPE mit PA oder mit PBT oder mit PS, Polydphenyloxidpyrronellithimid U(PPI), Polyparamethylstyrol (PPMS), Polyphenylenoxid (PPO), Polypropylenoxid (PPOX), Poly-p-Phenylen (PPP), Polyphenylensulfid (PPS), Polyphenulensulfon (PPSU), Poly-m-Phenylen/Terephthalamid (PPTA), Polyphenylvinyl (PPV), Polypyrrol (PPY), Polystryrol (PS), PS mitr PC oder PE oder PPE, Polysaccharide (PSAC), Polysulfone (PSU), Polytetrafluorethylen (PTFE), Polytetrahydrofuran (PTHF), Polybutrylenterephthalat (PTMT), Polyester (PTP), Polytrimethyleterephthalat (PTT), Polyurethan (PUR), Polyvinylacetat (PVAC), Polyvinylalkohol (PVAL), Polyvinylbutyral (PVB), Polyvinylisobutylether (PVBE), Polyvinylchlorid (PVC). Polyvinylidenchlorid (PVDC), Polyvinylidenfluorid (PVDF), Polyvinylfluorid (PVF), Polyvinylformal (PVFM), Polyvinylcarbazol (PVK), Polyvinylmethylether (PVME), Polyvinylcyclohexan (PVZH), Phosphazen/Kautschuk mit Phenoygruppen (PZ), Resorrcin/Formaldehyd (RF), Stryrol/Acrylnitril (SAN), Stryrol/Butadien(SB), Styrol/Butadien/Methylmethacrylat (SBMMA), Styrol/Butadien-Kautschuk (SBR), Styrol/Butadien/Styrol (SBS), Styrol-Ethenbuten/Stryrol (SEBS), Styrol/Ethylen/Propylen/Dien-Kautschuk (SEPDM), Silicon (SI), Styrol/Isopren/Maleinsäureanhydrid (SIMA), Isopren/Styrol-Kautschuk (SIR), Styrol/Isopren/Styrol (SIS), Styrol/Maleinsäureanhydrid(SAM), Styrol/Maleinsäureanhydrid/Butadien(SMAB), Styrol/Methylmethacrylat (SMMA), Stryrol-alpha-Methylstyrol (SMS, Polyester (SP), Thiocarbonyldifluorid-Copolymer-Kautschuk (TCF), TPE mit EPDM+PP oder PBBS+PP, TPE mit PEBBS+PPE oder PEBS+PP oder mit PESST oder PESTRUR oder mit PESTEST oder mit PESTUR oder mit PEUR oder mit SBS+PP, Thermoplastische Elastomere (TPE), Thermoplastische Stärke (TPS), Harnstoff/Formaldehyd (UF), Vinylchlorid (VC), Vinylchlorid/Ethylen(VCE), Vinylchlorid/Maleinsäureanhydrid(VCMA), Vinylester (VE),

Zu obigen gehören Polyolefine, Polypropylene, S/MSA, MSA-g-PP, ABS, SAN, Polystyrol, Polycarbonat, Polyester, Polyamide, Polyacrylate, PEK, PEEK, Polphenylendoxiden, Celluloseester, Polyalkylmethacrylate, Biolactate

Die vorstehenden Stoffe können auch in Mischungen oder Verbindungen miteinander und mit anderen Stoffen vorkommen. Oder es kommen Derivate von vorstehenden Stoffen allein oder in Mischungen mit anderen Stoffen vor. Andere Stoffe können auch Armierungen/Verstärkungsstoffe wie bspw. Glasfasern,
oder Gleitmittel
oder auch Füllstoffe, zum Beispiel Glaskugeln,
oder auch Addive, zum Beispiel Wachse, Salze, Nukleierungsmittel, Stabilisatoren, Farbmittel, Polyetherglykole und deren Derivate
oder Modifikatoren
sein.

Die gewählten Stoffe können auch
- Wirkungen verstärken
- zusätzliche Wirkungen entfalten, zum Beispiel die Warmfestigkeit oder die Verschleißfestigkeit erhöhen oder die Säurefestigkeit erhöhen oder UV-Beständigkeit oder die Festigkeit oder die Nachgiebigkeit erhöhen oder eine Vernetzung der Moleküle bewirken oder eine Reaktion der Polymere bewirken oder eine Verfärbung der Polymere bewirken oder die Farbbeständigkeit der Polymere erhöhen oder den Schmelzpunkt verändern oder die Dispergierung und Homogenisierung erleichtern oder zu einer Schaumbildung führen oder die Schaumbildung erleichtern oder das Extrudieren erleichtern oder die Reibungswerte verändern
- Füllstoffe sein

Die Extruder können beim Extrudieren verschiedene Aufgaben erfüllen. Zu den Aufgaben gehören beispielsweise
- die Mischung mit anderen Stoffen
   Die Mischungsbestandteile können organische und/oder anorganische Stoffe, auch Kunststoffe sein. Kunststoffe werden üblicherweise mit diversen Zuschlägen abgemischt. Auch Treibmittel können dem Kunststoff zur Erzeugung eines geschäumten Kunststoffes zugemischt werden.
   und/oder
- die Reaktion mit anderen Stoffen und/oder
- die Umformung der Stoffe.
   Dabei kann die Umformung in einem oder mehreren Schritten erfolgen. Die Umformung in einem einzigen Schritt/Stufe kann zum Beispiel der Form erfolgen, dass Schmelze im Extruder erzeugt und die Schmelze unter gleichzeitiger Verfestigung in eine bestimmte Form gebracht wird. Das kann zur Erzeugung eines Profilstranges fuhren. Das Profil kann unterschiedliche Querschnitte aufweisen. Dazu gehören sowohl offene Querschnitte, als auch geschlossene Querschnitte, als auch volle Profile, als auch Hohlprofile. Zu den vollen Querschnitten gehören eckige und/oder gerundete Querschnitte. Zu den Querschnitten gehören sowohl dicke als auch dünne Querschnitte, auch extrem dünne Querschnitte in Form von Folien, auch in Form von Flachfolien, auch in Form von gewölbten Folien.
   Von einer einstufigen Umformung wird in obigem Sinne auch dann noch gesprochen, wenn der Profilstrang nach seinem Entstehen noch bearbeitet wird. Die Bearbeitung kann spanabhebend oder nicht spanabhebend erfolgen. Die spanabhebende Bearbeitung erfolgt mit geeigneten Werkzeugen. Eine nicht spanabhebende Verformung erfolgt zum Beispiel mittels Walzen.
   Von einer mehrstufigen Umformung wird gesprochen, wenn zunächst ein Zwischenprodukt erzeugt wird und aus dem Zwischenprodukt ein Endprodukt erzeugt wird. Das ist dann der Fall, wenn zum Beispiel erst ein Granulat hergestellt wird und das Granulat in einem Formteilautomaten zu einem gewünschten Formteil verschweißt wird.

Für die Extrusion finden neben den Polymeren noch diverse andere Materialien Verwendung. Dazu gehören Füllstoffe, Farbstoffe, Weichmacher, Stabilisatoren und andere Zusatz- und Hilfsstoffe bzw. Additive. Alle Stoffe werden im Folgenden als Einsatzstoffe bezeichnet. Die Einsatzstoffe kommen in fester Form oder in flüssiger Form vor.
In der Regel werden dabei Feststoffe durch mechanische Verformung und Erwärmung verflüssigt. Es können auch Feststoffe mit Flüssigkeiten zusammen gebracht werden. Es können auch Flüssigkeiten und/oder feste Bestandteile miteinander vermischt werden.
Sogar feste Partikel können im Extruder verarbeitet werden.
Die Einsatzstoffe werden vorzugsweise in einem dafür bestimmten Abschnitt dem Füllteil zugeführt. Dem folgt die Bearbeitung der Einsatzstoffe unter mechanischer Verformung. Durch die Verformung erwärmen sich die Einsatzstoffe. Dabei ist in der Regel eine bestimmte Temperatur im Extruder einzuhalten. Damit sich die gewünschte Temperatur schnell einstellt kann der Extruder an der betreffenden Stelle beheizt werden. Die bei der Verformung anfallende unerwünschte Wärme wird durch Kühlung abgeführt.
Zur Beheizung und Kühlung ist bekannt, das Gehäuse der Extruder mit Heizmittel oder Kühlmittel zu durchströmen. Je nach Bauart haben die Extruder unterschiedliche Kühleigenschaften/Beheizungseigenschaften.

Bei den Extrudern werden folgende Hauptgruppen unterschieden:
Einschneckenextruder, Doppelschneckenextruder, Planetwalzenextruder.

Einschneckenextruder bestehen aus einer umlaufenden Schnecke und einem umgebenden Gehäuse. Mit Einschnecken lässt sich ein hoher Druckaufbau und eine große Förderwirkung erzielen. Jedoch ist die Homogenisierung und Dispergierung im Einschneckenextruder schwach. Gleichwohl sind Einschneckenextruder immer noch die meistbenutzten Extruder, auch zum Umformen, das heißt, zum Aufschmelzen von Kunststoff und einer anschließenden Formgebung der Schmelze bei gleichzeitiger Verfestigung.

Doppelschneckenextruder bestehen aus zwei parallel zueinander und miteinander kämmenden Schnecken und einem umgebenden Gehäuse. Mit Doppelschnecken lässt sich gleichfalls ein hoher Druckaufbau und eine hohe Förderwirkung erzielen. Die Mischwirkung des Doppelschneckenextruders ist um Vieles größer als bei einem Einschneckenextruder, Jedoch erfahren Polymere aufgrund der mechanischen Belastung im Doppelschneckenextruder eine mehr oder weniger große Veränderung ihrer Molekülketten. Es gibt Anwendungen, bei denen das dahinstehen kann. Für andere Anwendungen ist die Erhaltung der Molekülketten wichtig.

Dann bietet sich der Planetwalzenextruder an. Planetschneckenextruder bestehen aus mehr Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer im Gehäuse sitzenden Buchse ein, welche die Innenverzahnung des Gehäuses bildet. Im Planetwalzenextruder kämmen die Planetspindeln sowohl mit der Zentralspindel als auch mit dem innen verzahnten Gehäuse.
Zugleich gleiten die Planetspindeln mit dem in Förderrichtung weisenden Ende an einem Anlaufring.
Die Planetwalzenextruder besitzen im Vergleich zu allen anderen Extruderbauarten eine extrem gute Mischwirkung, jedoch eine geringere Förderwirkung.

Planetwalzenextruder sind insbesondere in folgenden Druckschriften beschrieben:
DE202016101935, DE 19939075A1, CA 698518, DE19653790A, DE 19638094A1, DE 19548136A1, DE1954214A, DE3908415A, DE19939077A, EP1078968A1,EP1067352A, EP854178A1, JP3017176, JP11080690, JP9326731, JP11-216754, JP11-216764, JP10-235713, WO2007/0874465A2, WO2004/101627A1, WO2004/101626A1, WO 2004/037941A2, EP1056584, PCT/EP99//00968, WO 94/11175, US6780271B1, US7476416.

Von Planetwalzenextruderabschnitten/Modulen wird dann gesprochen, wenn ein Extruder sich aus mehreren Abschnitten/Modulen zusammensetzt. Die Bezeichnung Abschnitt impliziert eine Länge, welche der betreffenden Bearbeitungsstrecke im Extruder angepasst ist. Die Bearbeitungsstrecke ist die Länge der Strecke auf der das Extrusionsmaterial in dem Extruder bearbeitet wird. Die Bezeichnung Modul weist dagegen auf einheitliche Längen hin. Zumeist erfolgen in den Abschnitten/Modulen unterschiedliche Verarbeitungsschritte.

Der abschnittsweise/modulweise Aufbau eines Extruders ist auch bei Extrudern in Einschneckenbauweise und bei Extrudern in Doppelschneckenextruderbauweise bekannt. Insbesondere die Planetwalzenextruderabschnitte/Module und die Einschneckenextruderabschnitte/Module lassen sich gut miteinander kombinieren. Dabei kann sich die Schnecke eines Einschneckenextruderabschnitts/Moduls als Zentralspindel in einen Planetwalzenextruderabschnitt/Modul fortsetzen.
Das ist seit Jahren bekannt und hat sich als extrem vorteilhaft erwiesen. Insbesondere werden Planetwalzenextruderabschnitte/Module mit einem als Einschneckenextruderabschnitt/Modul ausgebildeten Füllteil kombiniert. Über das Füllteil werden die Einsatzmaterialien für die Extrusion aus einem Fülltrichter abgenommen und in die nachgeordneten Planetwalzenextruderabschnitte/Module gedrückt um dort bearbeitet zu werden, vgl. die Zeitschrift Kunststoffe, "Dynamisches Mischteil für Extruder auf der Basis des Planetwalzensystems", 1983, Seite 343.

Der in dieser Druckschrift veröffentlichte Planetwalzenextruderabschnitt/Modul ist ohne Kühlung dargestellt. Jedoch war die Kühlung schon seinerzeit üblich. Die Kühlung ist in den Folgejahren immer weiter entwickelt worden. Das betrifft insbesondere die innen verzahnte Buchse im Gehäuse. Die Buchse ist außen mit Kanälen versehen, die mit der Montage der Buchse im Gehäuse geschlossen werden. Durch die Kanäle strömt im Betriebsfall ein Kühlmittel. Je dünner die Buchse ausgeführt werden kann, desto besser ist die Wärmeübertragung aus dem Extruder in das Kühlmittel.
Durch die verbesserte Kühlung lassen sich zwischenzeitlich immer mehr Prozesse beherrschen, bei denen es zunehmend auf die Genauigkeit der Temperaturführung und/oder auf die pro Zeiteinheit übertragene Wärmemenge ankommt. Für die Beherrschung chemischer Prozesse/Reaktionen wie auch für Bei jeder Neuanlage, bei der es auf die Genauigkeit der Temperaturführung und/oder auf die pro Zeiteinheit übertragene Wärmemenge ankommt, muss über den Einsatz eines Planetwalzenextruderabschnitts/Moduls nachgedacht werden. Leider setzen sich einige Fachleute immer wieder über diese Problematik hinweg. Das wird darauf zurück geführt, dass manche Hersteller keine Planetwalzenextruderabschnitte/Module in Ihrem Programm haben und fürchten, das Projekt zu verlieren.

Ein andere bevorzugte Einsatzstelle des Planetwalzenextruderabschnitt/Moduls ist das Herunterkühlen einer aufbereiteten Schmelze vor dem Austritt aus dem Extruder, insbesondere vor dem Austritt durch eine Düse des Extruders. In der Regel ist die Prozesstemperatur im Extruder deutlich höher als die Austrittstemperatur. Die Kühlung ist insbesondere dann geboten, wenn die Düse eine Formgebung bewirken soll. Für die Formgebung ist es von Vorteil, wenn die Schmelzetemperatur möglichst dicht an der Temperaturgrenze liegt, an der noch ein problemloser Austritt durch die Düse möglich ist. Das ist umso schwieriger, je komplizierter die Düsenform ist, die dem Querschnitt des herzustellenden Profils entsprechen muss. Komplizierte Stellen an einer Düse sind insbesondere an Ecken und an Auswölbungen gegeben. Aber auch Breitschlitzdüsen sind kompliziert. Hier ist die gleichmäßige Verteilung der Schmelze in gleicher Beschaffenheit über die Länge der Düse ein Problem. Bei einer Breitschlitzdüse mit zentralem(mittigem) Anschluss des Extruders ist der Schmelzeweg von der Extrudermitte zur Düsenmitte der kürzeste Weg. Der Schmelzeweg zu den äußersten Enden der Breitschlitzdüse ist der längste Weg. Hierzu ist bekannt,
- zwischen Extruder und Düse besondere Maßnahmen zur Verteilung der Schmelze zu treffen. Dazu eignen sich eine Schmelzepumpe und/oder Lenkungsmittel, die verhindern, dass die Schmelze einfach den Weg des geringsten Widerstandes nimmt.
- mehrere Extruder über der Breite (Länge des Düsenschlitzes) der Düse anzuordnen, so dass die Wege der Schmelze entsprechend verkürzt werden.

Ähnliche Probleme können sich ergeben, wenn der Profilquerschnitt unterschiedliche Dicken aufweist, insbesondere wenn sich dabei wesentliche Dickenvergrößerungen ergeben und entsprechend viel Material fließen muss, um die Querschnittsverdickung auszufüllen. Auch hier hilft ein zusätzlicher Extruder, der die notwendige Schmelzemenge zur Verfügung stellt.

Ähnliche Probleme können sich an Düsen für Hohlprofile ergeben. Die häufigsten Hohlprofile sind Schläuche. Zur Herstellung der Schläuche ist eine Düse mit ringförmiger Düsenöffnung vorgesehen. Dazu besitzt die Düse einen Außenring und einen darin (in der Regel mittig) angeordneten Dorn oder Kegel. Zwischen dem Dorn/Kegel und dem umgebenden Außenring besteht ein Abstand, der die Öffnungsweite der Düse bestimmt. In der Abwicklung der Düsenöffnung und einem Vergleich mit der Breitschlitzdüse wird erkennbar, dass bei einer einzigen Schmelzezuführung ähnliche Wegprobleme wie an der Breitschlitzdüse entstehen. Dem kann in der gleichen Weise wie an der Breitschlitzdüse abgeholfen werden.

Auch, wenn verschiedene Lösungen zum Ausgleich der sich aus den unterschiedlichen Weglängen bei der Folienherstellung, Schlauchherstellung usw. ergebenden Probleme zur Verfügung stehen. Ein Problem bleibt bei allen Lösungen. Das ist die Temperierung. Deshalb sollte es für den verständigen Fachmann auch ein Muss sein, am Extruderende eines Einschneckenextruders oder Doppelschneckenextruders über die Anwendung eines Planetwalzenextruderabschnitts/Moduls zum Kühlen der Schmelze nachzudenken. Das gilt umsomehr, als der EP1869109B1 auf Seite 9, Mitte, folgender Hinweis zu entnehmen ist:
Die Herstellung der Filme bzw. Folien kann durch alle technisch gängigen Herstellungsverfahren erfolgen, z.B. als Gießfolie, Blasfolie, Castfolie, durch (Co)extrusion, durch Kalandrieren usw....
Bei den für den Aufschmelz- bzw. Mischprozess verwendeten Extrudern kann es sich sowohl um Einschneckenextruder als auch um Zweischneckenextruder (sowohl gleich- als auch gegenlaufend) oder Mehrwellenextruder (z.B. mit Zentralspindel) handeln.
Mehrwellenextruder ist eine selten benutzte Bezeichnung für Planetwalzenextruder. In Verbindung mit "Zentralspindel"beinhaltet das für einen Fachmann eindeutig einen Hinweis auf Planetwalzenextruder.

Soweit den Fachleuten bei der Überlegung zu den Planetwalzenextruderabschnitten/Modulen Bedenken kommen, dass der Planetwalzenextruderabschnitt/Modul der Schmelze einen zu geringen Druck gibt, ist das für die oben in der Zeitschrift Kunststoffe von 1983, S. 343, beschriebene Kombination mit einem Einschneckenextruderabschnitt/Modul unwesentlich, weil der Einschneckenextruderabschnitt/Modul so viel Druck entwickelt, dass er den in Extrusionsrichtung nachgeschalteten Planetwalzenextruderabschnitt/Modul überfährt. Das heißt, der Druck des Einschneckenextruderabschnitts/Moduls setzt sich bis über den Planetwalzenextruderabschnitt/Modul hinaus in die Düse fort.
Alternativ oder zusätzlich können dem Planetwalzenextruderabschnitt/Modul noch eine oder mehrere Schmelzepumpen in Extrusionsrichtung nachgeschaltet werden, Die Schmelzepumpen können den Schmelzedruck an beliebiger Stelle auf ein gewünschtes Niveau anheben.

Der abschnittsweise/modulweise Aufbau des Extruders gibt die Möglichkeit, zwischen den Abschnitten/Modulen Messeinrichtungen und/oder Entgasungsleitungen oder Zuleitung für flüssige Medien anzuordnen. Flüssige Medien können zum Beispiel sein: Treibmittel oder andere schmelzflüssige Mischungsanteile.
Dabei hat es sich bewährt, diese Flüssigkeiten über Injektionsringe in die Anlage einzuspritzen. Die Ringe können zugleich die Halterung für Messeinrichtungen bilden.
Es ist auch bekannt, Schmelze über einen Seitenarmextruder oder eine Pumpe durch das Gehäuse hindurch in einen Extruderabschnitt/Modul einzutragen.

Wegen der Einzelheiten und Variationen bekannter Planetwalzenextruder bzw. Abschnitten/Modulen wird Bezug genommen auf folgende Druckschriften: DE 102005007952A1, DE102004061068A1, DE102004038875A1, DE102004048794A1, DE102004048773A1, DE102004048440A1, DE102004046228A1, DE102004044086A1, DE102004044085A1, DE102004038774A1, DE102004034039A1, DE102004032694A1, DE102004026799B4, DE102004023085A1, DE102004004230A1, DE102004002159A1, DE19962886A1, DE19962883A1, DE19962859A1, DE19960494A1, DE19958398A1, DE19956803A1, DE19956802A1, DE19953796A1, DE19953793A1.

Bei den Extrudern können zum Beispiel vorkommen: Füllzone, Aufschmelzzone, Mischzone/Dispergierzone/Homogenisierungszone und Austragzone. Die Austragzone kann umfassen, das Kühlen und Austragen. Kühlen und Austragen können jedoch auch als getrennte Zonen angesehen werden. Es kommen auch noch weitere Zonen vor.

Aus der WO2013/159801 zeigt eine modulweise aufgebaute Extruderanlage mit einem Modul, das dem Eintragen von Einsatzmaterial dient, und einem austrittsseitigen Modul, der der Kühlung der im Extruder entstandenen Mischung auf Austrittstemperatur dient.
Der Modul zum Eintragen des Einsatzmaterials kann als Füllteil bezeichnet werden. Das Füllteil besitzt die Bauart eines Einschneckenextruders . Die in seinem Gehäuse vorgesehene Schnecke ist vorzugsweise einteilig mit der Zentralspindel der nachgeordneten, in Planetwalzenextruderbauweise ausgeführten Modulen.
Aus der US6074084 ist gleichfalls eine modulweise aufgebaute Extruderanlage bekannt. Zu dieser Extruderanlage gehören ein Füllteil in Einschneckenextruderbauweise, mehrere Module in Planetwalzenextruderbauweise und ein austragseitiger Modul in Einschneckenextruderbauweise. Zwischen zwei Modulen in Planetwalzenextruderbauweise ist eine Entgasung vorgesehen. Dabei ist der Materialdurchgang in axialer Richtung gesperrt. Der Schmelze ist wird jedoch Gelegenheit gegeben, durch den Gehäusemantel des in Strömungsrichtung vorderen Moduls in eine Entgasungseinrichtung zu entweichen. Die entgaste Schmelze wird in den nachfolgenden Modul der Extruderanlage geleitet.

Aus der DE29724783 ist auch eine modulweise aufgebaute Extruderanlage bekannt. Die verschiedenen Module sind in Planetwalzenextruderbauweise ausgeführt. Zu jedem Modul gehören Planetspindeln, die um eine Zentralspindel in einem innen verzahnten Gehäuse umlaufen. Die Planetspindeln gleiten während ihres Umlaufes an einer Ringkonstruktion den Gehäusen. Zur Verringerung des Verschleißes der Planetspindeln an den mit der Ringkonstruktion in Berührung stehenden Spindelköpfen sind in den Spindelköpfen verschleißfeste Stifte eingesetzt.

Beim Austragen der Schmelze finden in ganz vielen Fällen Düsen Anwendung, mit denen die austretende Schmelze in eine bestimmte Form gebracht werden soll. Die gewünschte Form hält die Schmelze nach dem Austritt aus der Düse nur, wenn sie unmittelbar nach dem Austritt aus der Düse eine gewisse Festigkeit hat, die mit fortschreitender Abkühlung der Schmelze zunimmt. Diese gewünschte Formbeständigkeit ist temperaturabhängig. Bei einer höheren Verarbeitungstemperatur der Schmelze im Extruder ist eine Kühlung der Schmelze bis zum Austritt aus der Düse vorgesehen.
Die Kühlung vor dem Austritt der Schmelze aus dem Extruder kann auch aus anderen Gründen als der Formgebung erforderlich sein. Zum Beispiel, wenn für die Verarbeitung in einer nachgeordneten Anlage, eine niedrigere Temperatur erforderlich ist.

Mit dem älteren Vorschlag nach der WO2018/192677 wird die Kühlung verbesssert und eine weitergehende Anwendung vorgeschlagen.

Dabei geht der ältere Vorschlag von der Erkenntnis aus, dass die Kühlung im Extruder von dessen Bauweise abhängt. Planetwalzenextruder zeigen eine bessere Kühlwirkung als Einschneckenextruder und Doppelschneckenextruder. Das resultiert daraus, dass die Schmelze im Planetwalzenextruder sehr viel häufiger als in anderen Extruderbauarten mit der Kühlfläche in Berührung gebracht wird, anschließend von den Kühlflächen wieder abgeschoben, vermischt und wieder mit den Kühlflächen in Berührung gebracht wird. Nach dem älteren Vorschlag sind deshalb Kühlmodule/Abschnitte in Planetwalzenextruderbauweise dort vorgesehen, wo eine Kühlung zur wesentlichen Reduzierung der Schmelzetemperatur erforderlich ist.
Das kann an verschiedenen Stellen wichtig werden:
- bei der Bearbeitung der Schmelze an einer bestimmten Stelle der Extrusionsstrecke. Die Extrusionsstrecke ist die Strecke vom Eintritt der Einsatzstoffe in den Extruder bis zum Austritt aus dem Extruder. Die Kühlmodule/Abschnitte haben dann die Aufgabe des Herunterkühlens der Schmelze auf eine gewünschte Prozesstemperatur bzw. Austrittstemperatur
- vor dem Austritt der Schmelze aus dem Extruder.
   Dort ist die Einhaltung einer Temperatur für eine anschließende Formgebung der Schmelze unerlässlich. Bei zu hoher oder zu niedriger Temperatur scheitert die Formgebung. Außerdem besteht die Gefahr des Einfrierens der Anlage bei zu niedriger Temperatur.
Bei der Folienherstellung ist die Temperaturführung besonders kritisch. Ist die Schmelzetemperatur bei der Folienbildung zu hoch, so wird die Folienbildung beeinträchtigt. Die Folie reißt schnell.
Ist die Schmelzetemperatur bei der Folienbildung zu niedrig, so gibt es zum Beispiel Dickenprobleme. Die Anlage kann sogar einfrieren.

Die Schwierigkeit zu heißer Schmelze ergibt sich häufig auch bei Einschneckenextrudern, weil die Schmelze von der Schnecke durch das umgebende Gehäuse geschoben wird, ohne dass es zu einer wesentlichen Umwälzung der Schmelze und zu einer wesentlichen Mischung gekühlter Schmelzeteile mit weniger kalten Schmelzeteilen kommt. Es besteht die Gefahr heißer Nester.
Ähnliches ergibt sich bei zu kalter Schmelze. Die kalte Schmelze wird durch den Einschneckenextruder geschoben, ohne dass es zu einer wesentlichen Vermischung und Vereinheitlich der Schmelze kommt.
Es besteht eine vergleichbare Gefahr der Nesterbildung. Statt der heißen Nestern bestehen kalte Nester.

Die Schwierigkeit zu heißer Schmelze ergibt sich aber auch bei Doppelschneckenextrudern, die mit einer elektrischen Beheizung versehen sind. Mit der elektrischen Beheizung lässt sich nicht kühlen.

Während mit elektrischen beheizten Doppelschneckenextrudern nur eine sehr problematische Kühlung möglich ist und auch die Kühlung von Einschneckenextrudern problematisch ist, hat ein Kühler in der Planetwalzenextruderbauart eine ungleich größer Kühlwirkung.

Soweit eine Formgebung der aus dem Extruder austretenden Schmelze gewünscht ist, sind die Extruder mit einem formgebenden Austrag versehen. Dieser Austrag wird im Folgenden als Düse bezeichnet. Die Bezeichnung Düse schließt auch Sonderform des formgebenden Austrages ein. Zu den Sonderformen gehören Lochplatten/Lochmäntel für eine Granulierung der Schmelze mit einer Vielzahl nebeneinander liegender und als Düsen wirkender Öffnungen, aus denen feine Schmelzeströme austreten, die nach ausreichender Verfestigung zu Granulat zerkleinert werden. Zu den Sonderformen des formgebenden Austrages gehören auch Blasköpfe, bei denen mit einem ringförmigen, als Düse wirkenden Spalt aus Schmelze ein Folienschlauch erzeugt wird, der durch eingeblasene Luft gekühlt und stabilisiert wird.

Die Form der Düsen ist jeweils der gewünschten Form des Extrudats angepaßt. Für ein Extrudat mit rundem Querschnitt hat die Düse eine entsprechend runde Austrittsöffnung für die Schmelze. Bei eckigem Querschnitt hat die Düse eine entsprechend eckige Austrittsöffnung. Bei der Herstellung von Folien hat die Düse eine Schlitzform. Bei gewünschter Hohlform des Extrudats hat die Düse gleichfalls eine dem Extrudat entsprechende Querschnittsform. Die Querschnittsform ist dann durch einen ringförmigen Spalt gekennzeichnet, welcher der Kontur der Hohlform nachgebildet ist. Bei einer runden Hohlform hat der Spalt eine runde Ringform. Bei eckiger Hohlform hat der Spalt eine eckige Ringform.
Bei Mischformen mit Ecken und Rundungen hat der Spalt dementsprechend Ecken und Rundungen.

Um die Schmelze bei der Formgebung in einer Düse auf die richtige Austrittstemperatur zu bringen, ist es bekannt, die Düse zu temperieren. Durch die Temperierung der Düse kann die Schmelzetemperatur noch bis zum Verlassen der Düse optimiert werden. Zu den Einzelheiten wird Bezug genommen auf die WO2007017215A1, WO2017072096A1, WO2018065072A1, EP1915254B1, EP80665B1, DE102015016825A1, DE102015221364A1. Dabei beschreiben die EP1915254B1 und die DE102015016825A1 die Düse einer Blasfolienanlage.

Im Übrigen ist die Kühlung der Schmelze an verschiedenen Stellen des Extrusionsverfahrens wichtig. Während des Extrudierens wird in erheblichem Umfang Verformungsarbeit im Extruder geleistet. Die Verformungsarbeit führt zu einer Erwärmung der Schmelze. Die Wärme muß durch Kühlung aus dem Extruder ausgetragen werden. Dazu gibt es bei jedem zeitgemäßen Extruder eine Kühleinrichtung.

Darüber hinaus ist gegen Ende der Bearbeitung im Extruder zu berücksichtigen, daß die Verarbeitungstemperatur im Extruder regelmäßig höher als die zulässige Temperatur zur Formgebung der Schmelze in einer Düse ist. Das erfordert eine zusätzliche Kühlung der Schmelze vor der Düse.
Wichtig ist diese Kühlung insbesondere bei treibmittelbeladener Schmelze, die beim und/oder nach dem Austreten aus dem Extruder aufschäumt.
In der Regel ist diese Kühlung aber für treibmittelfreie Schmelze unverzichtbar. Das gilt
- sowohl für die Herstellung von Profilsträngen
- als auch für die Herstellung von Folien aus der Schmelze. Je dünner die Folien sind, desto genauer muss die Schmelzetemperatur eingestellt und geregelt werden
- als auch für die Herstellung von Granulaten aus der Schmelze. Bei der Herstellung von Granulaten wird die Schmelze aus einer Vielzahl kleiner Düsenöffnungen ausgetragen, so dass dünne Schmelzestränge entstehen, die mit einem oder mehreren Messern in kleine Stücke abgelängt werden. Die Düsenöffnungen können sich im Extrudergehäuse oder in einer Platte am austragseitigen Ende des Extruders befinden
- als auch für das Ablegen von Schmelze auf einer Walze. Dieses Verfahren ist zum Beispiel in den DE102011013539A1 und WO2016/079059 beschrieben. Das Ablegen der Schmelze erfolgt mittels einer Düse, welche die Schmelze gleichzeitig über die Länge der Düse auf der Walze ausbreitet, so dass ein Film auf der Walze entsteht, oder mittels einer bewegten Düse, welche hin- und hergehend über die Länge der Walze fährt.
   Das Ablegen kann kontinuierlich mit einem Strang oder in Partikelform erfolgen. Die Partikel können einheitlich oder uneinheitlich sein. Es kann sich beispielsweise um Granulat oder um Schnitzel handeln. Die Partikel können auch auf die Walze gestreut werden. Feine Partikel können auf die Walze geblasen werden. Je feiner die Partikel sind, desto dünnere Folien können erzeugt werden. Die auf die Walze aufgetragenen Partikel können miteinander verschmolzen werden und/oder mit Hilfe von mindestens einer weiteren Walze bearbeitet werden. Die zum Verschmelzen erforderliche Wärme kann durch Beheizung der Walze und/oder durch eine Beheizung von außen beigebracht werden -als auch bei der Herstellung von mehrschichtigem Verbundmaterial aus der Schmelze; für einzelne Kunststoffschichten oder mehrere Kunststoffschichten. Idealer Weise wird die Schmelze für sämtliche Schichten gleichzeitig auf mehreren Extrudern hergestellt und anschließend zu dünnen Folien verarbeitet, die danach sofort zusammengeführt werden, so dass die Herstellungswärme der Folien genutzt werden kann, um die Folien aufeinander zu laminieren. Vorzugsweise bestehen solche Laminate aus zwei höher wertigen Deckschichten und einer gering wertigen zwischenliegenden Füllschicht. Die Füllschicht besteht zum Beispiel aus Recyclat und hat die Aufgabe, die Deckschichten zu beabstanden. Bei dieser Herstellung aus unterschiedlichen Materialien ist die genaue Temperatursteuerung extrem wichtig, weil die Temperaturfenster für das Zusammenführen und Verbinden der Folien kleiner werden, je mehr Folien unterschiedlicher Beschaffenheit zusammen geführt werden sollen.
- als auch für die Herstellung von Formkörpern aus der Schmelze, insbesondere durch Spritzgießen. Je genauer die Schmelze vor dem Spritzvorgang auf die gewünschte Spritztemperatur eingestellt wird, desto besser ist die Qualität des Formteils. Zumeist ist das auch gleichbedeutend mit geringerer Ausformzeit für das Formteil.

Jedes zur Bearbeitung im Extruder bestimmte Extrusionsmaterial hat ein bestimmtes, bei der Bearbeitung einzuhaltendes Temperaturprofil. Bei der Planung der Extrusionsanlage werden die abzuführenden Wärmemengen berechnet und danach die Kapazität der Kühlung der Anlage ausgelegt. Für die Planung kann der Fachmann auf unterschiedliche Extruderabschnitte bzw. Extrudermodule zurückgreifen. Vorteilhafterweise lassen sich auch Extruderabschnitte/Module unterschiedlicher Bauweise miteinander kombinieren. So kann ein Einschneckenextruderabschnitt,
- von dem bekannt ist, daß er nur über eine bescheidene Kühlung verfügt, mit einem Planetwalzenextruderabschnitt kombinieren,
- von dem bekannt ist, daß er über eine hervorragende Kühlung verfügt.
Dabei ist zumeist der mit hervorragender Kühlung versehene Planetwalzenextruderabschnitt in Strömungsrichtung der Schmelze hinter dem Einschneckenextruderabschnitt angeordnet.

Bei Planetwalzenextrudern kann ein zur besonderen Kühlung vorgesehener Planetwalzenextruderabschnitt an jeder Stelle der Extrusionsstrecke angeordnet werden, soweit sich im Einzelfall nicht andere Notwendigkeiten ergeben.

Die Auslegung der Kühlung schließt üblicherweise eine Sicherheit/Sicherheitsfaktor ein. Das heißt, die Anlage wird in der Kühlkapazität üblicherweise größer ausgelegt als erforderlich, so daß eine Kühlreserve gegeben ist. Die Kühlreserve wird genutzt, wenn die geplante Kühlung im Normalbetrieb bei Vollauslastung nicht erreicht wird. Eine über das gewünschte Temperaturprofil hinausgehende Kühlung der Schmelze führt zu einer höheren Zähigkeit der Schmelze. Das kann den Durchgang durch die Düse und die Formgebung der Schmelze in der Düse behindern.
Neben der Vollauslastung der Anlage kann sich der Zustand der Teilauslastung der Anlage ergeben. Bei der Teilauslastung wird die Anlage mit einem geringeren Durchsatz gefahren. Das erfordert eine Anpassung der Kühlung. Üblicherweise erfolgt die Anpassung automatisch, zum Beispiel weil die Schmelzetemperatur die Regelgröße für die Kühlung ist.
Die Vollauslastung ist eine Designgröße. Wenn ein Extruder mit mehr Durchsatz als ein anderer Extruder bei Vollauslastung geplant wird, dann ist der größere Durchsatz die Designgröße.
Wenn an einem vorhandenen Extruder über den zur Designgröße gehörenden Durchsatz hinaus ein größerer Durchsatz geplant ist, so ist dabei auch die Betriebssicherheit zu beachten. Die damit verbundene Mehrbelastung des Extruders kann nicht nur die Funktionen einzelner oder mehrere Anlagenteile stören, sondern auch die Betriebssicherheit gefährden.

Die Erfindung hat sich die Aufgabe gestellt, an vorhandenen Extrusionsanlagen die Kühlung durch einen zusätzlichen Planetwalzenextruderabschnitt/Modul nachträglich zu verbessern.
Nach der Erfindung wird das mit den Merkmalen des Hauptanspruches erreicht. Die Unteransprüche beschreiben vorteilhaft Ausführungsformen.
Dabei nutzt die Erfindung das System zeitgemäßer Extruder, auch zeitgemäßer Planetwalzenextruder.

An zeitgemäßen Extrudern ist zumeist jeder Zone ein Extruderabschnitt/Modul zugeordnet. Jedes Gehäuse ist an jedem Ende mit einem Flansch versehen, so dass jedes Gehäuse an einem Flansch mit seinem benachbarten Gehäuse verbunden werden kann. Nur an dem austragseitigen Ende des Extruders gibt es keinen Modul/Abschnitt. Vorzugsweise ist gleichwohl auch dort ein Flansch vorgesehen.
Alle Flansche eines zeitgemäßen Extruders sind vorzugsweise gleich, insbesondere mit gleichen Anschlussmaßen versehen. Das fördert die Auswechselbarkeit bzw. die Änderbarkeit des Extruders zur Anpassung an einen gewünschten Prozess oder eine Änderung des Prozesses.
Das gilt für alle üblichen Bauweisen wie Einschneckenextruder, Doppelschneckenextruder und Planetwalzenextruder.
An den vorhandenen Planetwalzenextrudern sind die Änderungsmöglichkeiten besonders groß,
- wenn die Zentralspindel über der gesamten Länge mit einer einheitlichen Verzahnung versehen ist. Mit der Verzahnung der Zentralspindel korrespondiert die Verzahnung der zugehörigen Planetspindeln und die Innenverzahnung der zu den verschiedenen Modulen/Abschnitten gehörigen Gehäuse. Das heißt, eine einheitliche Verzahnung der Zentralspindel bedingt eine Verzahnung der korrespondierenden Planetwalzenextruderteile, die mit der Verzahnung der Zentralspindel in Eingriff treten kann und danach als Planetwalzenextruderteil lauffähig ist. Bei normal (ähnlich einem Gewinde einer Gewindestange) verzahnten Planetspindeln ist die Verzahnung der Planetspindeln und der Innenverzahnung gleich (abgesehen vom Teilkreisdurchmesser) der Verzahnung der Zentralspindel. Es können dabei auch Planetspindeln mit teilweise reduzierter Verzahnung zum Einsatz kommen. Die Reduzierung der Verzahnung kann unterschiedliche Formen haben. Zum Beispiel können Zähne ganz oder teilweise entfernt worden sein, so dass Transportspindeln oder Igelspindeln oder Noppenspindeln entstehen. Wegen der Einzelheiten dieser Spindeln wird Bezug genommen auf DE4308098, DE102019001191, DE 102009013839, DE102009009775, DE102016010082, DE102016007290, DE102017006638, DE102016002143, DE102013000708, DE102017001093, DE102015001167, DE102019000610, DE102011112081, DE102009009775.
   Vorteilhafterweise sind die zahnreduzierten Planetspindeln auch mit der Zentralspindel und dem innen verzahnten Gehäuse lauffähig, Es stellt sich immer nur die Frage, ob trotz der Zahnreduzierzung noch sichergestellt ist, dass die Planetspindeln unter Last nicht aus den Zähnen der Zentralspindel und aus den Zähnen der Gehäuseinnenverzahnung herausspringen. Das wird üblicherweise dadurch erreicht, dass Teile der Planetspindeln in Normalverzahnung bleiben, also nicht zahnreduziert werden. Die nicht zahnreduzierten Teile der Planetspindeln können als Lauffläche oder Führungsfläche bezeichnet werden.
   Mit diesen unterschiedlichen Planetspindeln kann in gleicher Weise und noch mehr und noch besseren Einfluss auf die Bearbeitung des Einsatzgutes genommen werden wie mit den unterschiedlichen Verzahnungen eines Einschneckenextruders.

Derartige, abschnittsweise oder modulweise aufgebauten Planetwalzenextruder besitzen Module/Abschnitte, die (abgesehen von einer durch einen gewünschten Prozess vorbestimmten Reihenfolge) an jeder gewünschten Stelle des Extruders angeordnet werden können und dort funktionsfähig sind. Das erlaubt, einen Kühlextruderabschnitt/Modul an jeder gewünschten Stelle zwischen anderen oder vor anderen oder nach anderen Extruderabschnitten/Modulen anzuordnen. Das schließt die Anordnung unmittelbar vor einer Düse am Extruderende ein. Wahlweise können ein oder mehrere vorhandene Extruderabschnitte/Module auch gegen einen oder mehrere Kühleextruder ausgetauscht werden, die mit der Zentralspindel genauso lauffähig sind wie die ausgewechselten/entfernten (ursprünglichen) Extruderabschnitte/Module.
Mit derartigen Extruderabschnitten/Modulen ergibt sich eine wesentliche Vereinfachung der Konstruktion. Ein weiterer Vorteil ist die Änderbarkeit vorhandener Planetwalzenextruder bzw. Abschnitte/Module in Planetwalenextruderbauweise. Die Auswechselung und Änderung der Planetspindeln bzw. Planetspindelanzahl ist die einfachste Änderung. Zur Auswechselung werden die Düse und die Gehäuseabschnitte/Module bis zu dem zu ändernden Extruderabschnitt/Modul abgebaut. Anschließend werden die Planetspindeln aus dem Zwischenraum zwischen der Zentralspindel und dem Gehäuse herausgedreht und gewünschte andere Planetspindeln in den Zwischenraum hineingedreht.
Durch Auswahl der Extruderabschnitte/Module kann jede gewünschte Bearbeitung der Einsatzstoffe erfolgen. Das schließt die Kombination von Extruderabschnitten/Modulen unterschiedlicher Bauweise ein. Die Gesamtzahl der Extruderabschnitte/Module bestimmt die Länge des Extruders. Anhand der Länge wird die gemeinsame Zentralspindel/Schnecke für alle ExtruderabschnitteModule festgelegt. Im Extremfall kann der Extruder auch nur aus einem Abschnitt/Modul bestehen.
In der Regel sind mindestens zwei Extruderabschnitte/Module vorgesehen, von denen der eine Abschnitt/Modul ein Füllteil bildet und der andere Abschnitt/Modul ein Mischteil bildet. Zumeist handelt es sich um ein Füllteil in Einschneckenextruderbauweise, während das Mischteil eine Planetwalzenextruderbauweise aufweist. Die Füllschnecke hat die Aufgabe, das Extrusionsmaterial in den Extruder einzutragen, Druck aufzubauen und das Extrusionsmaterial an den Planetwalzenextruderabschnitt/Modul zu übergeben. Dabei ist das übergebene Extrusionsmaterial vorzugsweise zumindest angeschmolzen, wahlweise aufgeschmolzen. In dem Planetwalzenextruderabschnitt/Modul erfolgt zumindest die Mischung und Homogenisierung der Schmelze sowie die Kühlung der Schmelze für den Austritt aus dem Extruder durch eine Düse.
Der Extruder kann aber auch viel mehr Abschnitte/Module aufweisen, zum Beispiel sieben oder mehr Abschnitte/Module. Dabei können einzelne Abschnitte/Module Sonderaufgaben erfüllen, zum Beispiel eine chemische Reaktion zwischen Bestandteilen des bearbeiteten Einsatzmaterials herbeiführen oder eine Entgasung des Extrusionsgutes bewirken. Es kann auch in Stufen Material zugeführt und in separaten Abschnitten/Modulen eingemischt werden. Alles kann bei gleich bleibender Temperatur oder bei unterschiedlichen Temperaturen durchgeführt werden. Je nach Prozessführung im Extruder sind ein oder mehrere Kühlextruderabschnitte/Module vorgesehen. In der WO2018/192677 werden verschiedene Variationen zur Erzielung besonderer Kühlwirkung vorgeschlagen.

Während bei der Planung von Neuanlagen allen Anforderungen ohne Weiteres Rechnung getragen werden kann, ist beschränken sich die Fachleute bei Umbauten auf Anbauten bzw. Änderungen im Bereich Messen, Einleiten von Medien, Abziehen von Gas. Dabei werden die Gehäuse geändert oder zwischen den Gehäusen der Abschnitte/Module Änderungen vorgenommen. Insbesondere sind Verlängerungen von vorhandenen Extrudern um Extruderabschnitte/Module unüblich. Das gilt insbesondere für Einschneckenextruder, aber auch für Planetwalzenextruder.

Der Hauptanspruch umfasst folgende Varianten.
Die eine Variante geht davon aus, dass ein vorhandener Einschneckenextruder um einen Planetwalzenextruderabschnitt/Modul ergänzt bzw. formschlüssig verbunden wird. Das erlaubt einen gemeinsamen Antrieb. In der Regel ist die Antriebsleistung eines vorhandenen Extruders so groß, daß der Verlägerungs/Ergänzungsabschnitt/Modul mitbewegt werden kann. Das gilt insbesondere für eine ergänzende Kühlung, weil bei der Kühlung möglichst wenig Antriebsenergie in die Schmelze eingetragen werden sollte, weil eine übermäßige Verformungsarbeit in der Kühlzone die Kühlung behindert.
Dabei schlägt die Erfindung vor, dass
- der aus Abschnitten/Modulen zusammen gesetzte Einschneckenextruder eine einzige Schnecke besitzt, welche sich durch alle Abschnitte/Module erstreckt und um eine Zentralspindel eines Planetwalzenextruderabschnitts/Moduls (nachfolgend Verlängerungsabschnitt/Modul genannt) verlängert werden kann. Dabei kann der Verlängerungsabschnitt/Modul die gleiche Wirkung wie herkömmliche Planetwalzenextruderabschnitte/Module besitzen. Dazu gehören insbesondere die Kühlwirkung und die Mischwirkung.
   Die Verlängerung kann auf folgenden Wegen erfolgen.
- Ein Weg zur Verlängerung beinhaltet eine Auswechselung der vorhandenen Schnecke gegen eine längere, kombinierte Einschnecke/Zentralspindel. Das zugehörige Gehäuse des zusätzlich vorgesehenen Kühlextruderabschnitts/Moduls besitzt eine Länge, die der vorgesehenen Verlängerung entspricht. Das Gehäuse des zusätzlich vorgesehenen Kühlextruderabschnitts/Moduls ist in herkömmlicher Ausfuhrung an beiden Enden mit einem Flansch vorgesehen, so daß es mit dem in Strömungsrichtung von Schmelze vorderen Flansch mit dem herkömmlich vorgesehenen Flansch am Ende des zu dem Einschneckenextruderabschnitt gehörigen Gehäuses verbunden werden kann. Die übliche Verbindung ist eine Verschraubung. Der ursprüngliche Einschneckenextruder wird nach Kombination mit dem dem Kühlextruderabschnitt/Modul in Bezug auf den gesamten Extruder zu dem Einschneckenextruderabschnitt.
   Das Gehäuse des zusätzlich/ergänzend vorgesehenen Planetwalzenextruderabschnitts/Moduls besitzt eine für Planetwalzenextruder herkömmliche Innenverzahnung. Der Innendurchmesser der Innenverzahnung ist vorzugsweise gleich oder größer als der Innendurchmesser des zu dem Einschneckenextruderabschnitt gehörigen Gehäuses, damit die kombinierte Einschnecke/Zentralspindel ohne Demontage des zu dem Planetwalzenextruderabschnitt/Modul gehörigen Gehäuses montiert und demontiert werden kann.
   Das zu dem ergänzenden Planetwalzenextruderabschnitt/Modul gehörige Gehäuse besitzt einen herkömmlichen Anlaufring. An dem Anlaufring gleiten die im Betriebsfall umlaufenden Planetspindeln.
   Außerdem umschließt das Gehäuse des ergänzenden Planetwalzenextruderabschnitts/Moduls die Planetspindeln wie bei den bereits vorhandenen Extruderabschnitten/Modulen.
- ein anderer Weg zur Verlängerung der Einschnecke um eine Zentralspindel geht davon aus, dass die bis dahin genutzte Schnecke eine Spitze besitzt, die montierbar bzw. demontierbar ist. Diese Bauweise ist üblich, wenn die Einschnecke aus einer Stange oder Rohr oder einem vergleichbaren Profil(soweit im Weiteren Stangen genannt sind, schließt das Rohre und vergleichbare Profile ein) und darauf auswechselbar angeordneten Hülsen besteht, die außen mit der gewünschten Schneckenkontur versehen sind. Durch Auswechselung vorhandener Hülsen gegen Hülsen mit anderer Kontur kann die Wirkung der Schnecke verändert werden. Dabei kann durch Änderung der Schnecken-Steigung der Druck in dem Extruder gesteigert oder verringert werden. Antriebsseitig (das ist üblicherweise das in Strömungsrichtung des Einsatzmaterials/Schmelze vordere Ende) wird die Schnecke mit einem Getriebe gekoppelt. Üblich ist, die Schnecke mit dem Abtriebszapfen des Getriebes zu verspannen. Am austrittsseitigen Schneckenende befindet sich üblicherweise eine Spitze, Aufgabe der Spitze ist, die Schmelze in eine Düse zu lenken. Mit der Spitze können die Hülsen auf der Stange verspannt werden. Anstelle der Spitze können auch andere Teile vorkommen, zum Beispiel Spannteile, die nur die Aufgabe haben, die Hülsen auf der Stange zu verspannen. Im Weiteren schließt die Bezeichnung "Spitzen" auch andere mögliche Teile mit einer Spannwirkung auf die Hülsen der Einschnecke und/oder mit einer Lenkungswirkung auf die Schmelze ein.
   Für die erfindungsgemäße Verlängerung der Schnecke um die Zentralspindel eines Verlängerungsabschnitts/Moduls kann die Spitze ausgewechselt werden oder ein Zentralspindelzwischenstück eingebaut werden.
- bei der Auswechselung der Spitze tritt an die Stelle der bisherigen Spitze eine Spitze, welche die Schnecke zum eine Zentralspindel verlängert. Dann besitzt die Spitze einen Teil, der wie eine Zentralspindel ausgebildet ist, also eine Außenverzahnung aufweist und im Bereich der Außenverzahnung mit Planetspindeln und einer Innenverzahnung im Gehäuse kämmen kann.
- beim Einbau eines Zentralspindelzwischenstückes wird die Spitze von der Einschnecke gelöst und das Zwischenstück mit der Einschnecke verbunden. Dazu ist das Zwischenstück an dem in Strömungsrichtung der Schmelze vorderen Ende wie die Spitze an ihrem in Strömungsrichtung der Schmelze vorderen Ende ausgebildet. Bei einer Verschraubung kann das ein Gewindeloch sein, das mit einem Gewindezapfen an der Einschnecke korrespondiert. Am anderen Ende ist das Zentralspindelzwischenstück in dem Ausführungsbeispiel dann mit einem Gewindezapfen versehen, um mit der vorhandenen Spitze verschraubt werden zu können. Alternativ befindet sich der Gewindezapfen an der Spitze und das Gewindeloch in der Schnecke.

Besonders geringer Verlängerungsaufwand ergibt sich, wenn der bestehende Extruder aus Montagegründen und/oder aus Gründen der Wartung und/oder zur Beseitigung von Störungen und/oder zur Säuberung und/oder im Falle einer Betriebsunterbrechung in Längsrichtung verschiebbar angeordnet ist. Das ist für viele Anlagen unverzichtbar. Wenn die Verschiebbarkeit so groß ist, daß auch nach dem Einbau eines Verlängerungsabschnitts/Moduls in Planetwalzenextruderbauweise noch eine ausreichende Verschiebbarkeit gegeben ist, so ist zu dessen Einbau nur
- der Verlängerungsabschnitt/Modul-Zentralspindel mit der Schnecke des bereits bestehenden Extruders zu verbinden
- das Verlängerungsabschnitt/Modul-Gehäuse mit dem Gehäuse des bereits bestehenden Extruders zu verbinden
- die Verlängerungsabschnitt/Modul-Planetspindeln in den Zwischenraum zwischen dem Verlängeraungsabschnitt/Modul-Gehäuse und der Verlängerungsabschnitt/Modul-Zentralspindel einzuschieben.
Danach kann die Düse an dem Verlängerungsabschnitt/Modul montiert werden.

Eine andere Variante der erfindungsgemäßen Kombination von Einschneckenextruder mit Planetwalzenextruderabschnitt/Modul geht davon aus, daß die Einschneckenextruder mindestens einen Abschnitt aufweisen, der im Falle der Kombination mit einem Planetwalzenextruderabschnitt/Modul ganz oder teilweise entbehrlich ist. Zumindest teilweise entbehrlich werden alle Abschnitte, welche die gleiche Aufgabe wie der zusätzliche Planetwalzenextruderabschnitt/Modul haben. Das sind die für das Mischen, Homogenisieren und Kühlen bestimmten Abschnitte. Ziel der Erfindung ist insbesondere der letzte Abschnitt der Einschnecke vor dem austrittsseitigen Schneckenende. Nach der Erfindung werden die für die entbehrlichen Abschnitte bzw. entbehrlichen Abschnittsteile maßgeblichen Hülsen der Einschnecke von deren Stange gezogen, bis Platz für eine neue Hülse geschaffen ist, die durch eine entsprechende Außenverzahnung eine Zentralspindel bildet und mit umlaufenden Planetspindeln kämmen kann. Zwar ist möglich, die vorhandenen ursprünglichen Gehäuseabschnitte in dem Bereich mit einer Innenverzahnung zu versehen, wo die Zentralspindel-bildende Hülse vorgesehen ist. Vorzugsweise ist jedoch ein im Durchmesser größeres Gehäuse vorgesehen, um mehr Raum für Planetspindeln zu schaffen. Das schließt ein, daß das Gehäuse auch Raum für eine Buchse bietet, die in dem Gehäuse montiert wird und die Innenverzahnung für das Zusammenwirken mit Planetspindeln besitzt. In dieser Variante findet nach der Erfindung zunächst eine Demontage des Einschneckenextruder-Endes und Montage einer neuen, außen verzahnten Hülse statt, bis eine ähnliche Situation wie bei der obiger Variante nach der Montage der Zentralspindel des Verlängerungsabschnitts/Moduls entstanden ist. Anschließend wird ein passendes Gehäuses wie in der vorstehenden Variante montiert und werden die Planetspindeln wie in der vorstehenden Variante in dem Zwischenraum zwischen der außen verzahnten Hülse und dem umgebenden Gehäuse eingesetzt.

In einer weiteren Variante werden Verlängerungen an bestehenden Planetwalzenextrudern vorgenommen. Dazu ist wie in obigen Varianten ein Verlängerungsabschnitt/Modul in Planetwalzenextruderbauweise vorgesehen, der zwischen den bestehenden Planetwalzenextruderabschnitten/Modulen und der Düse angeordnet wird. Der Verlängerungsmodul/Abschnitt kann dabei die gleichen Gehäuseabmessungen und Planetspindelabmessungen wie die bestehenden Planetwalzenextruderabschnitte/Module aufweisen. Es können aber auch andere Längen, vorzugsweise kürze Längen für das Gehäuse und die Planetspindeln vorkommen. Dem ist auch die Länge der Zentralspindel in dem Verlängerungsabschnitt/Modul angepaßt. Entsprechendes gilt für die Abmessungen des Verlängerungsabschnitts/Moduls bei den oben erläuterten Varianten mit bestehenden Einschneckenextruderabschnitten/Modulen.

Für die Verlängerung eines bestehenden Planetwalzenextruderabschnitts/Moduls mit einem Verlängerungsabschnitt/Modul in Plan findet eine Verbindung der Zentralspindel des Verlängerungsabschnittes/Moduls mit der Zentralspindel der bestehenden Planetwalzenextruderabschnitte/Modulen statt. Die Verbindung ist vorzugsweise eine Schraubverbindung. Bei rohrförmig ausgebildeten Zentralspindeln der bestehenden Planetwalzenextruderabschnitte/Module kann die Verbindung durch unmittelbare Schraubverbindung der zu den Zentralspindeln gehörenden außen verzahnten Rohre erfolgen.
Wahlweise kann die Verbindung auch durch einen neuen Anker/Stange erfolgen, der sich durch den Verlängerungsabschnitt/Modul und die bestehenden Planetwalzenextruderabschnitte/Module erstreckt und eine Verspannung der Zentralspindel des bereits bestehenden Planetwalzenextruderabschnitts/Moduls und der Zentralspindel des Verlängerungsabschnitts/Moduls am Abtriebszapfen des zugehörigen Antriebes erlaubt.
Anstelle eines neuen Ankers/Stange kann auch eine Verlängerung des bestehenden Ankers/Stange durch ein Verlängerungsstück erfolgen. Die Verbindung des bestehenden Ankers/Stange mit dem Verlängerungsstück erfolgt vorzugsweise wiederum durch Verschraubung. Bei der Verlängerung eines bestehenden Planetwalzenextruderabschnitts/Moduls durch einen Verlängerungsabschnitt/Modul ist eine Positionshilfe von Vorteil.
Die Positionshilfe erlaubt eine Sicherung der Drehstellung der Zentralspindel des Verlängerungsabschnitts/Moduls gegenüber der bisherigen Zentralspindel. Als Positionshilfe ist zum Beispiel ein Stift geeignet, der die Zentralspindel des bestehenden Planetwalzenextruderabschnitts/Moduls und die Zentralspindel des Verlängerungsabschnitts/Moduls gemeinsam durchdringt. Geeignet für die Durchdringung ist zum Beispiel ein Bereich, in dem die Zentralspindel des Verlängerungsabschnitts/Moduls mit einem Zapfen oder Bund in eine Öffnung der bisherigen Zentralspindel greift. Umgekehrt kann auch ein Bereich für die Durchdringung geeignet sein, in dem die bereits bestehende Zentralspindel mit einem Zapfen oder Bund in eine Öffnung der Zentralspindel des Verlängerungsabschnitts/Moduls greift.
Die Positionshilfe kann auch eine Stirnverzahnung an der bestehenden Zentralspindel sein, mit der die bestehende Zentralspindel in eine korrespondierende Stirnverzahnung an dem Verlängerungsabschnitt/Modul greift.
Vorzugsweise wird die Zentralspindel des Verlängerungsabschnitts/Moduls gegenüber der bestehenden Zentralspindel in einer Drehstellung gehalten, in der die aneinander stoßenden Zähne beider Spindeln miteinander fluchten.

Wahlweise kann das Gehäuse des Verlängerungsabschnitts/Moduls auch so positioniert werden, daß die Zähne der Innenverzahnung des Gehäuses des Verlängerungsabschnitts/Moduls mit den Zähnen der Innenverzahnung der bereits bestehenden Planetwalzenextruderabschnitt/Moduls fluchten. Dann können nach Entfernen des Anlaufringes an dem bestehenden austrittsseitigen Planetwalzenextruderabschnitt/Modul die Planetspindeln in dem Verlängsabschnitt/Modul und am austrittsseitigen Ende des bestehenden Planetwalzenextruderabschnitt/Modul gegen Modul-übergreifende Planetspindeln ausgewechselt werden.

Mit der außen verzahnten Zentralspindel des Verlängerungsabschnitts/Moduls korrepondieren dann Planetspindeln und ein innen verzahntes Gehäuse wie in den oben erläuterten anderen Varianten. Dabei gleichen die Planetspindeln an einem Anlaufring, der im Gehäuse gehalten ist und wird das Gehäuse mittels eines üblichen Flansches an dem gegenüberliegenden Flansch des bestehenden Zentralspindelabschnitts/Moduls verschraubt oder in sonstiger Weise befestigt. Die Länge der Planetspindeln ergibt sich in üblicher Weise aus der Länge des zu dem Verlängerungsabschnitt/Modul gehörigen Gehäuse. Dabei kann der Verlängerungsabschnitt eine Kopie eines bereits bestehenden Verlängerungsabschnitts/Moduls sein. Die zugehörige Länge kann jedoch wesentlich geringer sein, wenn sich die Aufgabe des Verlängerungsabschnitts/Moduls zum Beispiel nur auf eine abschließende Kühlung oder Mischung beschränkt. Je nach Umfang der Aufgaben des Verlängerungsabschnitts/Moduls kann die Länge auch größer sein.

Soweit an dem Zentralspindelende eine Spitze oder ein anderes Teil befestigt ist, kann dieses Teil nach Montage der Zentralspindel des Verlängerungsabschnitts/Modul an deren Ende wieder befestigt wird. Wahlweise ist auch eine Zentralspindel für den Verlängerungsabschnitt/Modul mit einer Spitze oder anderem Teil vorgesehen.

In noch einer weiteren Variante zur Verlängerung einer vorhandenen Extrusionsstrecke mit einem Extruderabschnitt/Modul ist die Bildung einer Tandemanlage vorgesehen. Dabei wird der Verlängerungsabschnitt/Modul zum Sekundärextruder und damit Bestandteil einer Tandemanlage. Der bestehende Extruderabschnitt/Modul ist der Primärextruder.
Vorteilhafterweise, kann der Primärextruder jede beliebige Bauart haben. Das schließt auch Doppelschneckenextruder ein.
Auch der Sekundärextruder kann jegliche Bauart haben, vorzugsweise ist der Sekundärextruder ein Planetwalzenextuderabschnitt/Modul.
In einer Tandemanlage werden Primärextruder und der Sekundärextruder getrennt angetrieben. Die damit verbundenen Vorteile sind hinlänglich bekannt.

Sofern dem Sekundärextruder noch ein weiterer, unabhängig antreibbarer Extruder nachgeschaltet ist, spricht man von einer Kaskadenanlage. Vorteilhafterweise kann der Sekundärextruder mit jedem Primärextruder in jeder Bauweise, auch mit einem Primärextruder in Doppelschneckenextruderbauweise problemlos zusammen arbeiten.

In einer erfindungsgemäßen Tandemanlage, kann der Sekundärextruder so angeordnet sein, dass seine Längsachse parallel zur Längsachse des Primärextruders verläuft. Bei horizontalem Primärextruder ergibt sich dann ein horizontal angeordneter Sekundärextruder.
Der Sekundärextruder kann aber auch anders angeordnet sein, nämlich mit seiner Längsachse quer zur Längsachse des Primärextruders. Bei horizontaler Anordnung des Primärextruders kann das eine vertikale Anordnung des Sekundärextruders zur Folge haben. Die vertikale Anordnung des Sekundärextruders gegenüber einem horizontal angeordneten Primärextruder kann erhebliche räumliche Vorteile entfalten, wenn die Ausdehnung des Sekundärextruders in Längsrichtung des Primärextruders größer als quer dazu ist.
In jeder Anordnung können beide Extruder durch eine Schmelzeleitung miteinander verbunden sein. Von Vorteil ist dabei eine Temperierung der Schmelzeleitung, damit im Falle einer Betriebsunterbrechung keine Schmelze in der Leitung einfriert.
Günstig ist, wenn die beiden Extruder so miteinander verbunden werden, daß der Primärextruder an der Austragöffnung unmittelbar mit der Eintragöffnung des Sekundärextruders verbunden ist. Dann erübrigt sich eine Verbindungsleitung, die auch noch zu temperieren ist, um im Falle einer Betriebsunterbrechung ein Einfrieren der Schmelze in der Verbindungsleitung zu verhindern.
Je nach vertikaler oder horizontaler Anordnung der Extruder ergibt sich bei der unmittelbaren Berührung von Primärextruder und Sekundärextruder ein anderer Raumbedarf für die Tandemanordnung. Dabei ist der bestehende Extruder, der Primärextruder in der Tandemanlage werden soll, auf die Düse ausgerichtet und üblicherweise zugleich horizontal angeordnet. Für den Sekundärextruder bestehen dann insbesondere folgende Möglichkeiten
- nach Beabstandung von Primärextruder und Düse wird der Sekundärextruder zwischen Primärextruder und Düse angeordnet.
- die bisherige Austragöffnung des Primärextruders wird verschlossen. In den Gehäusemantel des Primärextruders wird eine Austragöffnung eingearbeitet, an die der Sekundärextruder mit seiner Eintragöffhung angeflanscht wird, so daß die im Primärextruder erzeugte Schmelze in den Senkundärextruder strömt und dort in gewünschter Form gekühlt oder gemischt oder in sonstiger Form bearbeitet wird. Eine sonstige Bearbeitung kann auch die Einmischung von Treibmittel oder die Einmischung von Vernetzungsmittel oder eine Entgasung sein.
   Die in dem Sekundärextruder bearbeitete Schmelze wird in die Düse geleitet. Günstig ist, wenn der Sekundärextruder dazu mit der Austragöffnung an den Eingang der Düse angeflanscht ist. Das läßt sich auch erreichen, wenn der Austrag und der Eintrag am Sekundärextruder sich an unterschiedlichen Enden befinden. Dann kann der Austrag des Sekundärextruders gleichwohl noch am Düseneintrag angeflanscht werden, wenn die Mitte der Austragöffnung der Düse entsprechenden Abstand von der Mitte des Primärextruders hat. Dabei ist günstig, wenn die Mitte der Austragöffnung am Primärextruder in der Horizontalen liegt und der Sekundärextruder gleichfalls horizontal angeordnet ist und zur Düse führt.
   Soweit der Mittenabstand unerwünscht ist und die Düse mit dem Primärextruder fluchten soll, kann die Schmelze mittels einer Leitung zu der fluchtenden Düse geführt werden. Wahlweise kann die Schmelze auch mittels eines Bypasses im Gehäuse des Sekundärextruders zurück geführt werden.. Der Bypass ist eine Leitung im Gehäuse des Sekundärextruders. Im Gehäuse des Sekundärextruders gibt es eine Temperierung, die vorteilhafterweise auch für den Bypass genutzt werden kann.
- zwischen die Austragöffnung des Primärextruders und die Eingangsöffnung der Düse wird ein Zwischenteil montiert, das die Aufgabe hat, die Schmelze zu dem Sekundärextruder zu lenken. Das Zwischenteil kann schmal sein, so daß nur ein geringer Verlängerungsbedarf besteht.
   Vorteilhafterweise kann der Sekundärextruder in der Ausführung mit dem Bypass bzw. der Leitung eine beliebige Stellung zwischen horizontal und vertikal annehmen.

Für eine vertikale Anordnung des Sekundärextruders kann auch auf eine Bauweise, die für Laborextruder entwickelt worden ist, zurück gegriffen werden. Bei dieser Bauweise ist der Sekundärextruder an dem nach oben weisenden Ende offen, so dass die noch weiter zu kühlende Schmelze aus dem Primärextruder einfach in den Sekundärextruder eintreten kann und von den Planetspindeln bzw. von der Zentralspindel nach unten gezogen wird.
Dieser Extruder bzw. Extruderabschnitt/Modul besitzt alle typischen Merkmale einer Planetwalzenextruderbauweise mit außen verzahnter Zentralspindel, außen verzahnten Planetspindel und innen verzahntem, umgebenden Gehäuse, wobei die Planetspindeln um die Zentralspindel umlaufen und gleichzeitig mit der Verzahnung der Zentralspindel und der Verzahnung des Gehäuses kämmen. Die Planetspindeln gleiten während des Umlaufs an dem in Extrusionsrichtung vorderen Ende an einem Anlaufring.
Dabei wird die Zentralspindel von oben angetrieben und die gekühlte Schmelze in axialer Richtung der Zentralspindel unten abgezogen. Der Antrieb der Zentralspindel kann auch von unten erfolgen. Dann wird die gekühlte Schmelze seitlich abgezogen.

Sofern es bei dem Übergang vom Primärextruder in den Sekundärextruder darauf ankommt, die Schmelze vor der Umgebungsluft abzuschirmen, ist eine Einhausung des Überganges vom Primärextruder zum Sekundärextruder möglich. Diese Einhausung kann zugleich genutzt werden, um eine Entgasung der Schmelze vorzunehmen. Dann ist die Einhausung vorzugsweise mit einer Saugleitung verbunden, so dass in dem Übergang ein Unterdruck besteht, der die Entgasung fördert.

Wahlweise kann die vorstehend beschriebene Technik der Verlängerungsmodule/Verlängerungsabschnitte auch auf eine Ergänzung vorhandener Extruder durch Module/Abschnitte Anwendung finden, die zwischen zwei vorhandenen Extrudermodulen/Abschnitten positioniert werden sollen.
- dabei kann der Verlängerungsmodul mit dem Zwischenstück mit dem zugehörigen Gehäuse, zugehörigen Planetspindeln und Anlaufring an der gewählten Stelle eingesetzt werden, oder
- das Zwischenstück für die Zentralspindel einerseits und das Gehäuse mit Planetspindeln andererseits können an unterschiedlichen Stellen eingesetzt werden. Das heißt, durch das Zwischenstück wird die Zentralspindel verlängert.
Das erlaubt es, das Gehäuse mit den Planetspindeln nach Verlängerung der Zentralspindel auch anderer Stelle zwischen zwei vorhandenen Extruderabschnitten/Modulen einzusetzen. Vorteilhafterweise kann der Extruderabschnitt/Modul dadurch an der optimalen Stelle für die jeweilige Aufgabe wie die Kühlung bzw. nahe der optimalen Stelle für die jeweilige Aufgabe auf der Extrusionsstrecke eingesetzt werden. Zugleich kann die Verlängerung der Zentralspindel an der Stelle erfolgen, welche dafür optimal ist bzw. nahe am Optimum liegt.

Vorzugsweise besitzt ein Verlängerungsabschnitt/Modul in Planetwalzenextruderbauweise ein Gehäuse, das in seinen Abmessungen den Gehäusen anderer Module /Abschnitte angepasst ist, die zu der Extrusionsanlage gehören. Die anderen Module/Abschnitte können eine Einschneckenbauweise oder auch eine Planetwalzenextruderbauweise besitzen. Bei diesen Bauweisen können alle Module/Abschnitte an den Gehäusen bzw. an deren oben beschriebenen Flanschen fluchtend miteinander verbunden werden und durch eine gemeinsame Schnecke/Zentralspindel durchdrungen werden.

Sofern ein Verlängerungsabschnitt/Modul in Planetwalzenextruderbauweise an einem herkömmlichen Extruder in der oben beschriebenen Form angebaut wird, kann sich ergeben, dass die Schmelze zwar mit der richtigen Temperatur aber mit zu geringem Druck aus dem Kühlmodul bzw. aus der Düse austritt. In dem Fall kann es zweckmäßig sein, den gewünschten Druck mit einer nachgeschalteten Schmelzepumpe oder mit einem nachgeschalteten Kurzextruder zu erzeugen. Der nachgeschaltete Kurzextruder ist vorzugsweise ein Einschneckenextruder. Der nachgeschaltete Kurzextruder kann kurz sein, weil er keine andere Leistung als die Druckerhöhung bringen muss. Das heißt dem nachgeschalteten Kurzextruder können die üblichen Teile wie Mischzone, die Homogenisierungszone und sonstige Zonen fehlen.

Wenn in axialer Richtung des ursprünglichen Extruderabschnitts/Moduls zwischen dem zusätzlichen Verlängerungsabschnitt/Verlängerungsmodul noch Raum für den Kurzextruder zum Druckaufbau gegeben ist, kann der Kurzextruder mit dem ursprünglichen Extruder und dem Verlängerungsmodul bzw. Verlängerungsabschnitt fluchten, so daß eine Verbindung/Koppelung des Kurzextruders mit dem Verlängerungsabschnitt/Verlängerungsmodul möglich ist wie sie zwischen dem Verlängerungsmodul/Verlängsabschnitt und dem ursprünglichen Extruder vorgesehen ist.
Soweit es an dem Raum für die vorstehend beschriebene Anordnung fehlt, kann der Kurzextruder als Seitenarmextruder an dem Verlängerungsmodul/Verlängerungsabschnitt angeordnet werden. Das schließt nicht nur eine seitliche Anordnung an dem Verlängerungsmodul/Verlängerungsabschnitt, sondern auch eine Anordnung über oder unter dem Verlängerungsmodul/Verlängerungsabschnitt wie auch eine geneigte Anordnung ein.
Im Unterschied zu herkömmlichen Seitenarmextrudern, die Extrusionsmaterial in einen Extruder eintragen, hat der erfindungsgemäße Seitenarmextruder aber eine andere Förderrichtung, nämlich eine abfördernde Förderrichtung mit der Extrusionsmaterial aus dem Extruder ausgetragen und nachgeordneten Bearbeitungsanlagen mit entsprechendem Druck zugeführt wird. Vorzugsweise besitzt der Kurzextruder die Bauart eines Einschneckenextruders. Der Kurzextruder kann aber auch eine andere Bauart aufweisen.

Beim Umbau vorhandener Anlagen durch Zwischenschaltung eines Verlängerungsabschnitts/Moduls soll der ursprüngliche ExtruderabschnittModul in gleicher Weise mit nachgeordneten Anlagen verbunden sein wie der ursprüngliche Extruder. Entsprechendes gilt, wenn nicht nur ein Verlängerungsabschnitt/Modul, sondern darüber hinaus noch ein Kurzextruder für die Erhöhung des Druckes in dem Extrusionsmaterial zwischengeschaltet wird. Wenn zum Beispiel der ursprüngliche Extruderabschnitt/Modul über eine Schmelzeleitung mit nachgeordneten Anlagen verbunden war, so dient die Schmelzeleitung auch bei der Zwischenschaltung eines Verlängerungsabschnitts/Moduls oder eines Kurzextruders als Anschluß an die nachgeordneten Anlagen.

Die Kühlleistung des erfindungsgemäßen Verlängerungsabschnitts/Moduls kann mit einem oder mehreren der folgenden Merkmale gesteigert werden:
- einen Füllungsgrad von vorzugsweise größer 95%, noch weiter bevorzugt von größer 98% vom Hohlraumvolumen des Extruders
- eine Drossel am Austritt des Verlängerungsabschnitts/Moduls
- Schmelzeeintrag unter Druck, der größer als der Förderdruck der Planetwalzenextruderteile ist
- eine Schmelzepumpe für den Schmelzeeintrag, gegebenenfalls mit vorgeordneter Einschneckenteil zum Schmelzeeintrag, oder
- Seitenarmextruder am Eintritt des Verlängerungsabschnitts/Moduls
- minimierter Eintrag mechanischer Energie in die Schmelze während des Durchlaufes durch den Verlängerungsabschnitt/Modul
- Abstand zwischen den Planetspindeln größer/gleich als deren Außendurchmesser
- reduzierte Drehzahl der Zentralspindel
- reduzierte Verzahnung durch Noppenverzahnung oder Transportspindelverzahnung oder durch Igelverzahnung an den Planetspindeln
- größere Kühlstrecke

Üblicherweise werden Planetwalzenextruder mit einem Füllungsgrad kleiner 90%, vorzugsweise kleiner als 80% von ihrem Hohlraumvolumen im betriebsfertigen Zustand mit allen Planetspindeln und sonstigen Teilen gefahren. Vorzugsweise wird der für die erfindungsgemäße Kühlung vorgesehene Verlängerungsabschnitt/Modul bzw. Sekundärextruder mit 100%iger Füllung/Füllungsgrad des Hohlraumvolumens gefahren. Wo das nicht gelingt, ist eine Füllung/Füllungsgrad von größer 98% vorgesehen; wo auch das nicht gelingt, mit einer Füllung/Füllungsgrad größer 95%.

Die erfindungsgemäße Füllung/Füllungsgrad wird mit einer Drosselung der Schmelzeströmung am Austritt erreicht. Im einfachsten Fall reicht ein entsprechend klein gewählter Düsenquerschnitt schon aus, um die gewünschte Drosselung zu erreichen.
Der Düsenquerschnitt lässt sich zwar auch ändern, zum Beispiel durch auswechselbare Ringe mit unterschiedlichen Öffnungsquerschnitten. Das ist regelmäßig mit einer Umbaumaßnahme verbunden. Eine einstellbare Drossel kann auch durch ein Drosselventil in Strömungsrichtung vor der Düse erreicht werden. Das Drosselventil kann beim Anfahren der Anlage solange ganz oder weitgehend geschlossen gehalten werden, bis sich ein gewünschter Füllungsgrad in dem Verlängerungsabschnitt/Modul (in Planetwalzenextruderbauart) gebildet hat. Dann ist es einfacher, kurzfristig zu einem stabilen Betrieb mit gewünschter Füllung/Füllungsgrad des Abschnitts/Moduls zu kommen.
Die gleiche Wirkung wie mit einem Drosselventil lässt sich mit einer drehzahlsteuerbaren Schmelzepumpe zwischen dem Verlängerungsabschnitt/Modul und der Austrittsdüse erreichen. Die Schmelzepumpe hat den zusätzlichen Vorteil, dass der Schmelzedruck in der Düse in weiten Grenzen verändert werden kann.

Eintrittsseitig kann die gewünschte Füllung/Füllungsgrad durch den Primärextruder oder einen dem Verlängerungsextruderabschnitt/Modul im Sekundärextruder in Extrusionsrichtung vorgeordneten Extruderabschnitt/Modul erreicht werden. Der vorgeordnete Extruderabschnitt/Modul kann beliebige Bauart haben, vorzugsweise hat der vorgeordnete Extruderabschnitt/Modul die Bauart eines Einschneckenextruders. Dabei kann die Einschnecke verhältnismäßig kurz sein, zum Beispiel kann schon eine Länge von 1 bis 2 D ausreichen, wobei D der Schneckenaußendurchmesser ist. Die Einschnecke kann darüber hinaus in der oben erläuterten Form Bestandteil der Zentralspindel sein, die sich dann als Einschnecke durch den Extruderteil erstreckt, der dem Verlängerungsabschnitt/Modul vorgeschaltet ist.

Eintrittsseitig kann die Schmelze auch durch einen Seitenarmextruder in den Sekundärextruder eingespeist werden. Der Seitenarmextruder hat dabei vorzugsweise die Form eines Doppelschneckenextruders. Dabei kann der Schmelzeeintrag quer zur Gehäusemittelachse und durch das Gehäuse des Verlängerungsabschnitts/Moduls erfolgen. Der Seitenarmextruder besitzt dann einen eigenen Antrieb. Vorzugsweise ist der Antrieb regelbar, so dass die Schmelzezuführung nach Bedarf gesteigert oder reduziert werden kann.

Seitenarmextruder sind zum Beispiel in folgenden Druckschriften beschrieben: WO2008/058609, WO2013/159801, WO2014/056553, WO2017/001048, WO2017/028936, DE10054854, DE10356423, DE102006001171, DE102008018686.

Anstelle des Seitenarmextruders können auch Schmelzepumpen für den Schmelzeeintrag in den Sekundärextruder verwendet werden.

Bei einem erfindungsgemäßen Verlängerungsabschnitt/Modul/Sekundärextruder ist es von Vorteil, möglichst wenig mechanische Energie während des Durchlaufes durch den Kühlextruder in die Schmelze einzutragen. Die eingetragene Energie müsste durch die Kühlung zusammen mit der überschüssigen Energie aus der vorhergehenden Schmelzeaufbereitung wieder abgeführt werden.
Der Energieaufwand für die Bewegung der Zentralspindel und der umlaufenden Planetspindeln kann durch größeren Abstand der Planetspindeln auf deren Umlaufbahn reduziert werden. Während der Planetspindelabstand bei normaler Schmelzeaufbereitung, zum Beispiel bei der Kunststoffaufbereitung üblicherweise wesentlich kleiner als der halbe Planetspindelaußendurchmesser ist, ist nach der Erfindung für den Betrieb eines erfindungsgemäßen Verlängerungsabschnitts/Moduls/Sekundärextruders vorzugsweise ein Abstand zwischen zwei benachbarten Planetspindeln auf deren Umlaufbahn um die Zentralspindel vorgesehen, der mindestens gleich dem Außendurchmesser der Planetspindeln ist. Noch weiter bevorzugt ist der Abstand mindestens das 1,5fache des Planetspindelaußendurchmessers.

Durch den größeren Abstand der Planetspindeln ergibt sich eine stark reduzierte Planetspindelzahl. Die Erfindung berücksichtigt jedoch auch, dass mit der reduzierten Planetspindelzahl ein reduzierter Materialaustausch an den Kühlflächen des Planetwalzenextruderabschnitt/Moduls/Sekundärextruders einhergeht. Vorzugsweise ist der Abstand zwischen den Planetspindeln deshalb nicht größer als das 2fache des Planetspindelaußendurchmessers.

Nach der Erfindung wird die Kühlung so dosiert, dass die Schmelze im Tiefsten zwischen den Zähnen der Innenverzahnung im Gehäuse/Buchse sich nicht so verfestigt, dass sie die Drehung der bewegten Teile blockiert. Mit zunehmender Abkühlung wird die Schmelze im Regelfall zähflüssiger. Der Motor muss eine größere Leistung zur Einhaltung der gewünschten Drehzahl aufbringen. Das äußert sich in einer größeren Stromaufnahme des Motors. Deshalb lässt sich die Kühlung an Hand der Stromaufnahme des Antriebsmotors für den Verlängerungsabschnitt/Modul/Sekundärextruder kontrollieren/steuern. Das verhindert das Blockieren der bewegten Teile.

Sofern mit der vorstehenden Regelung/Einstellung eine gewünschte Reduzierung der Schmelzetemperatur nicht erreicht wird, wird nach der Erfindung die Kühlstrecke verlängert und/oder die Verweilzeit der Schmelze in der Kühlung auf anderem Wege verlängert.
Die Verlängerung der Extrusionsstrecke erfolgt durch Verlängerung des Extruders.
Bei modular aufgebautem Verlängerungsabschnitt/Modul kann die Verlängerung auch durch Anbau eines weiteren Abschnitt/Moduls erfolgen. Dazu wird an das vorhandene Gehäuse eines Kühlmoduls ein weiteres Gehäuse so angebaut, dass sich überlange Planetspindeln durch beide Gehäuse oder noch mehr Gehäuse erstrecken können. Dabei können die Buchsen der Module mit Ihrer Verzahnung so ausgerichtet werden, dass eine überlange Planetspindel gleichzeitig mit der Innenverzahnung der einen Buchse und mit der Innenverzahnung der anderen Buchse kämmen kann.
Nach der Erfindung wird dann vorzugsweise genutzt, dass die Innenverzahnung der Buchsen eine ganze Zähnezahl besitzt (an der Innenfläche der Buchse sind umlaufend ganze Zähne nebeneinander angeordnet, die parallel zueinander von einem Buchsenende zum anderen Buchsenende verlaufen). Um einen einwandfreien Eingriff der Planetspindel in die Innenverzahnung benachbarter Buchsen zu bewirken, werden die Buchsen auf einen bestimmten Abstand gebracht, bei dem die Planetspindeln gleichzeitig in die Verzahnung beider Buchsen greifen. Ausgehend von einer immer gleicher Position der Buchsen in den Modulgehäusen kann der Abstand aus der Steigung der Zähne und deren Abmessungen berechnet werden kann.
Der Abstand lässt sich auch empirisch ermitteln, indem zum Beispiel
- zunächst die Zentralspindel am Extruderantrieb montiert wird,
- dann von den vorgesehenen Planetwalzenextrudermodulen das in Extrusionsrichtung erste Gehäuse montiert wird,
- dann das in Extrusionsrichtung nächste (zweite) Gehäuse über die Zentralspindel geschoben wird,
- dann zwischen die Zentralspindel und das zweite Gehäuse eine Planetspindel (besser mehrere, um die Zentralspindel gleichmäßig verteilte Planetspindeln) geschoben wird, bis die Planetspindel an die Buchse des zweiten Gehäuses stößt
- dann der Abstand der Gehäuse unter Drehung der Planetspindel verändert wird, bis die Planetspindel mit einem Zahn in die Verzahnung der Buchse des ersten Gehäuses greift.
   Der sich dabei ergebende Abstand der Buchsen kann für die Fertigung eines Zwischenstückes genutzt werden, mit dem der Zwischenraum zwischen beiden beabstandeten Buchsen in axialer Richtung ganz und in radialer Richtung mindestens teilweise geschlossen wird. Der Abstand zwischen den Buchsen bestimmt die axiale Länge eines Zwischenstückes zwischen beiden Gehäusen. Das Zwischenstück kann verzahnungsfrei die umlaufenden Planetspindeln umgeben. Das Zwischenstück kann aber wie die Buchsen innen verzahnt sein und die Lücke zwischen beiden Buchsen so überbrücken, dass eine Verzahnungslänge wie bei einer einteiligen Buchse entsteht, auf der die beiden oben beschriebenen Gehäuse aufgeschrumpft sind -dann werden die benachbarten Gehäuse an den Flanschen miteinander verspannt, so dass das Zwischenstück zwischen den benachbarten Gehäuseenden eingespannt wird.

Ein für eine Baugröße ermitteltes Zwischenstück kann in der Ausführung auch für gleiche andere Planetwalzenextrudermodule genutzt werden.

Nach der Erfindung kann auch zweckmäßig sein,
- zwei Modulgehäuse auf einer überlangen Buchse aufzuschrumpfen. Das kann mit Zwischenstück oder ohne Zwischenstück erfolgen. Das Zwischenstück hätte dann vorzugsweise die Aufgabe, die Buchsen in der Lücke zwischen den aufgeschrumpften Gehäusen vor Biegelasten und anderen Lasten zu schützen.

Wahlweise kann auch ein Extruderabschnitt, der einer früher gewünschten Kühlstrecke angepasst war, zur Verlängerung mit einem Kühlmodul kombiniert werden. Dann wird der zu verlängernde Extruderabschnitt wie ein Extrudermodul behandelt.

Der in oben beschriebener Weise verlängerte Kühlextruderabschnitt/Modul bedarf auch einer verlängerten Zentralspindel. Die verlängerte Zentralspindel kann eine Sonderanfertigung beinhalten. Es ist auch möglich, die bisherige Zentralspindel zu verlängern, wenn die Zentralspindel ihrerseits aus Abschnitten zusammen gesetzt ist. Die Abschnitte sind dann vorzugsweise aus Hülsen zusammen gesetzt, die mit einem Zuganker gegeneinander verspannt werden. Dabei muss das Drehmoment nicht allein durch den Reibungsschluss zwischen den Hülsen übertragen werden. Die Hülsen können zusätzlich einen Formschluss besitzen, indem sie an einem Ende mit einem Gewindezapfen und am andern Ende mit einem Gewindeloch versehen sind, so dass die einen Hülsen mit dem Zapfen in das Gewindeloch der anderen Hülse geschraubt werden können.

Ein anderer Weg zur Verlängerung der Verweilzeit sieht vor, dass die Schmelze in dem Verlängerungsabschnitt/Modul/Sekundärextruder entsprechend lang umgewälzt wird und dabei nur ein entsprechend kleiner Teil der Schmelze zugeführt und abgeführt wird.
Die Umwälzung kann bei entsprechend hohem Hohlraumvolumen durch die Zentralspindel und die umlaufenden Planetspindeln bewirkt werden, indem der Schmelzeeintrag und der Schmelzeaustrag geregelt werden. Der Austrag kann mit einem Ventil gut geregelt werden.
Die Umwälzung kann bei üblichem Füllungsgrad des Planetwalzenextruders erfolgen. Vorzugsweise wird jedoch mit einem möglichst höhen Füllungsgrad gearbeitet. Je größer der Füllungsgrad ist, desto größer wird die Schmelzmenge im Extruder.

Zur Verringerung der Förderwirkung des Planetwalzenextruders können auch Planetspindeln in dem erfindungsgemäßen Verlängerungsabschnitt/Modul/Sekundärextruder Verwendung finden, die ganz oder teilweise als Noppenspindeln oder als Transportspindeln oder als Igelspindeln ausgebildet sind. Mit solchen Spindeln wird weniger mechanische Energie in die Schmelze eingetragen, die im Wege der Kühlung wieder ausgetragen werden muss.

Bei der Ausbildung als Noppenspindeln unterscheiden sich die Planetspindeln von Planetspindeln in Normalverzahnung dadurch, dass nach Schneiden der üblichen Normalverzahnung zusätzlich gegenläufige Zähne in die Planetspindeln geschnitten werden, welche die vorher geschnittenen Zähne kreuzen. Dadurch bleiben Noppen als Zahnbesatz übrig. Die Noppenverzahnung ist beschrieben in der WO2014/056553, WO2011/091966, WO2017/001048.

Die Transportspindeln unterscheiden sich von Planetspindeln in Normalverzahnung dadurch, dass nach Schneiden der üblichen Normalverzahnung einzelne Zähne ganz oder teilweise aus den Planetspindeln herausgearbeitet werden. Dabei kann die Zähnezahl einer Planetspindel bis auf drei Zähne und sogar bis auf einen Zahn reduziert werden. Solange mehrere Zähne von dem Zahnbesatz einer Noppenspindel verbleiben, sind die Zähne vorzugsweise gleichmäßig am Umfang der Noppenspindel verteilt. Überraschenderweise kann jedoch eine Noppenspindel mit einem einzigen Zahn verwendet werden, weil der einzige Zahn aufgrund der Schrägverzahnung sich wie ein Gewindegang um die Planetspindel herumwindet.
Die Transportspindeln sind in der Patentanmeldungen EP10006066, DE12006033089, EP1844917 beschrieben.

Die Igelspindeln entstehen dadurch, daß in normal verzahnte Planetspindeln in Abständen Nuten eingearbeitet werden, die in seitlicher Ansicht der Planetspindeln senkrecht zu deren Längsachse verlaufen.

Zu der erfindungsgemäßen Schmelzekühlung im Verlängerungsabschnitt/Modul/Sekundärextruder kann auch eine reduzierte Drehzahl der Zentralspindel beitragen. Für die reduzierte Drehzahl wird weniger Motorleistung benötigt. Das heißt, es wird weniger Energie in die Schmelze eingetragen, die anschließend durch Kühlung wieder entfernt werden muss. Die übliche Drehzahl der Zentralspindel beträgt je nach Baugröße des Planetwalzenextruders

| Baugröße | Drehzahl in Upm |
|---|---|
| 70mm | bis 220 |
| 100mm | bis 220 |
| 120mm | bis 220 |
| 150mm | bis 115 |
| 180mm | bis 80 |
| 200mm | bis 80 |
| 250mm | bis 80 |
| 300mm | bis 80 |
| 400mm | bis 80 |

Erfindungsgemäß wird die Motordrehzahl in Abhängigkeit von dem Material und dessen Viskosität beim Extrudieren um mindestens 10%, vorzugsweise um mindestens 20%, noch weiter bevorzugt um mindestens 30% und höchst bevorzugt um mindestens 40% reduziert.

Bei allen erfindungsgemäßen Maßnahmen zur Reduzierung des Energieeintrages kann die Verwendung einer Schmelzpumpe oder eines Seitenarmextruders, aber auch eine vorgeschalteten Einschnecke von Vorteil sein. Mit der Schmelzepumpe, dem Seitenarmextruder und der vorgeschalteten Einschnecke kann in dem Verlängerungsabschnitt/Modul/Sekundärextruder ein Druck erzeugt werden,
- der auch zusammen mit einer geringen Förderwirkung der Planetwalzenextruderteile in dem Kühlmodul noch einen ausreichenden Schmelzetransport in dem Kühlmodul/Abschnitt sicher stellt
- der auch ohne nennenswerte Förderwirkung der Planetwalzenextruderteile noch einen ausreichenden Schmelzetransport in dem Kühlmodul/Abschnitt sicher stellt
- der mit einer Förderrichtung, die gegen die Förderwirkung der Planetwalzenextruderteile gerichtet ist (entgegen gerichtete Förderwirkung), deren Förderwirkung überwindet und einen ausreichenden Schmelzetransport durch den Kühlmodul/Abschnitt sicher stellt(wird als Überfahren der Planetwalzenextruderteile bezeichnet).

Eine entgegen gerichtete Förderwirkung der Planetwalzenextruderteile bewirkt eine stärkere Mischung der Schmelze. Die entgegen gerichtete Förderwirkung der Planetwalzenextruderteile kann bei herkömmlichem Eintrag der Schmelze am antriebsseitigen Ende des Extruders erreicht werden, wenn die Förderrichtung des Extruders umgekehrt wird. Im einfachsten Fall kann dazu eine Umkehrung der Drehrichtung ausreichen.
Zugleich wird entweder der Pumpendruck so groß gehalten, dass die Planetspindeln an den bisherigen Gleitringen anliegen, oder die Gleitringe werden bei niedrigerem Pumpendruck am gegenüber liegenden Ende der Planetspindeln im Extruder angeordnet, so dass die Planetspindeln unter dem Druck der Zentralspindeln wieder an Gleitringen anliegen.
Im Falle der Verwendung eines Seitenarmextruders anstelle einer Pumpe gilt Entsprechendes.

Vorzugsweise wird bei entgegen gerichteter Förderwirkung die bisherige Förderrichtung des Planetwalzenextruders beibehalten, so dass der Planetwalzenextruder weiter in Richtung seines Austragendes fördert.

Die Pumpe wird jedoch nicht mehr antriebsseitig sondern am gegenüberliegenden Extruderende angeordnet, vorzugsweise vor dem Austragende. Durch das frühere Austragende wird keine gekühlte Schmelze mehr ausgetragen. Vielmehr wird die zu kühlende Schmelze durch dieses Ende eingetragen. Zum Austragen der Schmelze ist dann antriebsseitig eine Öffnung im Planetwalzenextrudergehäuse vorgesehen. Bei entsprechend hohen Pumpendruckes können die Planetspindeln dann mit dem antriebsseitigen Planetspindelende an den antriebsseitig angeordneten Gleitringen gleiten. Bei geringerem Pumpendruck können die Planetspindeln mit dem gegenüberliegenden Ende wie bisher an Gleitringen gleiten.
Bei Verwendung eines Seitenarmextruders anstelle einer Pumpe wird das bisherige Austragende des Extruders mit einem Deckel verschlossen. Im Übrigen ergeben sich die gleichen Verhältnisse wie bei Verwendung einer Pumpe.

Auf die Strömungsverhältnisse im Extruder können verschiedene Faktoren Einfluss nehmen. Dazu gehören insbesondere
- Ausbildung der Planetspindeln
- Abstand der Planetspindeln. Je größer der Abstand ist, desto stärker wird der Einfluß der Pumpe. Vorzugsweise in ein Abstand von mindestens 1D, noch weiter bevorzugt von mindestens 2D vorgesehen, wobei D der Außendurchmesser der Planetspindeln ist.
- Druckverhältnisse

Die verwendeten Pumpen und Seitenarmextruder sind vorzugsweise in der Drehzahl regelbar. Das erlaubt eine Regelung der Schmelzezuführung. Vorzugsweise ist am Schmelzeaustrag ein regelbares Ventil, wahlweise auch eine Pumpe vorgesehen. In die Regelung sind auch ein drehzahlregelbarer Antrieb für den Planetwalzenextruder und eine Messung der Stromaufnahme sowie eine Temperaturmessung eingeschlossen. Vorzugsweise findet die Temperaturmessung an verschiedenen Stellen des Extruders statt. Mit der Temperaturmessung lassen sich alle Faktoren des Kühlvorganges optimieren, zum Beispiel die Antriebsdrehzahl für den Planetwalzenextruderabschnitt/Modul/Sekundärextruder, die Schmelzezuführung, der Schmelzaustrag, die Kühltemperatur des Kühlmittels.

Der Verlängerungsabschnitt/Modul bietet eine besonders vorteilhafte Kühlung, wenn das Kühlmittel zwischen der Buchse und dem umgebenden Gehäuse in Kanälen geführt ist, welche wie Gewindegänge an der Buchsen-Oberfläche verlaufen und das Kühlmittel zugleich in axialer Richtung der Buchse führen

Nach der Erfindung finden dabei vorzugsweise Buchsen Anwendung, die im Tiefsten zwischen ihren Zähnen der Innenverzahnung und dem Kühlmittel in Abhängigkeit von der Baugröße des Extruders folgende Materialdicke in Millimeter (mm) aufweist

| Baugröße | Materialdicke | bevorzugte Materialdicke |
|---|---|---|
| 70 | kleiner/gleich 4,5 | kleiner/gleich 3 |
| 100 | kleiner/gleich 4,5 | kleiner/gleich 3 |
| 150 | kleiner/gleich 5 | kleiner/gleich 3,5 |
| 180 | kleiner/gleich 5,7 | kleiner/gleich 3,6 |
| 200 | kleiner/gleich 5,6 | kleiner/gleich 3,6 |
| 250 | kleiner/gleich 5,7 | kleiner/gleich 3,7 |
| 280 | kleiner/gleich 6 | kleiner/gleich 4 |
| 300 | kleiner/gleich 6 | kleiner/gleich 4 |
| 400 | kleiner/gleich 6,5 | kleiner/gleich 4,5 |

Als Baugröße wird der Teilkreisdurchmesser der Innenverzahnung im Gehäuse/Buchse angesehen. Die vorstehenden Maße sollen sowohl dann Anwendung finden,
- wenn die Kanäle in die Innenwand des Gehäuses eingearbeitet sind,
- als auch wenn die Kanäle in die Außenfläche der Buchse eingearbeitete sind. Dann kommt es auf den geringsten Abstand zwischen dem Tiefsten zwischen den Zähnen und dem Tiefsten der Kanäle an.
Solche dünnen Buchsen sind durch Anwendung einer Funkenerosionstechnik bei der Herstellung der Innenverzahnung möglich, wie sie beschrieben ist in DE102013000708, DE102012006169, DE102010026535, DE102009059912, DE102007050466, DE102004048440, DE10354172.

Vorzugsweise sind die Buchsen außen mit Nuten versehen. Die Buchsen können ebenso wie die Innenverzahnung durch Funkenerosion mit den kanalbildenden Nuten versehen werden. Wenn die Nuten jedoch vor der Innenverzahnung hergestellt werden, lassen sich die Nuten auch auf einer Drehbank oder Fräsbank einarbeiten.
In den kanalbildenden Nuten fließt das Kühlmittel von einem Buchsenende zum anderen Buchsenende. Die Nuten verlaufen mit einer Steigung zur Buchsenmittelachse wie die Innenverzahnung. Die Steigung der Nuten kann die gleiche wie die der Innenverzahnung sein. Die Steigung kann jedoch auch größer oder kleiner sein. Die Nuten können wie die Innenverzahnung mehrgängig sein. Bei der Mehrgängigkeit verlaufen mehrere Kanäle nebeneinander auf der Buchse. Je mehr Gänge vorgesehen ist, desto besser wird das Kühlmittel geführt.

Im Falle der in die Buchsenaußenfläche eingearbeiteten Kanäle bezieht sich die vorstehenden Dickenangaben auf die geringste Materialdicke, die sich zwischen dem Tiefsten der außen an den Buchsen vorgesehenen Nuten/Kanäle und dem Tiefsten zwischen zwei Zähnen der Innenverzahnung der Buchsen findet.

Mit den außen genuteten Buchsen korrespondieren Gehäuse mit einer glatten Innenbohrung zur Aufnahme der Buchsen. Nach der Montage der Buchsen im Gehäuse sind die Nuten außen geschlossen, so dass geschlossene Kanäle entstanden sind. Die Montage erfolgt vorzugsweise durch Aufschrumpfen der Gehäuse auf den Buchsen.

Die erfindungsgemäß dünnen Buchsen haben für die Kühlung eine große Bedeutung. Sie verkürzen den Wärmefluss, so dass sich die Temperatur schneller und damit genauer regeln lässt.
Für die Temperierung ist außerdem günstig, wenn eine Vielzahl von Kanälen sich an der Außenfläche der Buchsen entlang windet. Dadurch können die Buchsen gleichmäßig temperiert werden. Je größere die dabei zu transportierende Wärmemenge ist, desto größer wird der Temperaturunterschied zwischen dem Kühlmittel und dem Extrusionsgut im Extruder gewählt. Ferner kann mit der Fließgeschwindigkeit des Kühlmittels Einfluss auf die Kühlung genommen werden.

Vorzugsweise wird die Kühlung zwischen den Buchsen und dem umgebenden Gehäuse mit einer Kühlung der Zentralspindel ergänzt.
Dazu besitzt die Zentralspindel vorzugsweise zwei konzentrisch ineinander angeordnete Rohre, zwischen denen ein Ringraum besteht. Das äußere Rohr ist außen mit einer Verzahnung versehen oder trägt eine oder mehrere außen verzahnte Hülsen, welche zusammen die Verzahnung der Zentralspindel bilden. Das innere Rohr wird von einem Anker durchdrungen, mit dem die Zentralspindel an dem Abtriebszapfen des Antriebes verspannt ist.

Die Kühlung der Zentralspindel wird vorzugsweise mit dem gleichen Kühlmittel wie die Kühlung zwischen der Buchse und dem umgebenden Gehäuse bewirkt. Das Kühlmittel kann durch das innere Rohr zur Zentralspindelspitze und durch den Zwischenraum zwischen äußerem Rohr und innerem Rohr wieder zurückströmen. Oder das Kühlmittel kann durch den Zwischenraum zwischen äußerem Rohr und innerem Rohr zur Zentralspindelspitze strömen und von dort durch das innere Rohr wieder zurückströmen.

Als Kühlmittel wird vorzugsweise Wasser verwendet, soweit möglich.
Bei höheren Temperaturen, für die Wasser als Temperierungsmittel nicht mehr geeignet ist, kommt Öl zum Einsatz. Bei niedrigen Temperatur wir vorzugsweise Wasser verwendet, dem ein Frostschutzmittel wie bspw. Glycol zugemischt ist. Bei Temperaturen unter Null Grad Celsius kann auch ein Öl wie zum Beispiel Siliconöl Anwendung finden.
Die Rückkühlung des Kühlmittels hängt von der Temperatur des aus dem Extruder wieder austretenden Kühlmittels ab. Bei hoher Temperatur kann die Rückkühlung mittels eines Wärmetauschers erfolgen, der mit Umgebungsluft durchströmt wird. Bei niedrigen Temperaturen findet die Rückkühlung mit einem Verdampfer statt, der mit hochgespanntem Gas betrieben wird.

Nach der Erfindung kann jeder gewünschte Temperaturverlauf über der Länge der Kühlstrecke eingehalten werden, indem über die Länge der Kühlstrecke mehrere Kühlkreise in Extrusionsrichtung des Planetwalzenextruders hintereinander angeordnet sind. Dazu können die von einem Ende des Kühlmoduls/Abschnitts bis zum anderen Ende des Kühlmoduls/Abschnitts führenden Kanäle in einzelne Kanalabschnitte unterteilt sein und ist jedem Kanalabschnitt ein eigenes Kühlgerät zugeordnet, so dass die verschiedenen Kanalabschnitte unterschiedlich mit Temperierungsmittel beaufschlagt werden können. Das heißt, es kann in jedem der Abschnitte mit einer anderen gewünschten Temperatur gearbeitet werden. Im Falle einer Kühlung mit Wasser, ist jeder Kanalabschnitt mit einem eigenen Wasserkreislauf versehen. Im Falle von Öl als Kühlmittel hat jeder Abschnitt seinen eigenen Ölkreislauf. Im Regelfall ist eine Kühlung mit Wasser ausreichend, weil die Ausgangstemperatur des Extrusionsgutes entsprechend hoch ist.
Wenn das Extrusionsgut aber schon eine Temperatur aufweist, bei der die Kühlwassertemperatur zur Erzeugung eines ordentlichen Temperaturgefälles zweckmäßigerweise eine Temperatur unter Null Grad Celsius besitzen sollte, um ein ordentliches Temperaturgefälle zwischen Extrusionsgut und Kühlwasser zu erzeugen, so kann das Wasser mit Glykol oder dergleichen versetzt sein, um ein Gefrieren in den Leitungen zu vermeiden. Bei noch tieferen Temperaturen des Extrusionsgutes kann der Einsatz von Silikonöl oder dergleichen zweckmäßig sein.
Die Rückkühlung des im Kühlextruder erwärmten, mit Glykol versetzten Kühlwassers erfolgt in einem Wärmetauscher, der mit hoch gespanntem Gas betrieben wird, das im Wärmetauscher entspannt wird.

Die Herstellung eines Kühlmoduls/Abschnitts mit größerer Länge ist nach der Erfindung möglich, weil die zugehörige Innenverzahnung mit der Funkenerosionstechnik hergestellt werden kann. Die Funkenerosionstechnik zur Herstellung der Innenverzahnungen für überlange Planetwalzenextrudermodule ist beschrieben in der WO2014/056553; WO2017/050400; EP1533101; EP1533101; EP2335898; DE433487.
Mit herkömmlicher Technik, bei der die Innenverzahnung gezogen wird, werden die Innengewinde mit zunehmender Länge immer schlechter. Mit solcher Technik lassen sich in der Praxis nur kurze Planetwalzenextruderabschnitte/Module mit ausreichender Qualität herstellen.

Wie oben beschrieben lassen sich gleichwohl aus kurzen Planetwalzenextrudermodulen/Abschnitten durch Aneinandersetzen mehrerer Module/Abschnitte längere Kühlstrecken herstellen. Dabei können die Buchsen der Module/Abschnitte mit Ihrer Verzahnung so ausgerichtet werden, dass eine überlange Planetspindel gleichzeitig mit der Innenverzahnung der einen Buchse und mit der Innenverzahnung der anderen Buchse kämmen kann.

Nach der Erfindung wird dabei genutzt, dass die Innenverzahnung der Buchsen eine ganze Zähnezahl besitzt (an der Innenfläche der Buchse sind umlaufend ganze Zähne nebeneinander angeordnet, die parallel zueinander von einem Buchsenende zum anderen Buchsenende verlaufen). Um einen einwandfreien Eingriff der Planetspindel in die Innenverzahnung benachbarter Buchsen zu bewirken, werden die Buchsen auf einen bestimmten Abstand gebracht, bei dem die Planetspindeln gleichzeitig in die Verzahnung beider Buchsen greifen. Ausgehend von einer immer gleicher Position der Buchsen in den Modulgehäusen kann der Abstand aus der Steigung der Zähne und deren Abmessungen berechnet werden kann.
Der Abstand lässt sich auch empirisch ermitteln, indem zum Beispiel
- zunächst die Zentralspindel am Extruderantrieb montiert wird,
- dann von den vorgesehenen Planetwalzenextrudermodulen das in Extrusionsrichtung erste Gehäuse montiert wird,
- dann das in Extrusionsrichtung nächste (zweite) Gehäuse über die Zentralspindel geschoben wird,
- dann zwischen die Zentralspindel und das zweite Gehäuse eine Planetspindel (besser mehrere, um die Zentralspindel gleichmäßig verteilte Planetspindeln) geschoben wird, bis die Planetspindel an die Buchse des zweiten Gehäuses stößt
- dann der Abstand der Gehäuse unter Drehung der Planetspindel verändert wird, bis die Planetspindel mit einem Zahn in die Verzahnung der Buchse des ersten Gehäuses greift.
   Der sich dabei ergebende Abstand der Buchsen kann für die Fertigung eines Zwischenstückes genutzt werden, mit dem der Zwischenraum zwischen beiden beabstandeten Buchsen in axialer Richtung ganz und in radialer Richtung mindestens teilweise geschlossen wird. Der Abstand zwischen den Buchsen bestimmt die axiale Länge eines Zwischenstückes zwischen beiden Gehäusen. Das Zwischenstück kann verzahnungsfrei die umlaufenden Planetspindeln umgeben. Das Zwischenstück kann aber wie die Buchsen innen verzahnt sein und die Lücke zwischen beiden Buchsen so überbrücken, dass eine Verzahnungslänge wie bei einer einteiligen Buchse entsteht, auf der die beiden oben beschriebenen Gehäuse aufgeschrumpft sind
- dann werden die benachbarten Gehäuse an den Flanschen miteinander verspannt, so dass das Zwischenstück zwischen den benachbarten Gehäuseenden eingespannt wird.

Nach der Erfindung kann auch von Vorteil sein,
- zwei Modulgehäuse auf einer überlangen Buchse aufzuschrumpfen. Das kann mit Zwischenstück oder ohne Zwischenstück erfolgen. Das Zwischenstück hätte dann vorzugsweise die Aufgabe, die Buchsen in der Lücke zwischen den aufgeschrumpften Gehäusen vor Biegelasten und anderen Lasten zu schützen.

Mehrere hintereinander und fluchtend angeordnete Planetwalzenextrudermodule besitzen zwar separate Gehäuse und separate, die Innenverzahnung bildende Buchsen und in der Regel separate Planetspindeln, aber immer eine gemeinsame Zentralspindel. Die gemeinsame Zentralspindel bedingt eine gemeinsame Drehbewegung aller beweglichen Teile.

Durch die Verbindung mehrerer Gehäuse über ein vorstehend beschriebenes Zwischenstück mit einer sich über alle Gehäuse erstreckenden Zentralspindel kann der Hohlraum des Planetwalzenextruders in axialer Richtung um ein Vielfaches vergrößert werden.

Anstelle der axialen Vergrößerung des Hohlraumes und/oder zusätzlich zur axialen Vergrößerung des Hohlraumes kann auch eine radiale Vergrößerung des Hohlraumes durch axiale Vergrößerung erfolgen.

Die radiale Vergrößerung kommt sowohl für den Neubau als auch für den Umbau einer vorhandenen Anlage in Betracht. Die radiale Vergrößerung ist beim Umbau einer bestehenden Extruder/Extrusionsanlage leicht zu erkennen. Während die Gehäuse aller Exrtruderabschnitte üblicherweise alle den gleichen Durchmesser aufweisen, hat ein erfindungsgemäßer Umbau des Planetwalzenextruderaberschnitts/Moduls einen größeren Gehäusedurchmesser zur Folge.
Beim Neubau mit einem erfindungsgemäß vergrößerten Planetwalzenextruder entsteht in der Regel eine Anlage mit üblichen anderen Extruderabschnitten, die herkömmliche Gehäusegrößen aufweisen, so dass auch an Neubauten die erfindungsgemäße Gehäusevergrößerung augenfällig ist.
Wo keine üblichen anderen üblichen Gehäusegrößen den Vergleichsmaßstab liefern, ist die erfindungsgemäße radiale Vergrößerung insbesondere an den Größenverhältnissen der Planetspindeln bei der Anwendung üblicher Zahnmodule erkennbar. Die Zahnmodule bestimmen bei einer Verzahnung die Abmessungen der Zähne. Das gilt auch für die hier bevorzugte Evolventen-Schrägverzahnung mit 45Grad Neigung des Schrägverlaufes zur Längsachse der verzahnten Spindeln.

Vorteilhafterweise erlaubt die erfindungsgemäße radiale Vergrößerung des Hohlraumes es, bei einem Umbau an der bis dahin in dem Extruder vorgesehenen Zentralspindel festzuhalten, die sich durch alle Extruderabschnitte/Module erstreckt. Bei der Kombination von Planetwalzenextruderabschnitten/Modulen mit einem Füllteil in Einschneckenextruderbauart setzt sich die Zentralspindel als Schnecke in dem Füllteil fort. Mit der "Fortsetzung der Zentralspindel" ist im vorliegenden Fall mitumfasst, dass die Zentralspindel aus Abschnitten zusammengesetzt ist bzw. Abschnitte bildet, wobei dem Füllteil ein entsprechender Schnecken-Abschnitt zugeordnet ist. Mitumfasst ist auch die oben beschriebene Verlängerung.

Desgleichen kann an der bisherigen Aufstellung des Extruders und an vorgeordneten und nachgeordneten Einrichtungen unverändert festgehalten werden.
Dadurch ist eine nachträgliche Vergrößerung des Hohlraumes mit geringem baulichen Aufwand möglich. Dabei finden im Durchmesser größere Planetspindeln mit mehr Zähnen als bei den bisherigen Planetspindeln Anwendung, der Zahnmodul der größeren Planetspindeln bleibt jedoch der gleiche. Der Verzahnungsmodul (auch Zahnmodul genannt) ergibt sich in mm aus dem Quotienten von Teilkreisdurchmesser und Zähnezahl. Der Verzahnungsmodul könnte an sich frei gewählt werden. Um jedoch zu standardisierten Verzahnungswerkzeugen zu kommen, sind die Verzahnungsmodule nach DIN 780 genormt. Die hier vorkommenden Verzahnungsmodule finden sich in folgendem Ausschnitt von DIN 780 mit zusätzlichen Zwischengrößen:
1; 1,25; 1,5; 2; 2,5; 3; 3,5; 4; 5; 5,5; 6; 7; 8; 9; 10; 11; 12

Das die umlaufenden Planetspindeln umgebende Gehäuse wird in der Anpassung seiner Innenverzahnung bzw. der Anpassung der Innenverzahnung seiner Buchse an die umlaufenden Planetspindeln gleichfalls größer, aber der Zahnmodul bleibt gleich.
Wie oben ausgeführt werden die Abmessungen der Verzahnungen dabei durch den Teilkreisdurchmesser und den Zahnmodul bestimmt. Der Teilkreisdurchmesser der Innenverzahnung ergibt sich aus dem Teilkreisdurchmesser der Zentralspindel-Außenverzahnung und dem doppelten Teilkreisdurchmesser der Planetspindeln und dem gewünschten Spiel in der Verzahnung und gegebenenfalls aus einem Korrekturfaktor.

Die Vergrößerung der Planetspindeln ist bei vorgegebenem Verzahnungsmodul davon abhängig, dass eine ganzzahlige Zähnezahl am Planetspindelumfang wie auch bei der Innenverzahnung des Gehäuses bzw. der Gehäusebuchse entsteht.

Vorzugsweise wird zur Vergrößerung der Planetspindeln neben dem Verzahnungsmodul auch die Zähnezahl vorgegeben. Nachfolgend sind verschiedene Baugrößen mit normaler Ausführung (nachfolgend BG genannt) oder in schwerer Ausführung (nachfolgend SBG genannt) mit Standard-Verzahnungsmodulen (nachfolgend SVM genannt) für eine Evolventen-Schrägverzahnung und Standardzähnezahlen (nachfolgend SZZ genannt) an den Planetspindeln sowie die Mindestzähnezahl bei erfindungsgemäßer Vergrößerung (nachfolgend MVG genannt), die bevorzugte Mindestzähnezahl (nachfolgend BMVG genannt), die weiter bevorzugte Mindestzähnezahl (nachfolgend WBMVG genannt) und die höchst bevorzugte Mindestzähnezahl (nachfolgend HBMVG genannt) an Planetspindeln bei erfindungsgemäßer Vergrößerung für die betreffende Baugröße unter Beibehaltung des Standardzahnmoduls wiedergegeben.

| BG | SVM | SZZ | MVG | BMVG | WMVG | HMVG |
|---|---|---|---|---|---|---|
| 30 | 1 | 5 | 6 | 7 | 8 | |
| 50 | 1,5 | 5 | 6 | 7 | 8 | |
| 70 | 2,5 | 5 | 7 | 8 | 9 | 10 |
| 100 | 3 | 6 | 7 | 8 | 10 | 11 |
| 120 | 3 | 7 | 8 | 9 | 10 | 11 |
| 150 | 3 | 7 | 8 | 9 | 10 | 11 |
| 180 | 3; 3,5 | 7 | 8 | 10 | 12 | 14 |
| 200 | 3; 3,5 | 7 | 8 | 10 | 12 | 14 |
| 250 | 3; 3,5 | 7 | 8 | 10 | 12 | 14 |
| 280 | 3,5 | 7 | 8 | 10 | 12 | 15 |
| 300 | 3,5 | 7 | 8 | 10 | 13 | 16 |
| 350 | 3,5 | 7 | 8 | 10 | 13 | 16 |
| 400 | 3,5 | 7 | 8 | 10 | 13 | 17 |
| 450 | | 7 | 8 | 10 | 14 | 18 |
| 500 | | 7 | 8 | 10 | 14 | 18 |
| 650 | | 7 | 8 | 10 | 15 | 20 |
| 800 | | 7 | 8 | 10 | 15 | 20 |
| 1000 | | 7 | 8 | 10 | 15 | 20 |
| 1200 | | 7 | 8 | 10 | 16 | 22 |

| SBG | SVM | SZZ | MVG | BMVG | WMVG | HMVG |
|---|---|---|---|---|---|---|
| 150 | 5,5 | 7 | 8 | 10 | | |
| 200 | 5,5 | 7 | 8 | 10 | | |
| 280 | 5,5 | 7 | 8 | 10 | | |
| 300 | 5,5 | 7 | 8 | 10 | | |
| 400 | 5,5 | 7 | 8 | 10 | | |
| 500 | 5,5 | 7 | 8 | 10 | | |

Die Übersicht zu Planetspindeln mit Standardzähnezahlen zeigt, dass die Vergrößerung der Zähnezahl auf 8 für alle vorkommenden Baugrößen in dem erfindungsgemäßen Bereich liegt. Lediglich bei kleineren Baugrößen von 70mm und 100 mm liegt schon eine Erhöhung der Planetspindelzähnezahl auf 7 im Bereich der Erfindung. Bei noch kleineren Baugrößen von 30 und 50 mm liegt sogar eine Erhöhung der Planetspindelzähnezahl auf 6 im Bereich der Erfindung.
Je geringer die Zähigkeit des Einsatzmaterials ist, desto leichter erfolgt der Austausch von Extrusionsmaterial an den Kühlflächen. Ein anderer Vorteil geringer Zähigkeit ist die geringe mechanische Belastung der bewegten Teile in dem zur Kühlung bestimmten Extruderabschnitt/Modul/Sekundärextruder. Wahlweise findet der erfindungsgemäße
Verlälngerungsabschnitt/Modul/Sekundärextruder kann auch Anwendung finden, wenn keine wesentliche Verformungsarbeit mehr zu leisten ist, um die zu kühlenden Stoffe in einem flüssigen bzw. schmelzflüssigen bzw. fließfähigen Zustand zu halten. Die Verformungsarbeit wird wahlweise auch durch Wahl eines Verzahnungsmoduls reduziert, der unter dem Standard-Verzahnungsmodul für Planetwalzenextruderabschnitte/Module/Sekundärextruder für Bereiche liegt, in denen das Aufschmelzen von Einsatzstoffen erfolgt und/oder eine Homogenisierungsarbeit bzw. Dispergierungsarbeit zu leisten ist.
Zum Beispiel können statt sonst üblicher Verzahnungsmodule von 5,5 und mehr auch Verzahnungsmodule von 3 oder 3,5 in erfindungsgemäßen Extruderarbschnitten/Modulen Anwendung finden.

Soweit die ursprünglichen Planetspindeln eine reduzierte Zähnezahl aufweisen, resultiert die Zähnezahlreduzierung aus einem Entfernen von Zähnen an vorher vollverzahnten Planetspindeln bzw. aus einer anderen Herstellung von Planetspindeln, die zu einer Bauform wie bei einem Entfernen von Zähnen aus vorher vollverzahnten Planetspindeln führt.

Für die Berechnung der Teilkreisdurchmesser der erfindungsgemäßen Planetspindeln ist von dem Teilkreisdurchmesser bei einer Vollverzahnung auszugehen - unabhängig von einer nachträglichen Zahnreduzierung oder anderer Planetspindelherstellung, die zum gleichen Ergebnis führt.

Vorteilhafterweise schließt die Erfindung auch eine radiale Vergrößerung des zur Kühlung bestimmten Extruderabschnitts/Moduls unter Verwendung eines vorhandenen Gehäuses bzw. einer vorhandenen innen verzahnten Buchse ein. Vorhandenes Gehäuse und Buchse können körperlich vorhanden sein oder eine größere Baugrößen aus einer vorhandenen Baureihe sein. Voraussetzung für die Verwendung vorhandener Planetwalzenextruderteile für eine Kombination mit einer weiterzuverwendenden Zentralspindel ist neben einem kompatiblen Verzahnungsmodul, neben der Berücksichtigung des notwendigen Spiels und Korrekturfaktoren beachten, dass der Teilkreisdurchmesser der Innenverzahnung der Buchse bzw. des Gehauses in einem bestimmten Verhältnis zur Zentralspindel und den Planetspindeln steht. Der Teilkreisdurchmesser muss unter Berücksichtigung der anderen Bedingungen gleich der Summe aus dem Zentralspindel-Teilkreisdurchmesser und dem doppelten Teilkreisdurchmesser der Planetspindel-Teilkreisdurchmesser sein.

Vorteilhafterweise ergibt sich bei radialer Vergrößerung des Extrudes/Moduls (ohne die vorstehend erläuterte Hülse) mit den erfindungsgemäß größeren Planetspindeln eine bessere Abrollung der Planetspindeln in der Verzahnung der Zentralspindel und in der Innenverzahnung des Gehäuses. Das vereinfacht die Konstruktion.

Außerdem reduziert sich die Drehzahl der Planetspindeln bezogen auf den Umlauf um die Zentralspindel bei gleicher Umfangsgeschwindigkeit.

Außerdem bewirkt eine geringere Planetspindelzahl eine geringere Scherung des Materials Für viele Kunststoffe ist das von großem Vorteil.
Für die geringere Drehzahl kann je nach Material und Viskosität eine geringere Antriebsenergie erforderlich werden. Vorteilhafterweise entlastet das die Kühlung des Extruders.
Außerdem verteilt sich der Verschleiß an den größeren Planetspindeln auf mehr Zähne.

Die erhöhte Verschleißfestigkeit der Planetspindeln ist für alle Extruder wichtig, in denen Einsatzgut mit hoher Verschleißwirkung verarbeitet wird. Das ist zum Beispiel bei der Verarbeitung von Altgummi im Planetwalzenextruder zum Zwecke der Devulkanisation der Fall.

Bei der radialen Vergrößerung eines Abschnittes/Moduls vergrößert sich der Gehäusedurchmesser des betreffenden Abschnittes/Moduls. Wenn ein benachbarter Abschnitt/Modul unverändert bleibt, so ergibt sich zwischen beiden Gehäusen ein unterschiedlicher Durchmesser. Gleichwohl können die Gehäuse nach wie vor an den üblicherweise vorgesehenen Flanschen miteinander verschraubt werden,
- solange die Flansche eine ausreichende Überdeckung haben und
- entsprechende, miteinander fluchtende Schraubenlöcher in die Flansche eingebracht werden können und
- ausreichender Platz für die Schraubenköpfe und Muttern gegeben ist

Wenn noch größere erfindungsgemäße Planetspindeln und Gehäuse vorkommen, kann es von Vorteil sein, zur Verbindung der Befestigungsflansche der größeren Gehäuse mit den Befestigungsflanschen der benachbarten Extruderabschnitte/Module einen Adapter vorzusehen. Der Adapter hat vorzugsweise eine Ringform und wird zwischen den Flanschen eingesetzt. Zugleich hat der Adapter passende Anschlussflächen für die betreffenden Flansche. D.h. wenn der betreffende Flansch in seiner Anschlussfläche einen Vorsprung hat, so weist der ringförmige Adapter an seiner Anschlussfläche eine passende Vertiefung auf. Wenn der betreffende Flansch an seiner Anschlussfläche eine Vertiefung hat, so weist der ringförmige Adapter an seiner Anschlussfläche einen passenden Vorsprung auf. Vorzugsweise sind die Vorsprünge zylindrisch und die Vertiefungen von spiegelbildlicher Form. Das lässt sich einfach herstellen. Die Vorsprünge und Vertiefungen bewirken eine vorteilhafte Zentrierung der Extruderabschnitte/Module.

Vorzugsweise sind die Vorsprünge zylindrisch und umfassen die Vertiefungen die zylindrischen Vorsprünge mit kleinerem Spiel als für eine Zentrierung erforderlich. Die Zentrierung kann bei üblichen Extrudern durchaus mehrere Zehntel Millimeter betragen. Noch weiter bevorzugt ist das Spiel kleiner/gleich 0,1mm und höchst bevorzugt kleiner/gleich 0,05mm. Das geringe Spiel bedingt zwar eine genauere Fertigung, beinhaltet jedoch eine bessere Zentrierung.

Soweit die zwischen den Flanschen vorgesehenen Adapter aus Festigkeitsgründen oder anderen Gründen aufgrund ihrer Dicke bei einer Nachrüstung einer Extrusionsanlage mit einem erfindungsgemäßen Abschnitt/Modul nicht mehr ohne weiteres in den bestehenden Spalt zwischen den Flanschen verbaut werden können, lässt sich der Spalt im Falle einer Neuanfertigung des Gehäuses und der Planetspindeln auf ein gewünschtes Maß vergrößern.

Wenn sich aber ein Spaltweitenproblem auftut, weil ein vorhandenes größeres Gehäuse einer gängigen größeren Baugröße verwendet werden soll, so kann ein ringförmiger Adapter auch zunächst an einem der zugehörigen Befestigungsflansche, vorzugsweise an dem kleineren Befestigungsflansch an der Seite verschraubt werden, welche dem erfindungsgemäß vergrößerten Planetwalzenextruderabschnitt/Modul abgewandt ist. Noch weiter bevorzugt besteht der Adapter dazu aus verschiedenen Bogenstücken, die an den ursprünglichen Befestigungslöchern in den Flanschen verschraubt werden. Eine gewünschte Zentrierung lässt sich dabei
- mit einem zusätzlichen Zentrierring oder
- mit einem für Druck- und/oder Temperaturfühler bestimmten Ring und/oder
- mit einer anderen Ringkonstruktion darstellen, zum Beispiel mit einem für die Schmelzeführung geformten Ring, der an der Einlaufseite des erfindungsgemäßen Planetwalzenextruderabschnitt/Modul an die Schmelzeaustrittsöffnung des benachbarten Extruderabschnitts anschließt und sich im Übergang zu Schmelzeeintrittsöffnung/Einlassöffnung des erfindungsgemäßen Planetwalzenextruderabschnitts/Moduls erweitert, so dass Toträume vermieden werden, in denen sich Schmelze unkontrolliert aufhalten kann.
Soweit hinter dem radial vergrößerten Extruderabschnitt/Modul gleichfalls ein Extruderabschnitt mit einem Gehäuse, Planetspindeln und Zentralspindel aus der gleichen Baugröße vorgesehen ist, ist eine Schmelzeführung von Vorteil, die sich zu dem nachgeordneten Abschnitt/Modul hin verjüngt. Wie am Einlauf in den erfindungsgemäß radial vergrößerten Abschnitt/Modul kann auch auslaufseitig zur Schmelzeführung ein Ring eingesetzt werden.
Das heißt, der Adapter kann allein oder mit anderen Teilen verschiedene Aufgaben erfüllen, insbesondere als Zentrierring, Anlaufring, Stauring, Ring für Messstellen dienen.

Unabhängig von der Frage der Verwendung von Gehäusen und Buchsen einer anderen Baugröße sind das sich aus der Vergrößerung ergebende Gehäuse und die zugehörige Buchse vorzugsweise genauso rohrförmig (nur mit größeren Abmessungen) ausgebildet wie die Gehäuse der benachbarten Planetwalzenextruderaberschnitte/Module.
Das rohrförmige Gehäuse besitzt vorzugsweise ebenfalls außen angeordnete Flansche zur Verbindung mit Gehäusen von benachbarten Extruderabschnitten/Modulen.
Die zum größeren Gehäuse gehörige größere Buchse ist gleichermaßen mit der Innenverzahnung und den außen eingearbeiteten Kühlkanälen versehen.
Die größere Gehäuse/Buchsenkonstruktion kann auch gleichartige Ausnehmungen für einen Anlaufring und eine gegebenenfalls darüber hinausgehende Ringkonstruktion wie in der PCT/EP2017/001372 beschrieben besitzen, allerdings mit anderen Maßen.

Wie oben ausgeführt, kann zur Verbindung eines an einem erfindungsgemäßen, größeren Gehäuse außen sitzenden Flansches mit dem Befestigungsflansch eines benachbarten, kleineren Extruderabschnitts/Moduls ein Adapter, noch vorzugsweise ein ringförmiger Adapter, vorgesehen sein, der entweder vorher an dem Flansch des größeren Gehäuses verschraubt wird, um anschließend mit dem kleineren Gehäuseflansch des benachbarten Extruderabschnitts/Moduls verschraubt zu werden.
Oder der Adapter wird vorher mit dem kleineren Gehäuseflansch des benachbarten Exrtruderabschnitts/Moduls verschraubt, um anschließend mit dem Flansch des größeren Extruderabschnitts/Moduls verschraubt zu werden.

Wahlweise bildet der auslaufseitige Adapter zugleich
- ein Widerlager für den Anlaufring, an dem die Planetspindeln gleiten,
- oder sogar ganz oder teilweise den Anlaufring
- oder ein Widerlager für einen Stauring
- oder ganz oder teilweise den Stauring
- oder ein Widerlager für einen Dispergierring
- oder ganz oder teilweise einen Dispergierring
- oder ganz oder teilweise eine Ringkonstruktion mit weitergehenden Aufgaben

Außerdem kann der einlaufseitige Adapter wahlweise zugleich
- allein oder zusammen mit dem Gehäuse des benachbarten Extruderabschnitts/Moduls einen Sitz und/oder Widerlager für eine dortige andere Ringkonstruktion bilden
- allein oder zusammen mit mit anderen Teilen die dortige andere Ringkonstruktion bilden

Bei der erfindungsgemäßen Vergrößerung eines Abschnitts/Moduls kann es von Vorteil sein, eine der umlaufenden Planetspindeln in dem Planetwalzenextruderabschnitt/Modul als Putzer auszubilden. Dazu ist diese Planetspindel dann aus mindestens zwei Planetspindelabschnitten zusammengesetzt, wobei der eine Planetspindelabschnitt an der Stoßstelle mit dem anderen Planetspindelabschnitt mit einem Zapfen in eine Bohrung des anderen Planetspindelabschnittes greift und im Tiefsten der Bohrung eine Tellerfeder vorgesehen ist. Die Tellerfeder ist so ausgelegt, dass sie den einlaufseitigen Planetspindelabschnitt mit der gegenüber liegenden Stirnwand in eine gleitende Berührung bringt. Dabei schiebt diese Planetspindel die Abzugsöffnungen in der Stirnwand bei jedem Umlauf frei. Die Tellerfedern geben der an beiden Enden im Gehäuse gleitenden Planetspindeln die Möglichkeit, sich einer Dehnung und eine Kontraktion der Konstruktion anzupassen.

Eine weitergehende Aufgabe des Adapters kann die Bildung einer Kühlfläche/Heizfläche sein. Vorzugsweise ist dazu ein mindestens zweiteiliger Adapter vorgesehen, von dessen Teilen ein Kanal für eine Temperierung (Kühlung/Beheizung) umschlossen wird. Durch die Zusammensetzung aus mehreren Teilen ergeben sich Fertigungsvorteile und Reinigungsvorteile.

Für die Temperierung des Adapters gilt das gleiche wie für die Temperierung des Gehäuses.

Bei der Temperierung des auslaufseitigen Adapters kann ein wesentlicher Teil des Adapter-Volumens für den Verlauf des Kühlkanals verplant werden. Wahlweise finden mehrgängige Kanäle Anwendung. Anstelle zweier Kanäle können auch mehr kreisförmige Kanäle konzentrisch angeordnet werden. Anstelle der kreisförmigen Anordnung kann auch ein spiralförmiger Verlauf beider nebeneinander liegenden Kanäle in Betracht kommen; desgleichen ein mäandernder Verlauf beider nebeneinander liegender Kanäle, wobei das Mäandern nicht in der üblichen Form auf einer Geraden, sondern auf einer Ringfläche stattfindet, so dass die beiden nebeneinander liegenden Kanäle ihre Richtung gemeinsam ändern
von radial in Umfangsrichtung
von Umfangsrichtung in radial
von radial in Umfangsrichtung usw.,
bis die Kanäle in Umfangsrichtung wieder an den Anfang kommen.

Der Adapter kann vorteilhafterweise auch Bohrungen zur Messung der Schmelzetemperatur und/oder dem Schmelzedruck aufweisen. Die Bohrungen dienen dem Einschrauben von Messfühlern. Die Messfühler können mittelbar über eine zwischenliegende Membran messen. Vorzugsweise ist eine unmittelbare Messung vorgesehen, bei der die Messfühler unmittelbar in das zu messende Medium ragen.
Es ist günstig, die Messungen einlaufseitig und auslaufseitig vorzunehmen Für eine genaue Temperierung waren bereits die dort angegebenen Abmessungen der Buchsen von Vorteil. Aufgrund der geringeren Belastung der Extruderabschnitte/Module bei erfindungsgemäßer radialer Vergrößerung können die Materialdicken an der Buchse im Tiefsten zwischen den sich in radialer Richtung erstreckenden Stegen bei den Baugrößen von 70 bis 280mm gegenüber den angegebenen Grenzen um mindestens 25% reduziert werden, bei den Baugrößen bis 180mm sogar um mindestens 40% reduziert werden. Gleichwohl bleiben den Buchsen
aufgrund der sich in radialer Richtung und in Umfangsrichtung erstreckenden Stegen der Verzahnung und aufgrund der sich in radialer Richtung und in Umfangsrichtung erstreckenden Stegen zwischen den für die Temperierung vorgesehenen Kanäle
noch ausreichende Festigkeiten.

Eine weitere Variationsmöglichkeit an dem vorgesehenen Planetwalzenextruder/Modul ist die Änderung der Planetspindelzahl. Durch Verringerung der Planetspindelzahl kann das Hohlraumvolumen im Extruder/Modul vergrößert werden. Dadurch kann bei gleichbleibendem Füllungsgrad des Extruders/Moduls mehr Schmelze durch den Extruder durchgesetzt werden. Dies gilt sowohl für herkömmliche Planetwalzenextruder/Module wie auch für radial oder axial vergrößerte Planetwalzenextruder/Module. Wenn sich dabei die Funktion des Extruders/Moduls auf die zusätzliche Kühlung beschränkt, kann der Extruder/Modul mit minimaler Abstützung und maximalem Hohlraumvolumen gefahren werden. Die minimale Planespindelzahl ist drei, wobei die drei Planetspindeln am Umfang der Zentralspindel gleichmäßig verteilt sind.

Allerdings ist nicht zwingend, daß die minimale Planetspindelzahl zu einer optimalen Kühlung führt. Die optimale Kühlung kann auch bei einer größeren Planetspindelzahl stattfinden. Die Erfindung führt das darauf zurück, daß ein besonders großes Hohlraumvolumen den die Kühlung bestimmenden Materialaustausch an den Kühlflächen des Planetwalzenextruders/Moduls verschlechtert. Materialaustausch heißt dabei, daß Einsatzmaterial gelangt in einen Walzenspalt zwischen Planetspindeln und der Innenverzahnung des Gehäuses bzw. zwischen Planetspindeln und Zentralspindel. Bei jedem Umlauf der Planetspindeln auf einer Zentralspindel walzt die Planetspindel Einsatzmaterial auf der Außenverzahnung der Zentralspindel aus. Zugleich wird das sich vorher auf der Außenverzahnung befindliche Einsatzmaterial abgeschoben. Entsprechendes gilt für den Umlauf der Planetspindel in der Innenverzahnung des Planetwalzenextruders/Moduls.
Bei drei umlaufenden Planetspindeln ergeben sich sechs Walzenspalte, bei vier Planetspindeln ergeben sich acht Walzenspalte, bei fünf Planetspindeln ergeben sich zehn Walzenspalte usw.
Je größer die Zahl der Walzenspalte ist, desto häufiger findet ein Materialaustausch an den gekühlten Flächen des Planetwalzenextruders/Moduls statt.
Eine Möglichkeit zur Prüfung der Kühlung ist die Messung der Temperatur am Kühlmittel. Vorzugsweise erfolgt die Prüfung unmittelbar am Austritt des Kühlmittels aus dem Extrudergehäuse. Zeitgemäße Extruder besitzen eine Kühlung, für die eine Buchse benutzt wird. Die Buchse wird mit einer Innenverzahnung und mit Nuten am Außenmantel gefertigt. Die Nuten verlaufen wie Gewindegänge am Außenmantel. Die Innenverzahnung ist dazu bestimmt, mit den umlaufenden Planetspindeln des Planetwalzenextruders/Moduls zu korrespondieren. Dazu wird die Buchse in dem Extrudergehäuse/Modulgehäuse montiert. Beim Einsetzen der Buchse in die zugehörige Gehäusebohrung werden die am Außenmantel der Buchse vorgesehenen Nuten durch das Gehäuse geschlossen, so daß Kühlkanäle in dem Gehäuse entstehen. An jedes Ende der Kühlkanäle ist eine Leitung angeschlossen, so daß Kühlmittel am einen Ende zugeführt und am anderen Ende wieder abgezogen werden kann. Die pro Zeiteinheit abgeführte Wärmemenge ergibt sich aus Menge des pro Zeiteinheit durch die Kühlkanäle strömenden Kühlmittels, aus dem spezifischen Wärmeinhalt des Kühlmittels pro Grad Celsius, der Eingangstemperatur in Grad Celsius und der Ausgangstemperatur in Grad Celsius.

Bei jedem Änderungs-Schritt wird mindestens eine Planetspindel aus dem Planetwalzenextruder/Modul entfernt werden. Zugleich werden die verbleibenden Planetspindeln gleichmäßig in dem Zwischenraum zwischen Zentralspindel und umgebendem Gehäuse verteilt.
Für die Entfernung der Planetspindel wird der Planetwalzenextruder/Modul so demontiert, daß alle Planetspindeln aus dem Gehäuse herausgeschraubt werden können anschließend von den Planetspindeln alle bis auf eine unter gleichmäßiger Verteilung wieder eingeschraubt werden. Zum Einschrauben ist es hilfreich, eine Schablone zu verwenden, mit der die Position im Zwischenraum zwischen Zentralspindel und umgebendem Gehäuse festlegt. Die Schablonen können Blechscheiben sein, welche auf die Zentralspindel aufgesetzt werden. Die Blechscheiben besitzen Bohrungen, deren Mitten auf einem Kreis liegen, dessen Durchmesser gleich dem Durchmesser ist, auf dem die Mitten der Planetspindeln in dem Zwischenraum zwischen Gehäuse und Zentralspindel umlaufen. Die Bohrungen besitzen eine Öffnungsweite, die gleich dem Außendurchmesser der Planetspindeln plus einem ausreichenden Bewegungsspiel zum Einschrauben der Planetspindeln ist.

Üblicherweise steigt die Kühlwirkung nach dem ersten Schritt, möglicherweise steigt die Kühlwirkung auch mit weiteren Schritten, in denen auf dem vorstehend beschriebenen Wege Planetspindeln entfernt werden. Sobald jedoch anstelle einer Steigerung der Kühlwirkung ein Abfallen der Kühlwirkung zu verzeichnen ist, ist eine günstige Planetspindelzahl gefunden. Das ist dann die Planetspindelzahl vor der letzten Reduzierung der Planetspindelzahl.
Durch Rückgängigmachen des letzten Reduzierungsvorganges wird die günstige Planetspindelzahl wiedergewonnen.

In der Zeichnung zeigen die Fig. 1 bis 3 verschiedene Einzelheiten des mit der PCT/EP2017/001372veröffentlichten Extruders.
Die Fig. 4 bis 11 zeigen Einzelheiten des mit der PCT/EP2018/000496 veröffentlichten Extruders.
Die Fig. 12 zeigt ein Schema der erfindungsgemäßen Verlängerung
Die Fig. 13 und 14 zeigen einen Planetwalzenextruderabschnitt für eine Tandem anordnung mit einem bestehenden Extruder.

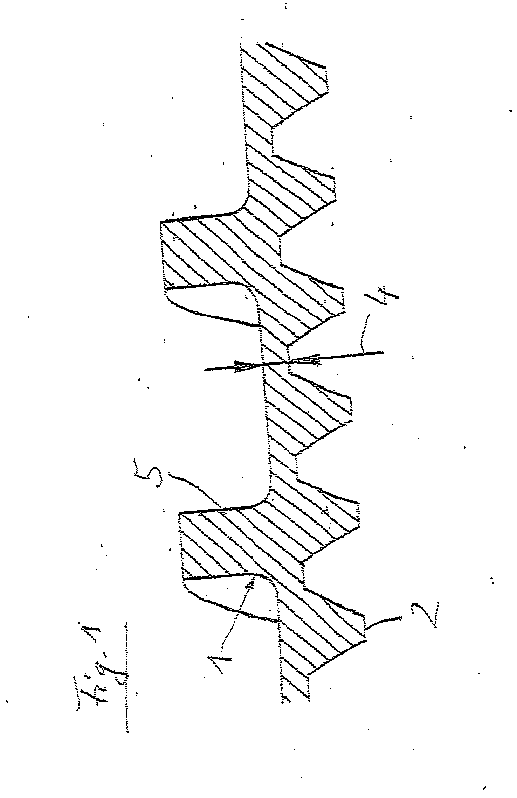

In Fig. 1 ist ein Ausschnitt einer Buchse 1 für einen zur Kühlung bestimmten Planetwalzenextruderabschnitt/Modul dargestellt. Innenseitig ist die Verzahnung 2 ersichtlich; außenseitig die Ausdrehungen/Ausfräsungen, welche Kanäle 3 bilden. Das Maß im Tiefsten zwischen den Zähnen und im Tiefsten der Kanäle ist mit 4 bezeichnet.

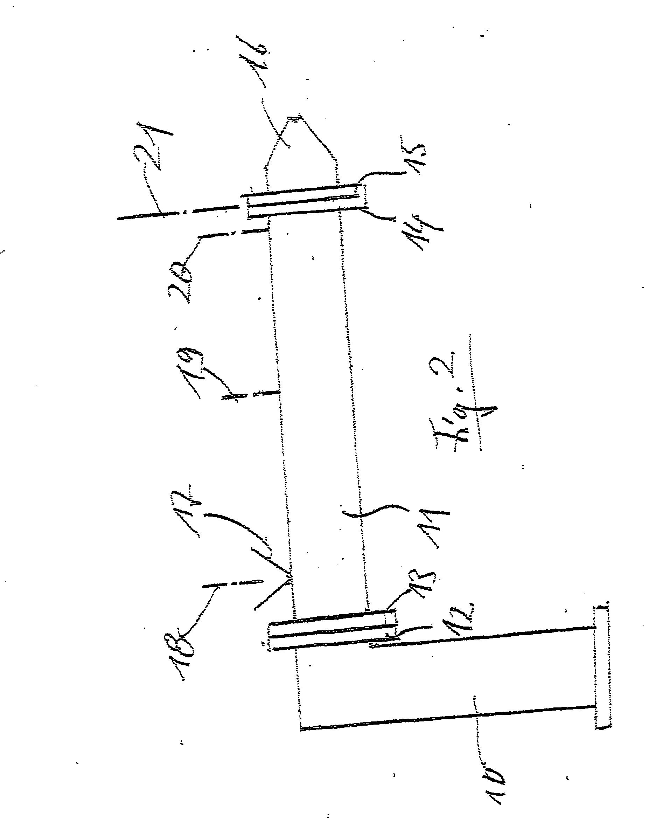

Fig. 2 zeigt einen Extruder mit einem als Planetwalzenextruder ausgebildeten Planetwalzenextruderabschnitt 11, einem Antrieb 10 und einem Austritt 16.
Die Länge des Abschnittes 11 entspricht der gewünschten Länge der Kühlstrecke.
Das Gehäuse des Abschnittes 11 ist an beiden Enden mit Flanschen 13 und 14 versehen. Mit dem Flansch 13 ist es an einem Flansch 12 des Antriebes verspannt und mit dem Flansch 14 an einem Flansch 15 des Austritts 16 verspannt.

Der Abschnitt 11 besitzt im Gehäuse eine nicht dargestellte, innen verzahnte Buchse, eine nicht dargestellte Zentralspindel, die von dem Antrieb in Drehbewegung gesetzt wird.
Um die Zentralspindel laufen im Ausführungsbeispiel vier Planetspindeln um. Die Planetspindeln sind gleichmäßig am Umfang der Zentralspindel verteilt und kämmen sowohl mit der Außenverzahnung der Zentralspindel als auch mit der Innenverzahnung der Buchse.

Im Ausführungsbeispiel hat der Extruder die Aufgabe der Kühlung. Dabei wird Schmelze über eine Pumpe 18 und eine Zuleitung 17 in den Extruder aufgegeben. An der Stelle 19 wird auf Austrittstemperatur gekühlte Schmelze über eine Pumpe 20 abgezogen und in eine nachfolgende Düse 21 aufgegeben. Zur Verbindung der Düse mit dem Extruder 12 sind Flansche 42 und 43 an der Düse 15 und dem Gehäuse des Extruders vorgesehen.

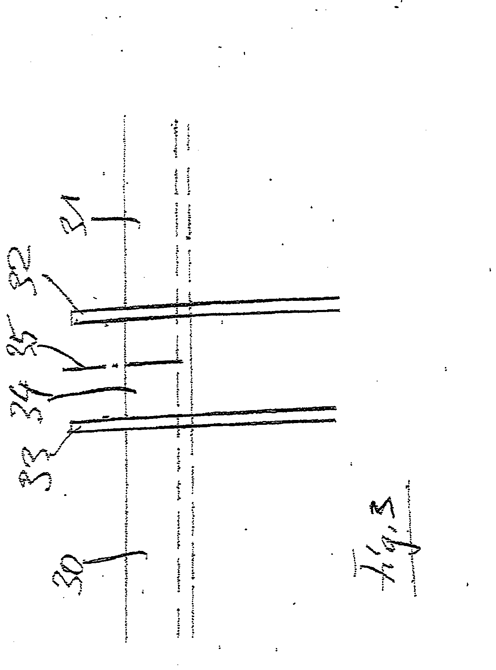

Fig. 3 zeigt ein Ausführungsbeispiel, bei denen die Kühlstrecke durch zwei Planetwalzenextrudermodule 30 und 31 gebildet wird, deren Gehäuse an Flanschen 32 und 33 miteinander verspannt sind und dabei ein Zwischenstück 34 einspannen. Die Gehäuse 30 und 31 sind mit einer Buchse versehen, die innen verzahnt ist und mit den Planetspindeln bzw. der Zentralspindel der Planetwalzenextrudermodule korrespondiert. Die Verzahnung beider Buchsen ist gleich.
Darüber hinaus ist das Zwischenstück 34 mit der gleichen Verzahnung versehen und so bemessen und angeordnet, dass überlange Spindeln durch beide Module hindurchragen.
In einem weiteren Ausführungsbeispiel ist an dem Zwischenstück 34 bei 35 eine Messstelle vorgesehen.

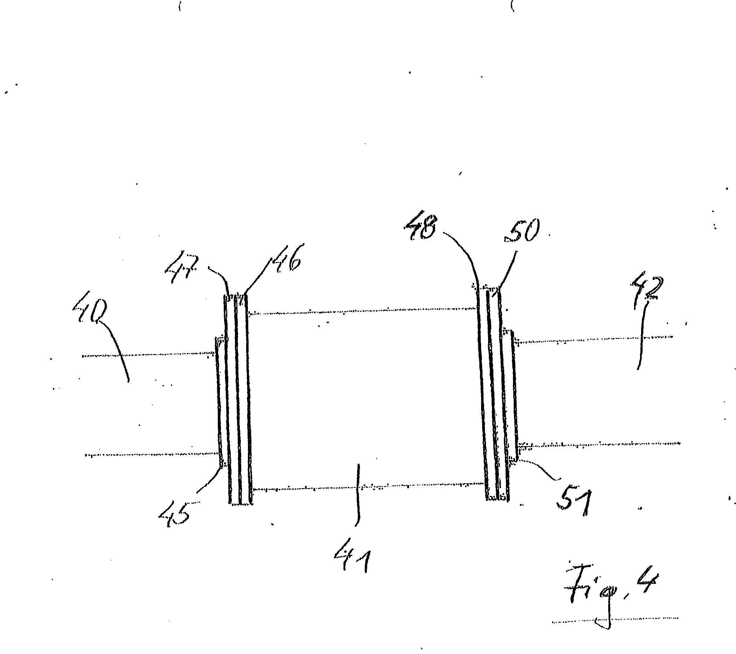

Fig. 4 zeigt eine Extruderanlage mit drei hintereinander angeordneten Planetwalzenextrudermodulen 40, 41 und 42. Von diesen Modulen besitzen die Planetwalzenextrudermodule 40 und 42 die gleiche Baugröße. Der Module 41 ist gegenüber den anderen Modulen radial vergrößert.
Alle Module 40,41 und 42 werden von derselben Zentralspindel durchdrungen. Während in den Modulen 40 und 42 Planetspindeln mit gleichem Teilkreisdurchmesser und mit ihrer Außenverzahnung mit der Außenverzahnung der Zentralspindel kämmen, haben die Planetspindeln des Moduls 41 einen größeren Teilkreisdurchmesser. Aber auch diese Planetspindeln kämmen mit der gemeinsamen Zentralspindel. Das ist möglich, weil der Zahnmodul der Verzahnung der Zentralspindel der gleiche ist wie der Zahnmodul der Planetspindeln aller Planetwalzenextrudermodule 40,41 und 42. Die Anzahl der Zähne der Planetspindeln in dem Planetwalzenextrudermodul 41 ist allerdings größer als die der Planetspindeln in den anderen Planetwalzenextrudermodulen 40 und 42. Das bedingt einen größeren Teilkreisdurchmesser der Planetspindeln in dem Planetwalzenextrudermodul 41.

Alle Planetspindel kämmen mit ihrer Verzahnung darüber hinaus mit der Innenverzahnung einer Buchse, die in dem zugehörigen Gehäuse sitzt. Das ist möglich, weil auch die Innenverzahnungen mit dem gleichen Zahnmodul wie die Zentralspindel und die Planetspindeln gefertigt worden sind. Allerdings ist der Teilkreisdurchmesser der Innenverzahnung in dem Planetwalzenextruder 41 aufgrund des größeren Teilkreisdurchmessers der Planetspindeln wesentlich größer als der Teilkreisdurchmesser der Innenverzahnung in den anderen Planetwalzenextrudermodulen 40 und 42.

Die Gehäuse aller Planetwalzenextrudermodule sind mit Flanschen aneinander verschraubt.
Der radial vergrößerte Planetwalzenextrudermodul 41 besitzt ein rohrförmiges Gehäuse mit Flanschen 46 und 48 an beiden Enden.

Der einlaufseitige Flansch 46 ist über einen Adapterring 47 mit einem Flansch 45 des vorgeordneten Planetwalzenextrudermoduls 40 verschraubt. Dabei sind unterschiedliche Schraubverbindungen vorgesehen: eine Schraubverbindung zwischen dem Flansch 45 und dem Adapterring 47 und eine Schraubverbindung des Adapterringss 47 mit dem Flansch 46. Die Schraubverbindung besteht im Ausführungsbeispiel aus 6 Schrauben, In anderen Ausführungsbeispielen sind mehr Schrauben vorgesehen.

Im Ausführungsbeispiel bewirkt der Adapterring 47 zugleich eine Zentrierung der miteinander verbundenen Extruderteile. Dazu greift der Adapterring 47 mit einem Vorsprung in eine Ausnehmung des Flansches 45, während der Flansch 46 mit einem Vorsprung in eine Ausnehmung des Adapterrings 47 greift.

Der auslaufseitige Flansch 48 ist über einen Adapterring 50 mit dem Flansch 51 eines benachbarten Extruderabschnitts/Moduls verschraubt. Dabei sind wie an der zuvor erläuterten Verschraubung mehrere Schrauben vorgesehen. Außerdem bewirkt der Adapterring 50 eine Zentrierung der miteinander verbundenen Extruderabschnitte/Module. Der Adapterring 50 greift mit einem Vorsprung in eine Ausnehmung des Flansches 48, während der Flansch 51 mit einem Vorsprung in eine Ausnehmung des Adapterringes 50 greift.

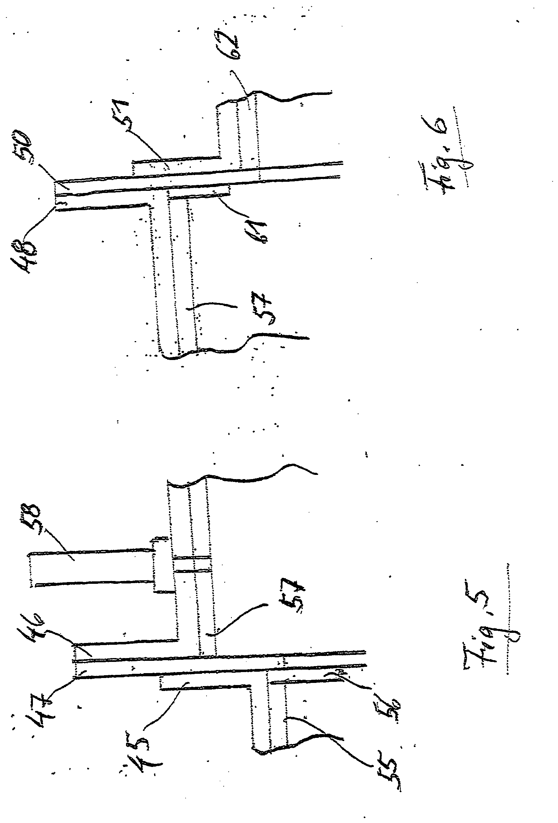

In Fig. 5 und 6 ist die Situation an der Verbindungsstelle der verschiedenen Planetwalzenextruderabschnitte/Module in einer Vergrößerung und im Ausschnitt dargestellt. Dabei ist die innen verzahnte Gehäusebuchse des Abschnitts/Moduls 40 mit 55 bezeichnet, die Gehäusebuchse des Abschnitts/Moduls 41 mit 57, die Gehäusebuchse des Abschnitt/Moduls 42 mit 62.
Zugleich ist der Anlaufring für den Abschnitt/Modul 40 mit 56 bezeichnet, der Anlaufring für den Abschnitt/Modul 41 mit 61. An dem Anlaufring 56 gleiten die in dem Abschnitt/Modul 40 umlaufenden Planetspindeln. An dem Anlaufring 57 gleiten die in dem Abschnitt/Modul 41 umlaufenden Planetspindeln.
Es bildet der Zwischenring 47 zugleich ein Widerlager für den Anlaufring 56, der Zwischenring 50 zugleich ein Widerlager für den Anlaufring 61.

Fig. 5 zeigt zugleich die Anwendung eines Seitenarmextruders 58 für eine Messstelle in dem Abschnitt/Modul 41.

In den Fig. 5 und 6 weist die Anordnung der Anlaufringe 56 und 61 darauf hin, dass die Extrusionsrichtung in der Ansicht von links nach rechts verläuft.

In anderen Ausführungsbeispielen ist der erfindungsgemäße Kühlabschnitt/Modul zwischen Extruderabschnitten/Modulen anderer Bauart als der eines Planetwalzenextruders angeordnet.

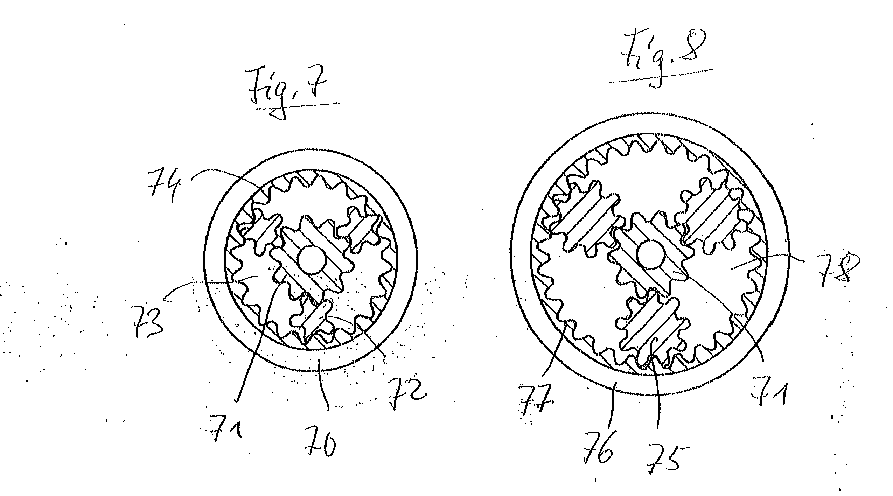

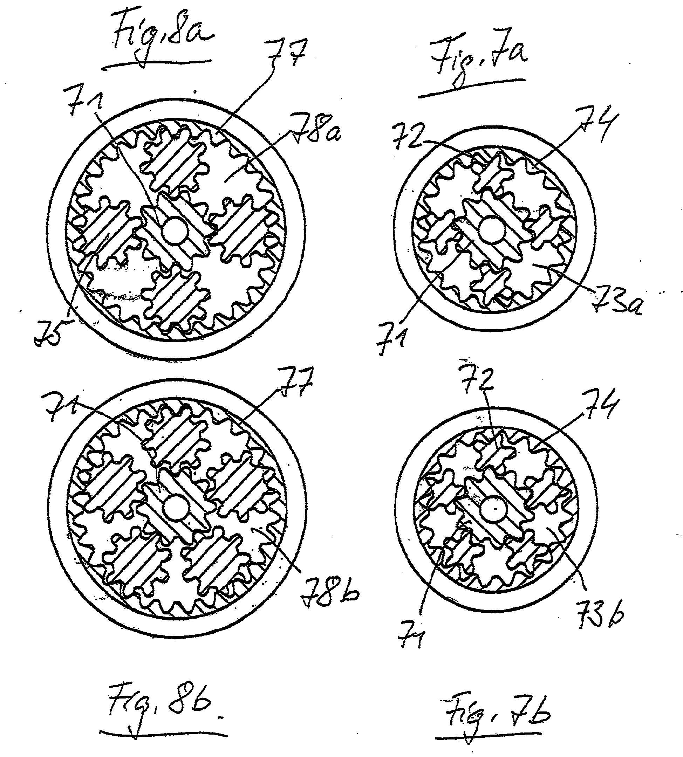

Die Fig. 7 und 8 zeigen die Vergrößerung des Hohlraumes bei erfindungsgemäßer radialer Vergrößerung.
Dabei ist in Fig. 7 ein herkömmlicher Planetwalzenextruder im Schnitt dargestellt. Darin ist mit 71 eine Zentralspindel, mit 72 drei Planetspindeln, mit 70 ein umgebendes, zylindrisches Gehäuse und mit 74 eine innen verzahnte Buchse bezeichnet. In dem Hohlraum der innen verzahnten Buchse 74 lassen die Zentralspindel 71 und die Planetspindeln 72 Hohlräume 73 frei. Die Planetspindeln 72 tragen an ihrem Umfang jeweils 5 Zähne. Im Ausführungsbeispiel ergibt sich dabei ein Hohlraumquerschnitt (quer zur Extruderlängsrichtung) mit einer Fläche von 2583 Quadratmillimeter.

In Fig. 8 ist eine radiale Vergrößerung des Planetwalzenextruder/Modul-Querschnittes dargestellt. Darin ist die Zentralspindel 71 in ihrer ursprünglichen Form erhalten. Die Planetspindel 75 besitzen jedoch bei gleichem Verzahnungsmodul im Unterschied zu den Planetspindeln 72 neun Zähne 75 mit entsprechend größerem Teilkreisdurchmesser.
Dieser Konfiguration sind das Gehäuse 76 und die innen verzahnte Buchse 77 durch entsprechende Vergrößerung angepasst.
Der Hohlraum 78 ist evident etwa doppelt so groß wie der Hohlraum 73 nach Fig. 7. Im Ausführungsbeispiel ergibt sich bei vergleichbarem Hohlraumquerschnitt eine Fläche von 4960 Quadratmillimeter.

Die Fig. 7a und 8a zeigen Planetwalzenextruder/Modul-Querschnitte die mit den Querschnitten nach Fig. 7 und 8 bis auf die Anzahl der Planetspindeln identisch sind. Bei den vier statt drei eingesetzten Planetspindeln 72 bzw. 75. Dabei ergibt sich in Fig. 7a eine Querschnittsfläche von 2314 Quadratmillimeter und in Fig. 8a eine Querschnittsfläche von 4204 Quadratmillimeter.

Die Fig. 7b und 8b zeigen Planetwalzenextruder/Modul-Querschnitte die mit den Querschnitten nach Fig. 7 und 8 bis auf die Anzahl der Planetspindeln identisch sind. Bei den fünf statt drei eingesetzten Planetspindeln 72 bzw. 75. Dabei ergibt sich in Fig. 7a eine Querschnittsfläche von 2104 Quadratmillimeter und in Fig. 8a eine Querschnittsfläche von 3500 Quadratmillimeter.

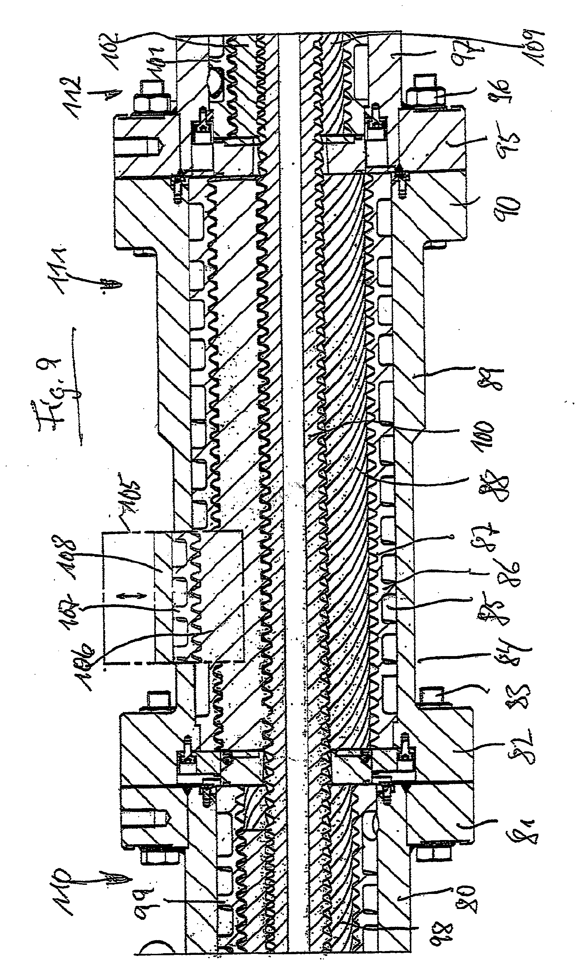

Fig. 9 zeigt einen Längsschnitt durch drei Planetwalzenextruderabschnitte/Module, von denen die Abschnitte/Module 110 und 112 den Abschnitt 111 zwischen sich einschließen. Alle drei Abschnitte haben eine gemeinsame Zentralspindel 100.
Zum Abschnitt 110 gehört ein Gehäuse 80 mit einer innen verzahnten Buchse 99. Die Buchse 99 ist außen mit Kühlkanälen versehen, durch die im Betriebsfall Wasser als Temperierungsmittel strömt.

Innen ist die Buchse mit einer Verzahnung versehen und umschließt die Buchse 99 drei Planetspindeln 98. Die Planetspindeln 98 kämmen mit ihrer Außenverzahnung mit der Innenverzahnung der Buchse 99. Darüber hinaus kämmen die Planetspindeln 98 mit ihrer Verzahnung mit der Verzahnung der Zentralspindel 100. In den Merkmalen entspricht der Abschnitt 110 der Darstellung nach Fig. 7.

Zum Abschnitt 111 gehört ein Gehäuse 97 mit einer innen verzahnten Buchse 101. Außen besitzt die Buchse 97 die gleichen Kühlkanäle und Kühlung wie der Abschnitt 110. Die Buchse 97 umschließt drei Planetspindeln 102.
Die Planetspindeln 102 kämmen mit der umgebenden Innenverzahnung und der Zentralspindel 100. Insoweit besteht Übereinstimmung mit dem Abschnitt 110.

Zum Abschnitt 111 gehören ein Gehäuse 89 mit einer Buchse 86. Außen besitzt die Buchse 86 Kühlkanäle 85, innen eine Verzahnung 87. Die Buchse 86 umschließt drei Planetspindeln 88, die ihrerseits die Zentralspindel 100 umschließen. Dabei kämmen die Planetspindeln 88 mit der Innenverzahnung 87 und der Außenverzahnung der Zentralspindel.
Im Unterschied zu den Planetspindeln 98 und 109 besitzen die Planetspindeln 88 des Abschnittes 111 aber mehr Zähne und bei gleichem Zahnmodul einen deutlich größeren Teilkreisdurchmesser. Dem ist die Innenverzahnung 87 der Buchse 86 angepasst, so dass das Gehäuses 89 entsprechen größer ist.
Das Gehäuse 86 ist an einem Ende mit dem Gehäuse 80 des Abschnittes 110 und am anderen Ende mit dem Gehäuse 97 verschraubt. Zur Verschraubung sind am einen Ende Flansche 81 und 82 und am anderen Ende Flansche 90 und 95 vorgesehen. Die zugehörigen Schrauben sind mit 83 und 96 bezeichnet.

Der Rohrmantel des Gehäuses 89 besitzt im Bereich 84 in Anpassung an die geringere Belastung des Gehäuses bei einem Kühlbetrieb eine Verjüngung.

Die Fig. 9 zeigt zugleich strichpunktiert ein Fenster 105, in dem ersichtlich ist, welche Abmessungen das dort mit 108 bezeichnete Gehäuse hat, wenn Planetspindeln 106 zur Anwendung kommen, die aufgrund einer noch größeren Zähnezahl eine weitere radiale Vergrößerung verursachen. Die dabei entstehende Gehäusebuchse ist mit 107 bezeichnet.

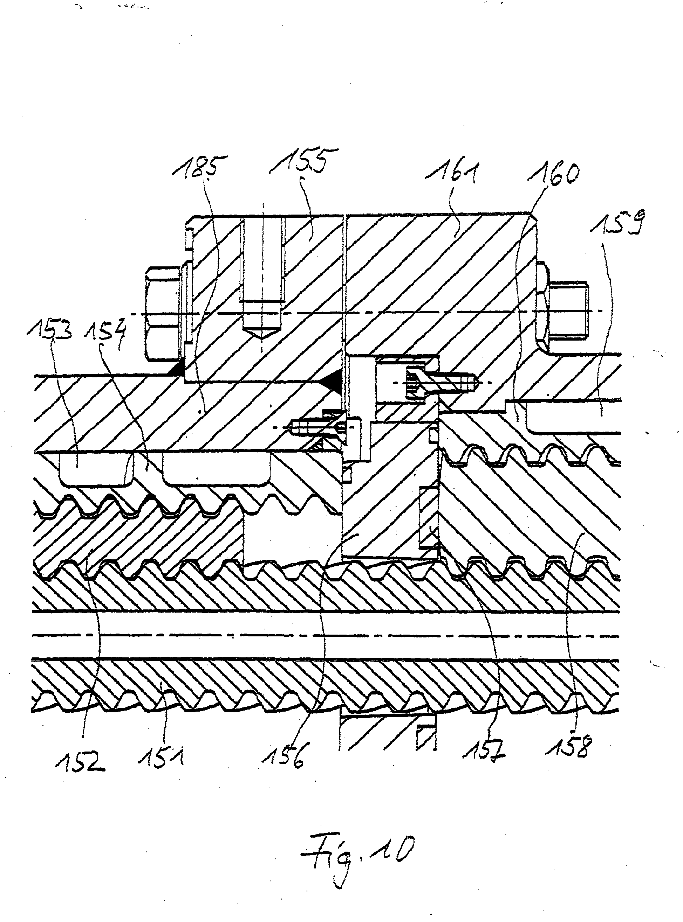

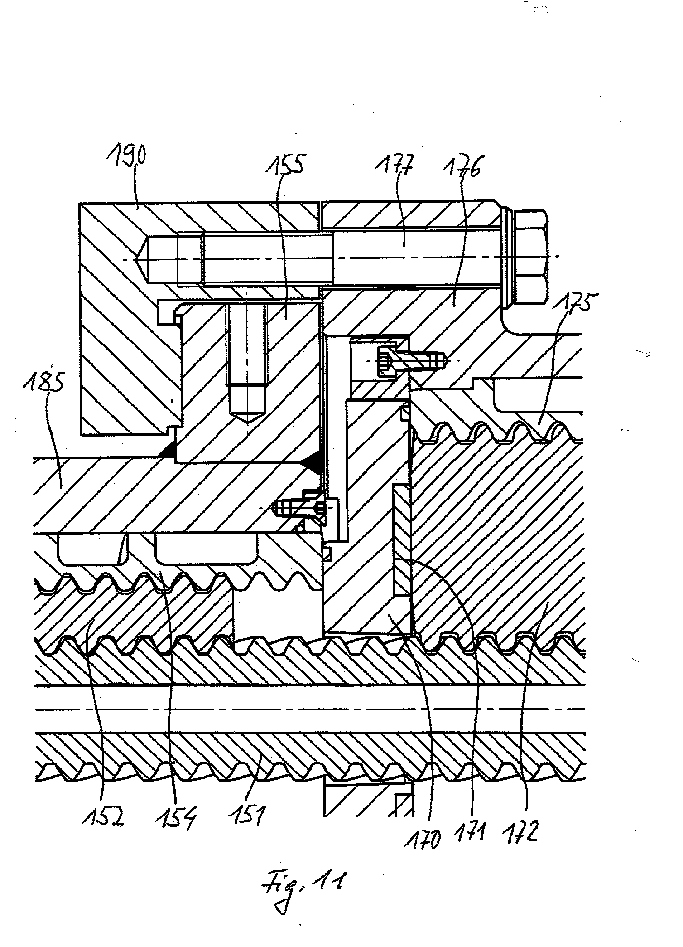

Die Fig. 10 und 11 beinhalten Varianten der in Fig. 5 und 6 dargestellten Bauweise. Im Unterschied zu den Fig. 5 und 6 verläuft die Extrusionsrichtung in den Ansichten nach Fig. 10 und 11 von rechts nach links. Das wird aus der Position des Anlaufringes 156 deutlich. Der Anlaufring 156 gehört zu einem radial vergrößerten Kühlmodul in Planetwalzenextruderbauwese, aus dem eine plastische Masse mit allen Bestandteilen für die Herstellung eines Haftklebers mit Ausnahme eines Vernetzungsmittels in einen normalen Planetwalzenextrudermodul übergegeben wird, der die Aufgabe hat, Vernetzungsmittel zuzumischen und die Masse auf Extrusionstemperatur zu temperieren.
Zwischen dem Anlaufring 156 und der Zentralspindel besteht nur ein geringer Spalt. Dadurch bildet der Anlaufring 156 einen Stauring. Schmelze staut sich vor dem Anlaufring und bildet eine natürliche Dichtung.

Wie in Fig. 4 und 5 ist auch nach Fig. 10 und 11 dem radial vergrößerten Kühlabschnit/Modul nach ein anderer Planetwalzenextrudermodul vorgeordnet. Dieser vorgeordnete Planetwalzenextrudermodul besitzt wie alle anderen Planetwalzenextruder einen Anlaufring. Auch dieser Anlaufring ist wie der Anlaufring 156 als Stauring ausgebildet, so dass sich Schmelze vor diesem Ring staut und gleichfalls eine natürliche Dichtung bildet.

Im Übrigen ist im Ausführungsbespiel zwischen den Flanschen der Gehäuse bzw. zwischen den Flanschen und dem Adapter eine Dichtung vorgesehen.

Der radial vergrößerte Kühlabschnitt/Modul besitzt ein sehr viel größeres Hohlraumvolumen als der nachgeordnete normale Planetwalzenextrudermodul. Das größere Hohlraumvolumen bietet bessere Kühlbedingungen als ein normaler Planetwalzenextrudermodul.

Der radial vergrößerte Kühlmodul besitzt ein Gehäuse mit einer Buchse 160, die außen mit Kanälen 159 für die Temperierung der plastischen Masse und innen mit der gleichen Verzahnung wie die Zentralspindel 151, aber mit anderem Teilkreisdurchmesser versehen ist. Der Teilkreisdurchmesser entspricht grob der Summe aus dem Teilkreisdurchmesser der Zentralspindel 151 und des doppelten Durchmessers von Planetspindeln 158. Grob heißt, dabei ist ein notwendiges Spiel in der Verzahnung berücksichtigt, damit die Planetspindeln einerseits mit der Zentralspindel 151 und andererseits mit der Buchse 160 kämmen können. Im Betrieb laufen die Planetspindel 158 in der Buchse 160 um die Zentralspindel 158 um. Dabei gleiten die Planetspindeln 158 an einem Anlaufring 156. Zur Reduzierung des Verschleißes ist der Anlaufring 156 mit einer Hartmetall-Einlage 157 versehen.

Der normale Planetwalzenextrudermodul besitzt Planetspindeln 152 mit etwa dem halben Teilkreisdurchmesser wie die Planetspindeln 158. Die zugehörige Buchse ist mit 154 bezeichnet und sitzt in einem Gehäuse 185 und besitzt Kühlkanäle 153. Das Gehäuse 185 setzt sich aus einem Rohr und einem angeschweißten Kragen 155 zusammen.
Das Gehäuse 161 des radial vergrößerten Kühlabschnitts/Moduls ist mit dem Kragen 155 verschraubt. Dazu sind entsprechende Durchgangslöcher in dem Kragen 155 und dem Gehäuse 161 vorgesehen, die mit Schrauben durchdrungen werden, so dass die Schrauben gegenüber am Gehäuse 161 vorragen und mit Muttern verspannt werden.

Der Anlaufring 156 umgibt die Zentralspindel 151 in einem Abstand, bei dem die plastische Masse aus dem Kühlabschnitt/Modul in den nachgeordneten Planetwalzenmodul strömen kann.

Fig. 11 zeigt einen Kühlabschnitt/Modul in Planetwalzenextruderbauart, der noch weitere radial vergrößert ist als der Kühlabschnitt/Modul nach Fig. 10. Der Kühlabschnitt/Modul besitzt ebenfalls umlaufende Planetspindeln 172, ein Gehäuse 176 und eine Buchse 175, einen Anlaufring 170 mit einer Hartmetalleinlage 171.

Der dem Abschnitt/Modul nachgeordnete Planetwalzenextrudermodul ist der gleiche wie in Fig. 10. Alle Teile des nachgeordneten Planetwalzenextrudermoduls tragen die gleichen Bezeichnungen wie in Fig. 10.

Der weiter vergrößerte Abschnitt/Modul besitzt noch bessere Kühlbedingungen.

Durch die weitere Vergrößerung des Abschnitts/Moduls ist eine andere Verbindung des Abschnitts/Moduls mit dem nachgeordneten Planetwalzenextruder vorgesehen.
Zwar ist in dem Ausführungsbeispiel nach Fig. 11 für die Verbindung auch eine Verschraubung vorgesehen. Dazu befinden sich entsprechende Durchgangslöcher in dem Gehäuse 176. Die Verbindung mit dem Kragen 155 erfolgt nach Fig. 11 über einen Adapter 190. Der Adapter 190 ist ein Ring mit einem Innenkragen. Mit dem Innenkragen greift der Adapter 190 in eine Nut des Kragens 155, die den Adapter zentriert und auch ein Fluchten beider Gehäuse 176 und 185 sicherstellt.

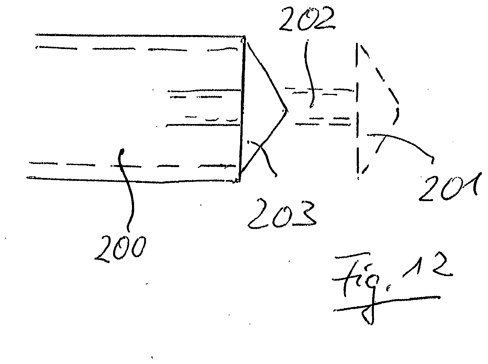

Fig. 12 zeigt eine herkömmliche Schnecke 200 mit einer eingeschraubten Spitze 201. Die Schnecke 200 und die Spitze 203 gehören zu einer herkömmlichen Einschneckenextrusionsanlage zur Herstellung Profilen aus Polystyrol. Die Spitze 203 ist in der Schnecke 200 verschraubt. Das die Schnecke 200 umgebende Gehäuse mit Füllöffnung ist nicht dargestellt. Das Schneckengehäuse ist zylindrisch mit Flanschen an den Enden. Mit dem einen Flansch ist das Schneckengehäuse am Gehäuse des zugehörigen Antriebs verschraubt. An dem anderen Flansch ist eine nicht dargestellte Düse verschraubt. Die Düse besteht aus einem Gehäuse mit einer sich in Extrusionsrichtung konisch verjüngenden Öffnung.
Die Schnecke 200 ragt mit der Spitze 203 in die konische Öffnung. Das Ende der Öffnung ist dem Querschnitt des gewünschten Profils nachgebildet.

Die Qualität des hergestellten Profiles ist uneinheitlich. Das wird auf eine ungleichmäßige Mischung und wesentliche Temperaturunterschiede in der Schmelze zurück geführt. Zur Vergleichmäßigung und genaueren Kühlung ist eine Ergänzung der Anlage um einen kurzen Planetwalzenextruderabschnitt vorgesehen. Der Planetwalzenextruderabschnitt hat in axialer Richtung eine Länge von 200mm, in anderen Ausführungsbeispielen eine Länge von weniger als 150mm oder von weniger als 100mm. Zur erfindungsgemäßen Ergänzung ist eine Verlängerung der Schnecke 200 vorgesehen. Das geschieht im Ausführungsbeispiel durch Auswechseln der Spitze 203 gegen eine Spitze 201. Die Spitze 201 unterscheidet sich von der Spitze 203 durch einen längeren Schaft 202. Im Ausführungsbeispiel ist der Schaft 202 ein separates Teil, das zunächst in das Ende der Schnecke 200 eingeschraubt wird. Der Schaft 202 ist am äußeren Umfang zugleich als Zentralspindel für nicht dargestellte Planetspindeln und für ein umgebendes, nicht dargestelltes Gehäuse.

Nach der Montage des Schaftes 202 wird das zu dem vorgesehenen Planetwalzenextruderabschnitt gehörige Gehäuse montiert. In den Zwischenraum zwischen dem Schaft 202 und dem umgebenden Gehäuse werden die nicht dargestellten Planetspindeln geschoben. Anschließend wird die neue Spitze 201 auf das Ende des Schaftes 202 geschraubt. Danach kann die oben angesprochene Düse montiert werden.
Die in den angebauten Planetwalzenextruderabschnitt eingetragene Schmelze wird dort vergleichmäßigt und im Ausführungsbeispiel auf eine gewählte Temperatur gekühlt, die bis zu 3 Grad Celsius oder bis zu 2 Grad Celsius oder bis zu 1 Grad Celsius abweichen kann. Diese Temperatur und die Vergleichmäßigung der Mischung sind wichtige Voraussetzung für ein Profil mit einheitlicher Beschaffenheit.

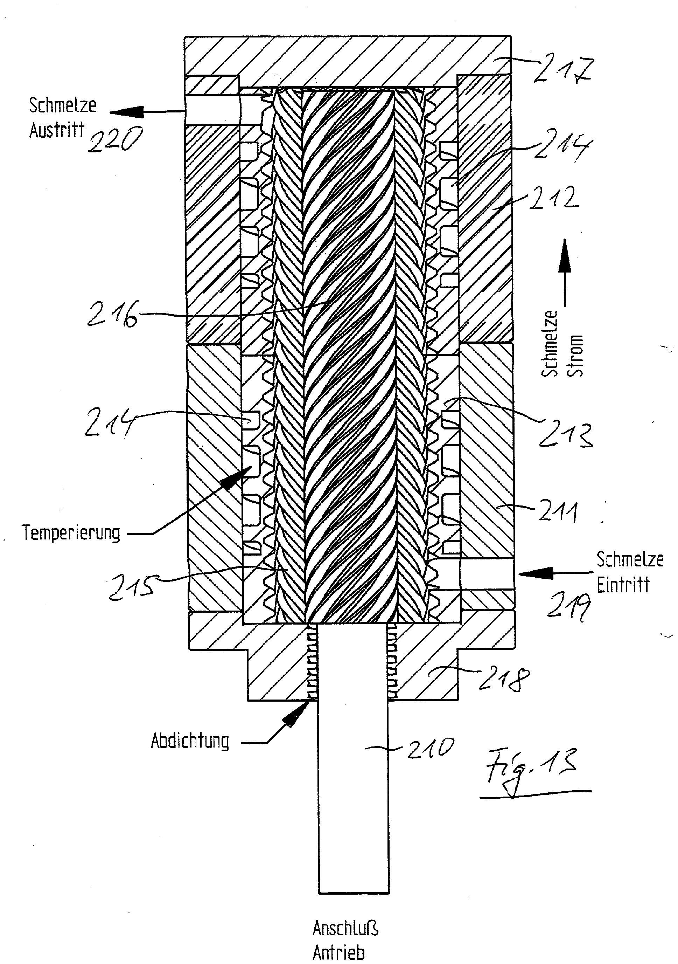

Fig. 13 zeigt einen vertikal angeordneten Sekundärextruder zwischen einem nicht dargestellten horizontal angeordneten Einschneckenextruder und einer nicht dargestellten Düse. Der Einschneckenextruder entspricht dem Extruder nach Fig. 12. Die Düse entspricht der Düse nach Fig. 12. Mit der Extrusionsanlage nach Fig. 13 sollen die gleichen Profile wie nach Fig. 12 hergestellt werden.

Der Sekundärextruder besitzt eine außen verzahnte Zentralspindel 216, außen verzahnte Planetspindeln 215, eine innen verzahnte Buchse 213 und Gehäuse 211 und 212. Die Planetspindeln 215 kämmen sowohl mit der Verzahnung der Zentralspindel 216 als auch mit der Verzahnung der Buchse 213.
Die Buchse 213 ist außen mit Nuten 214 versehen. Die Nuten 214 werden in der Betriebsstellung nach Fig. 13 durch die Gehäuse 211 und 212 verschlossen. Die Gehäuse 211 und 212 sind auf die Buchse 213 aufgeschrumpft. Dazu sind die Gehäuse 211 und 212 erwärmt worden, bis ihre Ausdehnung es erlaubt, die Gehäuse über die Buchse zu schieben. Nach der Abkühlung der Gehäuse 211 und 212 schrumpfen die Gehäuse 211 und 212 und umschließen die Buchse 213 fest. Dadurch bilden die Gehäuse 211 und 212 mit der Buchse 213 eine feste Verbindung.
Die Nuten 214 werden durch die Gehäuse 211 und 212 zu Kanälen geschlossen. Die Kanäle werden im Betriebsfall von einem Kühlmittel durchflossen. Das Kühlmittel ist dazu bestimmt, einen Teil der Wärme von der Schmelze aufzunehmen und aus dem Sekundärextruder herauszutragen. In einem nicht dargestellten Wärmetauscher wird das Kühlmittel rückgekühlt, um erneut dem Sekundärextruder wieder zugeführt zu werden.

Die Schmelzezuführung an dem vertikal angeordneten Sekundärextruder ist mit 219 bezeichnet und befindet sich unten.
Der Schmelzeaustritt aus dem vertikal angeordneten Sekundärextruder ist mit 220 bezeichnet und befindet sich oben.

Der Sekundärextruder ist oben mit einem Deckel 217 verschlossen, unten durch einen Deckel 218. Die Zentralspindel 216 ragt mit einem Schaft 210 durch den Deckel 218. An dem Schaft wird das zur Drehung der Zentralspindel erforderliche Drehmoment auf die Zentralspindel 216 übertragen.

In einem weiteren Ausführungsbeispiel gehört zu dem Sekundärextruder noch eine kurze Schnecke von 100 mm. Die Schnecke ist mit der Zentralspindel des Sekundärextruders einstückig und befindet sich am austrittsseitigen Ende(oben) des Extruders und dient zur Erhöhung des Schmelzedruckes am Austritt des Sekundärextruders auf ein gewünschtes Druckniveau. Der Schmelzeaustritt ist demzufolge auch oben an der Schnecke.
Bei dem Ausführungsbeispiel mit der zusätzlichen Schnecke ist anstelle des Deckels 217 ein topfartiges weiteres Gehäuse vorgesehen, das die Schnecke umfasst und mit dem Gehäuse 212 verschraubt ist.

Wenn in einem weiteren nicht dargestellten Ausführungsbeispiel ein zusätzlicher Extruder an den ursprünglichen Extruder angeflanscht ist, im Ausführungsbeispiel an den Mantel des ursprünglichen Extruders angeflanscht ist, dann kann das als Seitenarmextruder bezeichnet werden. Das schließt auch eine Anordnung oberhalb oder unterhalb des ursprünglichen Extruders, auch eine geneigte Anordnung des Extruders ein, d.h. der Seitenarmextruder ist nicht mehr auf eine seitliche Anflanschung des zusätzlichen Extruders beschränkt. Bei Anflanschung eines Seitenarmextruders ist an der Stelle der Anflanschung eine Öffnung im Mantel des ursprünglichen Extruders vorgesehen. Durch die Öffnung kann Schmelze radial nach außen in den Seitenarmextruder dringen. Diese Schmelze wird im Seitenarmextruder bearbeitet. Der Seitenarmextruder kann allein eine gewünschte zusätzliche Kühlwirkung/Mischwirkung entfalten. Für die zusätzliche Kühlwirkung/Mischwirkung ist die Bauart eines Planetwalzenextruders für den Seitenarmextruder von Vorteil.
Der Seitenarmextruder gibt die bearbeitete Schmelze an die Düse zur Formgebung der Schmelze weiter. Dabei kann die Düse unmittelbar am Austrag des Seitenarmextruders sitzen oder durch eine Schmelzeleitung mit dem Seitenarmextruder verbunden sein.

Außerdem kann in einem anderen, nicht dargestellten Ausführungsbeispiel ein zusätzlicher Kurzextruder am Seitenarmextruder wie in dem zuvor erläuterten Ausführungsbeispiel zur Erhöhung des Druckes von Vorteil sein.

Der Seitenarmextruder kann wie an anderer Stelle an Extrudern erläutert, in anderen Ausführungsbeispielen aus verschiedenen Modulen zusammen gesetzt sein. Der eine Modul ist hier dann vorzugsweise ein Kühlmodul und der andere Modul vorzugsweise ein Druckmodul. Beide Module besitzen ein Gehäuse mit Flanschen an jedem Ende, so daß der Kühlmodul mit einem Flansch mit dem Gehäuse des ursprünglichen Extruders und mit dem anderen Flansch mit dem Gehäuse des Druckmoduls verschraubt oder in sonstiger Weise verbunden werden kann. Der zugehörige Kühlmodul kann eine Planetwalzenextruderbauweise und der zugehörige Druckmodul kann eine Einschneckenextruderbauweise besitzen.

Bei Verwendung eines Seitenarmextruders für eine zusätzliche Kühlung/Mischung und gegebenenfalls für eine Druckerhöhung kann der ursprüngliche Extruder in einem anderen Ausführungsbeispiel am Ende im Ausführungsbeispiel durch einen Deckel verschlossen werden. Der Deckel wird mit dem Flansch des in Extrusionsrichtung letzten Moduls dicht verschraubt. Der Seitenarmextruder ist in Extrusionsrichtung vor dem Deckel an dem Gehäuse des letzten Moduls angeflanscht.

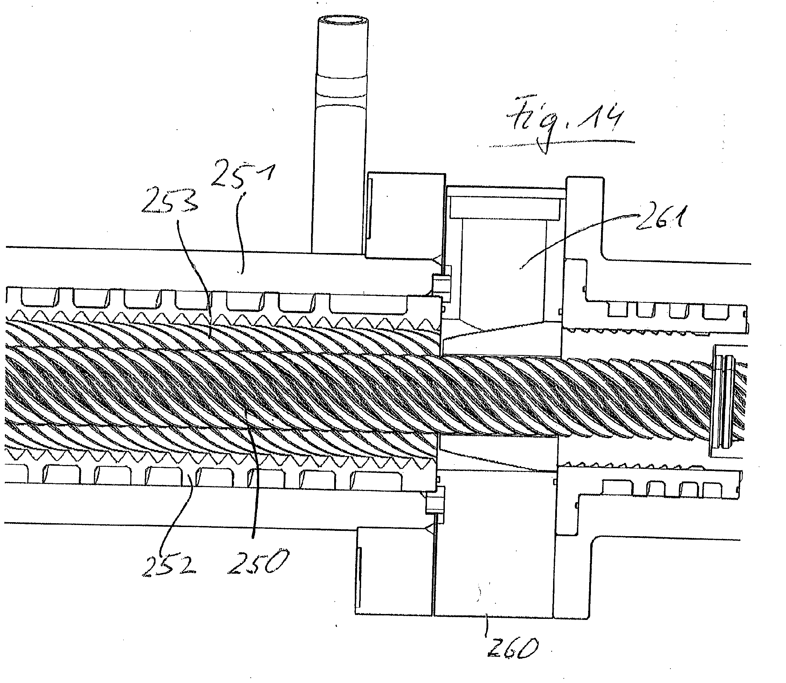

Das Ausführungsbeispiel nach Fig. 14 zeigt wie das Ausführungsbeispiel nach Fig. 13 einen Sekundärextruder in Planetwalzenextruderbauweise mit einer Zentralspindel 250, mit umlaufenden Planetspindel 253, einem umgebenden Gehäuse 251. Das Gehäuse 251 besitzt eine innen verzahnte Buchse.
Der Sekundärextruder ist über eine Schmelzeleitung mit dem Primärextruder verbunden. Die Schmelze wird seitlich in den Sekundärextruder eingetragen, in dem Sekundärextruder gekühlt und gemischt. Die bearbeitete Schmelze wird am gegenüber liegenden Ende des Sekundärextruders seitlich ausgetragen. Der Eintrag und der Austrag erfolgen durch Endstücke 260. Die zum Austragen der Schmelze vorgesehene Öffnung ist mit 261 bezeichnet.
Die Endstücke 260 sitzen scheibenförmig auf den stirnseitigen Enden des Sekundärextruders. Das zum Austragen der Schmelze bestimmte Endstück besitzt eine Durchtrittsöffnung für die Zentralspindel 250 zu deren Kopplung mit einem Antrieb und für die Schmelze.
Das eintrittseitige Endstück besitzt gleichfalls eine Durchtrittsöffnung für die Zentralspindel 250 und für die Schmelze.

## Patentansprüche

1. Nachrüstung an Extruderanlagen zur Steigerung der Extrusionswirkung, insbesondere der Kühlwirkung und/oder Mischwirkung, in einer vorhandenen Extruderanlage zur Aufbereitung von Schmelze, insbesondere mit einer nachgeschalteten formgebenden Düse für strangförmiges Extrusionsmaterial, auch für die Herstellung von Folien,
wobei die vorhandene Extruderanlage aus Abschnitten/Modulen zusammen gesetzt ist,
**dadurch gekennzeichnet, daß**
- die Extruderanlage einen Extruderabschnitt/Modul aufweist und dieser vorhandene Extruderabschnitt/Modul mit einem Verlängerungsabschnitt/Modul in Planetwalzenextruderbauart formschlüssig verbunden wird, wobei ein gemeinsamer Antrieb für den vorhandenen Extruderabschnitt/Modul und den Verlängerungsabschnitt/Modul vorgesehen ist
- die Extruderanlage einen Extruderabschnitt/Modul aufweist und dieser vorhandene Extruderabschnitt/Modul mit einem Verlängerungsabschnitt/Modul in Planetwalzenextruderbauart verbunden wird, wobei der vorhandene Extruderabschnitt/Modul und der Verlängerungsabschnitt/Modul separate Antrieb aufweisen.

2. Nachrüstung nach Anspruch 1,
**dadurch gekennzeichnet, daß** der vorhandene Extruder eine Einschneckenextruderbauweise besitzt, wobei die Einschneckenextruderbauweise durch eine einzige Schnecke und einem umgebenden Gehäuse gebildet wird, die am Umfang mit einem oder mehreren Schneckengängen versehen ist und in einem umgebenden Gehäuse umläuft, und der Verlängerungsabschnitt/Modul eine Zentralspindel, umlaufende Planetspindeln und ein innen verzahntes Gehäuse besitzt,
wobei die Zentralspindel fest mit der einzigen Schnecke verbunden ist.

3. Nachrüstung nach Anspruch 2,
**dadurch gekennzeichnet, daß** die einzige Schnecke der Einschneckenextruderbauweise aus einer Stange besteht, auf der eine Vielzahl von Hülsen sitzen, welche die Verzahnung bilden und daß die Hülsen des Einschneckenextruders zumindest teilweise entfernt werden, soweit deren Funktion auch durch den Verlängerungsabschnitt/Modul erfüllt wird, und durch eine Hülse ersetzt wird, die außen mit der gleichen Verzahnung wie die Zentralspindel versehen ist, so daß die Hülse zumindest teilweise zugleich die Zentralspindel bildet.

4. Nachrüstung nach Anspruch 2 oder 3,
**dadurch gekennzeichnet, daß** die Zentralspindel mit der einzigen Schnecke verschraubt wird.

5. Nachrüstung nach einem der Ansprüche 2 bis 4, **dadurch gekennzeichnet, dass** bei einer vorhandenen Extruderanlage in Einschneckenbauweise mit einer einzigen Schnecke mit einer demontierbaren Spitze die Zentralspindel des Verlängerungsabschnitts/Moduls als Zwischenstück zwischen der Spitze und der einzigen Schnecke montiert wird.

6. Nachrüstung nach einem der Anspüche 2 bis 4, **dadurch gekennzeichnet, daß** die vorhandene Extruderanlage in Einschneckenbauweise eine Spitze aufweist, wobei die Spitze für die Montage des Verlängerungsabschnitts/Moduls demontiert wird und für den Verlängsabschnitt/Modul eine Zentralspindel verwendet wird, die zugleich die Spitze bildet

7. Nachrüstung nach Anspruch 1,
**dadurch gekennzeichnet, daß** der separat angetriebene Verlängerungsabschnitt/Modul einen Eintrag aufweist, der unmittelbar mit dem Austrag des vorhandenen Extruderabschnitt/Modul verbunden wird.

8. Nachrüstung nach Anspruch 7, **dadurch gekennzeichnet,**
**daß** der vorhandene Extruderabschnitt/Modul horizontal angeordnet ist und einen Austrag in axialer Richtung besitzt und daß der Verlängerungsabschnitt/Modul vertikal angeordnet ist und mit seinem Mantel und dem darin vorgesehenen Eintrag an dem Austrag des vorhandenen Extruderabschnitts/Moduls angeflanscht ist.

9. Nachrüstung nach Anspruch 7, **dadurch gekennzeichnet, daß** der vorhandene Extruderabschnitt/Modul horizontal angeordnet ist und einen am Mantel angeordneten Austrag besitzt und dass der Verlängerungsabschnitt/Modul mit einer Stirnfläche und darin angeordnetem Eintrag an dem Mantel des vorhandenen Extruderabschnitt/Modul angeflanscht ist.

10. Nachrüstung nach Anspruch 7, **dadurch gekennzeichnet, daß** der separat angetriebene Verlängerungsabschnitt/Modul mit einem Zwischenstück zwischen den vorhandenen Extruderabschnitt/Modul und dessen Düse greift,
wobei das Zwischenstück an der Seite, die dem vorhandenen Extruderabschnitt/Modul zugewandt ist, einen Eintrag des Verlängerungsabschnitts/Moduls bildet, und
wobei das Zwischenstück an der Seite, die der Düse zugewandt ist, einen Austrag des Verlängsabschnitts/Moduls bildet.

11. Nachrüstung nach einem der Ansprüche 7 bis 10,
**dadurch gekennzeichnet, daß** der separat angetriebene Verlängerungsabschnitts/Moduls unmittelbar an den Eintrag der Düse angeflanscht ist.

12. Nachrüstung nach einem der Ansprüche 1 bis 11,
**gekennzeichnet durch**
einen Füllungsgrad, der vorzugsweise größer 95% des Hohlraumes im Verlängerungsabschnitt/Modul,
noch weiter bevorzugt 98% des Hohlraumes im Verlängerungsabschnitt/Modul ist
